# EUROPEAN PATENT APPLICATION

(11) **EP 4 580 198 A1**
(43) Date of publication of application: **02.07.2025**
(21) Application number: 23902659.4
(22) Date of filing: 11.12.2023
(51) Int. Cl.: H04N 23/12, H04N 25/707

(54) **IMAGE PROCESSING METHOD, HYBRID IMAGE SENSOR, ELECTRONIC DEVICE, AND STORAGE MEDIUM**

(30) Priority: 14.12.2022 CN 202211611490
(71) Applicant: Huawei Technologies Co., Ltd., Shenzhen, Guangdong 518129 (CN)
(72) Inventor: ZENG, Junjie, Shenzhen, Guangdong 518129 (CN); ZHU, Qingrui, Shenzhen, Guangdong 518129 (CN); AO, Huanhuan, Shenzhen, Guangdong 518129 (CN); WANG, Miaofeng, Shenzhen, Guangdong 518129 (CN); ZHANG, Xi, Shenzhen, Guangdong 518129 (CN)
(74) Representative: Epping - Hermann - Fischer
(86) International application number: PCT/CN2023/137965
(87) International publication number: WO 2024/125463

(57) **Abstract**

Embodiments of this application disclose an image processing method, a hybrid image sensor, an electronic device, and a computer-readable storage medium, to introduce an event camera into the electronic device in a form of a hybrid image sensor hybrid image sensor, improve an imaging capability of the electronic device through event data output by the event camera, and improve imaging experience of a user. The electronic device includes a master chip, a first camera, and a second camera. The master chip is separately communicatively connected to the first camera and the second camera. The second camera includes the hybrid image sensor, and the hybrid image sensor includes a target pixel part and an event pixel part. The master chip is configured to: obtain first image data output by the first camera, and obtain second image data and event data that are output by the second camera; and send an image for display and/or store an image based on at least one of the first image data, the second image data, and the event data.

## Description

This application claims priority to Chinese Patent Application No. 202211611490.X, filed with the China National Intellectual Property Administration on December 14, 2022 and entitled "IMAGE PROCESSING METHOD, HYBRID IMAGE SENSOR, ELECTRONIC DEVICE, AND STORAGE MEDIUM", which is incorporated herein by reference in its entirety.

### TECHNICAL FIELD

This application relates to the field of imaging technologies, and in particular, to an image processing method, a hybrid image sensor, an electronic device, and a computer-readable storage medium.

### BACKGROUND

With continuous development of imaging technologies and wide application of electronic devices, more users take pictures and videos by using an imaging system of the electronic devices.

Currently, a camera of the electronic device is usually a conventional camera (for example, an RGB camera). However, the conventional camera has a poor imaging capability in some scenarios (for example, a motion scenario), and consequently, imaging experience of the user is poor.

### SUMMARY

Embodiments of this application provide an image processing method, a hybrid image sensor, an electronic device, and a computer-readable storage medium, to improve an imaging capability of the electronic device and improve imaging experience of a user.

According to a first aspect, an embodiment of this application provides an electronic device, including a master chip, a first camera, and a second camera. The second camera includes a hybrid image sensor, and the hybrid image sensor includes a target pixel part and an event pixel part.

The first camera is configured to output first image data; the second camera is configured to output second image data through the target pixel part, and output event data through the event pixel part; and the master chip is configured to: obtain the first image data, the second image data, and the event data; and send an image for display and/or store an image based on at least one of the first image data, the second image data, and the event data.

It can be learned from the foregoing that, in this embodiment of this application, an event camera is indirectly introduced into the electronic device in a hybrid image sensor (Hybrid sensor) manner, and the event data output by the event camera is added to the electronic device. This improves an imaging capability of the electronic device and improves imaging experience of a user. In addition, compared with directly introducing the event camera into the electronic device, introducing the event camera in a hybrid image sensor (Hybrid sensor) manner has the following advantages: related calculations such as focusing, electronic image stabilization, and optical image stabilization may be performed by using the second image data output by the hybrid image sensor, and then a lens is pushed to move, so that processes such as computational focusing and image stabilization do not need to be additionally performed on the event data, impact on an existing solution is smaller, and the solution is easier to be implemented.

In a possible implementation of the first aspect, the first camera is a front-facing primary camera of the electronic device, and the second camera is a front-facing secondary primary camera of the electronic device; or the first camera is a rear-facing primary camera of the electronic device, and the second camera is a rear-facing secondary primary camera, a wide-angle camera, or a long-focus camera of the electronic device. Further, in this implementation, the primary camera and the hybrid image sensor are used together, so that many limitations of the hybrid image sensor can be overcome or reduced. For example, the hybrid image sensor is used as a secondary primary camera, a wide-angle camera, or a long-focus camera, and is used in combination with the primary camera, so that image imaging quality of the electronic device is not greatly reduced. A resolution requirement of the hybrid image sensor is not high, so that manufacturing costs are lower. A data amount of the event data is small, and may also be implemented under a camera bandwidth constraint of the electronic device. Therefore, implementation difficulty is low.

In a possible implementation of the first aspect, the master chip is specifically configured to: perform binocular registration on the first image data and the second image data to obtain a registration matrix; perform registration on the first image data and the event data based on the registration matrix, to obtain registered first image data and registered event data; and send an image for display and/or store an image based on the registered first image data and the registered event data. In this way, image registration is performed on the first image data and the event data in a two-segment "bridge" registration manner, so that a registration deviation can be smaller.

In a possible implementation of the first aspect, the first camera is the rear-facing primary camera, and the second camera is the wide-angle camera; and if the electronic device works in a primary focal length, the master chip is specifically configured to: perform field of view-based cropping on the second image data based on a field of view of the first image data, to obtain cropped second image data; process the event data by using a preset wide-angle image processing algorithm, to obtain first processed event data; perform field of view-based cropping on the first processed event data based on the field of view of the first image data, to obtain cropped event data; perform binocular registration on the cropped second image data and the first image data, to obtain the registration matrix; and perform registration on the cropped event data and the first image data based on the registration matrix, to obtain the registered first image data and the registered event data.

In a possible implementation of the first aspect, if the electronic device works in a wide-angle focal length, the master chip is further configured to: perform wide-angle distortion correction on the second image data, to obtain corrected second image data; process the event data by using the preset wide-angle image processing algorithm, to obtain second processed event data; and send an image for display and/or store an image based on the second processed event data and the corrected second image data.

In a possible implementation of the first aspect, the first camera is the front-facing primary camera, and the second camera is the front-facing secondary primary camera; and if the electronic device works in a wide-angle focal length, the master chip is specifically configured to: perform wide-angle distortion correction on the first image data, to obtain processed first image data; perform wide-angle distortion correction on the second image data, to obtain processed second image data; process the event data by using a preset wide-angle image processing algorithm, to obtain third processed event data; perform binocular registration on the processed second image data and the processed first image data, to obtain the registration matrix; and perform registration on the third processed event data and the processed first image data based on the registration matrix, to obtain the registered first image data and the registered event data.

In a possible implementation of the first aspect, the master chip is specifically configured to: generate a first stylized video or a first stylized picture based on the registered first image data and the registered event data, and send the first stylized video or the first stylized picture for display. In this implementation, the event data is superimposed on the first image data to form the stylized picture or video, so that more camera playing methods are provided for the user, and image experience of the user is better.

In a possible implementation of the first aspect, the master chip is specifically configured to: generate a second stylized video or a second stylized picture based on the second image data and the event data, and send the second stylized video or the second stylized picture for display; or generate a third stylized video or a third stylized picture based on the event data, and send the third stylized video or the third stylized picture for display. In this implementation, not only the event data may be superimposed on the second image data to form the stylized picture or video, but also the stylized video or picture may be directly formed based on the event data. This provides more camera playing methods for the user, and provides better image experience for the user.

In a possible implementation of the first aspect, the target pixel part includes a target pixel array and a target pixel readout circuit, and the event pixel part includes an event pixel array and an event pixel readout circuit; the target pixel readout circuit is configured to perform an exposure operation and a readout operation on the target pixel array to obtain the second image data; and the event pixel readout circuit is configured to perform a readout operation on the event pixel array to obtain the event data.

In a possible implementation of the first aspect, the hybrid image sensor further includes a pull-up circuit, the target pixel readout circuit includes a frame readout controller, and the event pixel readout circuit includes a timestamping circuit; the frame readout controller is connected to the pull-up circuit by using a hardware connection cable, and the pull-up circuit is connected to the timestamping circuit by using the hardware connection cable; the frame readout controller is configured to output a frame synchronization signal; the pull-up circuit is configured to receive the frame synchronization signal, and output a hard synchronization signal after performing voltage pull-up on the frame synchronization signal; and the timestamping circuit is further configured to: receive the hard synchronization signal, print an additional timestamp under triggering of the hard synchronization signal, and output the additional timestamp.

In this implementation, the frame synchronization signal is derived via the frame readout controller, and is used as a standard moment of hard synchronization. In this way, hard synchronization and alignment of the second image data and the event data are implemented inside the hybrid image sensor, so that an image registration deviation can be further reduced, and stability of a peripheral circuit of the hybrid image sensor can be improved. In addition, a time synchronization effect is better and a time synchronization rate is faster because the target pixel part and the event pixel part use a same sensor clock signal.

In a possible implementation of the first aspect, the event pixel readout circuit is further configured to embed the additional timestamp in a time sequence in an asynchronous event data stream, or embed the additional timestamp in a synchronous event frame data stream; and the event data is the asynchronous event data stream or the synchronous event frame data stream. In this way, the additional timestamp may be transmitted to the master chip through the event data stream, so that the additional timestamp can be transmitted to the master chip in a more timely manner. This reduces a waiting time of the master chip.

In a possible implementation of the first aspect, the master chip is specifically configured to: receive the asynchronous event data stream or the synchronous event frame data stream; and perform time alignment between the event data and the second image data based on the additional timestamp in the asynchronous event data stream or the synchronous event frame data stream.

In a possible implementation of the first aspect, if an exposure manner of the target pixel array is global shutter exposure, and a readout manner of the event pixel array is asynchronous readout, the frame readout controller is specifically configured to: for each frame of second image data, separately output one frame synchronization signal at an exposure start time point and an exposure end time point; or if an exposure manner of the target pixel array is rolling shutter exposure, and a readout manner of the event pixel array is asynchronous readout, the frame readout controller is specifically configured to: for each frame of second image data, output one frame synchronization signal at an exposure end time point of a first row of target pixels.

In a possible implementation of the first aspect, an exposure manner of the target pixel array is global shutter exposure, and a readout manner of the event pixel array is synchronous readout; and the frame readout controller is specifically configured to: for each frame of second image data, separately output one frame synchronization signal at an exposure start time point and an exposure end time point.

In a possible implementation of the first aspect, an exposure manner of the target pixel array is global shutter exposure, and a readout manner of the event pixel array is synchronous readout; the frame readout controller is specifically configured to: for each frame period, separately output one frame synchronization signal at an exposure start time point and an exposure end time point, or output one frame synchronization signal at an exposure start time point, where the frame period is a time period from an exposure start time point of a current frame to an exposure start time point of a next frame; and
the event pixel readout circuit is further configured to: resynchronize a first event frame in the frame period with the hard synchronization signal corresponding to the exposure start time point, and embed the additional timestamp corresponding to the exposure start time point into the first event frame in the frame period.

In a possible implementation of the first aspect, an exposure manner of the target pixel array is rolling shutter exposure, and a readout manner of the event pixel array is synchronous readout; and the frame readout controller is specifically configured to: for each frame of second image data, output one frame synchronization signal at a preset moment, where the preset moment is an exposure end time point of a first row of target pixels or a start readout time point of a first row of target pixels.

In a possible implementation of the first aspect, an exposure manner of the target pixel array is rolling shutter exposure, and a readout manner of the event pixel array is synchronous readout; the frame readout controller is specifically configured to: for each frame period, output one frame synchronization signal at an exposure end time point of a first row of target pixels, where the frame period is a time period from an exposure end time point of a first row of target pixels of a current frame to an exposure end time point of a first row of target pixels of a next frame; and
the event pixel readout circuit is further configured to: resynchronize a first event frame in the frame period with the hard synchronization signal corresponding to the exposure end time point of the first row of target pixels, and embed the additional timestamp corresponding to the exposure end time point of the first row of target pixels into a timestamp of the first event frame in the frame period.

In a possible implementation of the first aspect, if at least two frames of second image data exist in one frame period, the frame readout controller is specifically configured to: for each frame of second image data, separately output one frame synchronization signal at an exposure start time point and an exposure end time point, or separately output one frame synchronization signal at an exposure end time point of a first row of target pixels.

In a possible implementation of the first aspect, the master chip is further configured to: deliver a control signal to the hybrid image sensor, where the control signal includes a first readout parameter and a second readout parameter, the first readout parameter includes an exposure manner and an exposure time period, and the second readout parameter includes an event readout manner; and
the hybrid image sensor is further configured to: receive the control signal, and parse the control signal to obtain the first readout parameter and the second readout parameter; based on the first readout parameter, control the target pixel readout circuit to perform an exposure operation and a readout operation to obtain the second image data, and control the frame readout controller to output the frame synchronization signal; and based on the second readout parameter, control the event pixel readout circuit to perform a readout operation to obtain the event data and the additional timestamp.

In this implementation, the master chip may further control a working process and an output result of the hybrid image sensor by delivering a sensor setting parameter. For example, the sensor setting parameter is delivered, to control the frame readout controller to deliver the frame synchronization signal at a corresponding moment in different exposure manners and different readout manners, so as to implement hard synchronization between the second image data and the event data inside the hybrid image sensor in various cases.

In a possible implementation of the first aspect, the master chip is further configured to: calculate a to-be-delivered sensor setting parameter based on the second image data and the event data, and generate the control signal based on the to-be-delivered sensor setting parameter.

In a possible implementation of the first aspect, if the exposure manner of the target pixel array is rolling shutter exposure, the readout manner of the event pixel array is synchronous readout;
the master chip is further configured to: if a switching operation is detected, generate a switching control signal in response to the switching operation, and deliver the switching control signal to the hybrid image sensor, where the switching operation indicates to switch from a video mode to a photo mode, and the switching control signal includes a sensor setting parameter in the photo mode; and
the hybrid image sensor is further configured to: receive the switching control signal, and parse the switching control signal to obtain the sensor setting parameter in the photo mode; and based on the sensor setting parameter, control the frame readout controller to output one frame synchronization signal at the exposure start time point of the first row of target pixels of each frame of second image data and output one frame synchronization signal at an exposure end time point of a last row of target pixels of each frame of second image data, so as to control the timestamping circuit to: in response to the hard synchronization signal, print one additional timestamp at the exposure start time point of the first row of target pixels, print one additional timestamp at the exposure end time point of the last row of target pixels, and embed the additional timestamps into a next event frame.

In this implementation, an internal hard synchronization manner of the hybrid image sensor varies according to different application modes. For example, in the video mode and the photo mode, when the application mode is switched, a sensor setting parameter may be delivered to control a hard synchronization manner of the hybrid image sensor, so that a hard synchronization effect is better, and user image experience is better.

In a possible implementation of the first aspect, the switching control signal is delivered within an exposure time period of an n^{th} frame of second image data, and takes effect within an exposure time period of an (n+2)^{th} frame of second image data.

According to a second aspect, an embodiment of this application provides a hybrid image sensor, including a target pixel array, a target pixel readout circuit, an event pixel array, an event pixel readout circuit, and a pull-up circuit, where the target pixel readout circuit includes a frame readout controller, and the event pixel readout circuit includes a timestamping circuit; the frame readout controller is connected to the pull-up circuit by using a hardware connection cable, and the pull-up circuit is connected to the timestamping circuit by using the hardware connection cable; the target pixel readout circuit is configured to perform an exposure operation and a readout operation on the target pixel array, to output second image data; the event pixel readout circuit is configured to perform a readout operation on the event pixel array, to output event data; the frame readout controller is configured to output a frame synchronization signal; the pull-up circuit is configured to receive the frame synchronization signal, and output a hard synchronization signal after performing voltage pull-up on the frame synchronization signal; and the timestamping circuit is further configured to: receive the hard synchronization signal, print an additional timestamp under triggering of the hard synchronization signal, and output the additional timestamp.

It can be learned from the foregoing that, in this embodiment of this application, hard synchronization and alignment of the second image data and the event data are implemented inside the hybrid image sensor, so that an image registration deviation can be further reduced, and stability of a peripheral circuit of the hybrid image sensor can be improved. In addition, a time synchronization effect is better and a time synchronization rate is faster because the target pixel part and the event pixel part use a same sensor clock signal.

In a possible implementation of the second aspect, the event pixel readout circuit is further configured to embed the additional timestamp in a time sequence in an asynchronous event data stream, or embed the additional timestamp in a synchronous event frame data stream; and the event data is the asynchronous event data stream or the synchronous event frame data stream. In this way, the additional time may be transmitted to the master chip through the event data stream, so that the additional timestamp can be transmitted to the master chip in a more timely manner. This reduces a waiting time of the master chip.

In a possible implementation of the second aspect, if an exposure manner of the target pixel array is global shutter exposure, and a readout manner of the event pixel array is asynchronous readout, the frame readout controller is specifically configured to: for each frame of second image data, separately output one frame synchronization signal at an exposure start time point and an exposure end time point; or if an exposure manner of the target pixel array is rolling shutter exposure, and a readout manner of the event pixel array is asynchronous readout, the frame readout controller is specifically configured to: for each frame of second image data, output one frame synchronization signal at an exposure end time point of a first row of target pixels.

In a possible implementation of the second aspect, an exposure manner of the target pixel array is global shutter exposure, and a readout manner of the event pixel array is synchronous readout; and the frame readout controller is specifically configured to: for each frame of second image data, separately output one frame synchronization signal at an exposure start time point and an exposure end time point.

In a possible implementation of the second aspect, an exposure manner of the target pixel array is global shutter exposure, and a readout manner of the event pixel array is synchronous readout; the frame readout controller is specifically configured to: for each frame period, separately output one frame synchronization signal at an exposure start time point and an exposure end time point, or output one frame synchronization signal at an exposure start time point, where the frame period is a time period from an exposure start time point of a current frame to an exposure start time point of a next frame; and the event pixel readout circuit is further configured to: resynchronize a first event frame in the frame period with the hard synchronization signal corresponding to the exposure start time point, and embed the additional timestamp corresponding to the exposure start time point into the first event frame in the frame period.

In a possible implementation of the second aspect, an exposure manner of the target pixel array is rolling shutter exposure, and a readout manner of the event pixel array is synchronous readout; and the frame readout controller is specifically configured to: for each frame of second image data, output one frame synchronization signal at an exposure end time point of a first row of target pixels.

In a possible implementation of the second aspect, an exposure manner of the target pixel array is rolling shutter exposure, and a readout manner of the event pixel array is synchronous readout; the frame readout controller is specifically configured to: for each frame period, output one frame synchronization signal at an exposure end time point of a first row of target pixels, where the frame period is a time period from an exposure end time point of a first row of target pixels of a current frame to an exposure end time point of a first row of target pixels of a next frame; and
the event pixel readout circuit is further configured to: resynchronize a first event frame in the frame period with the hard synchronization signal corresponding to the exposure end time point of the first row of target pixels, and embed the additional timestamp corresponding to the exposure end time point of the first row of target pixels into a timestamp of the first event frame in the frame period.

In a possible implementation of the second aspect, if at least two frames of second image data exist in one frame period, the frame readout controller is specifically configured to: for each frame of second image data, separately output one frame synchronization signal at an exposure start time point and an exposure end time point, or separately output one frame synchronization signal at an exposure end time point of a first row of target pixels.

In a possible implementation of the second aspect, the hybrid image sensor is further configured to: receive a control signal from the master chip, and parse the control signal to obtain a first readout parameter and a second readout parameter; based on the first readout parameter, control the target pixel readout circuit to perform an exposure operation and a readout operation to obtain the second image data, and control the frame readout controller to output the frame synchronization signal; and based on the second readout parameter, control the event pixel readout circuit to perform the readout operation to obtain the event data and the additional timestamp, where the first readout parameter includes an exposure manner and an exposure time period, and the second readout parameter includes an event readout manner.

In a possible implementation of the second aspect, an exposure manner of the target pixel array is rolling shutter exposure, and a readout manner of the event pixel array is synchronous readout; and the hybrid image sensor is further configured to: receive a switching control signal from a master chip, where the switching control signal is a signal generated after the master chip detects a switching operation, the switching operation indicates to switch from a video mode to a photo mode, and the switching control signal includes a sensor setting parameter in the photo mode; parse the switching control signal to obtain the sensor setting parameter in the photo mode; and control, based on the sensor setting parameter, the frame readout controller to: output one frame synchronization signal at an exposure start time point of a first row of target pixels of each frame of second image data, and output one frame synchronization signal at an exposure end time point of a last row of target pixels, so as to control the timestamping circuit to: print, in response to the hard synchronization signal, one additional timestamp at the exposure start time point of the first row of target pixels, print one additional timestamp at the exposure end time point of the last row of target pixels, and embed the additional timestamp into a next event frame.

In a possible implementation of the second aspect, the switching control signal is delivered within an exposure time period of an n^{th} frame of second image data, and takes effect within an exposure time period of an (n+2)^{th} frame of second image data.

According to a third aspect, an embodiment of this application provides an image processing method. An electronic device includes a first camera and a second camera, the second camera includes a hybrid image sensor, and the hybrid image sensor includes a target pixel part and an event pixel part. The method includes: obtaining first image data output by the first camera; obtaining second image data output by the second camera through the target pixel part and event data output by the second camera through the event pixel part; performing registration on the first image data and the second image data to obtain a registration matrix; and performing registration on the first image data and the event data based on the registration matrix, to obtain registered first image data and registered event data.

It can be learned from the foregoing that, in this embodiment of this application, image registration is performed on the first image data and the event data in a two-segment "bridge" registration manner, so that a registration deviation can be smaller.

In a possible implementation of the third aspect, the first camera is a front-facing primary camera of the electronic device, and the second camera is a front-facing secondary primary camera of the electronic device; or the first camera is a rear-facing primary camera of the electronic device, and the second camera is a rear-facing secondary primary camera, a wide-angle camera, or a long-focus camera of the electronic device. Further, in this implementation, the primary camera and the hybrid image sensor are used together, so that many limitations of the hybrid image sensor can be overcome or reduced. For example, the hybrid image sensor is used as a secondary primary camera, a wide-angle camera, or a long-focus camera, and is used in combination with the primary camera, so that image imaging quality of the electronic device is not greatly reduced. A resolution requirement of the hybrid image sensor is not high, so that manufacturing costs are lower. A data amount of the event data is small, and may also be implemented under a camera bandwidth constraint of the electronic device. Therefore, implementation difficulty is low.

In a possible implementation of the third aspect, the first camera is the rear-facing primary camera, and the second camera is the wide-angle camera.

If the electronic device works in a primary focal length, the performing registration on the first image data and the second image data to obtain a registration matrix, and the performing registration on the first image data and the event data based on the registration matrix, to obtain registered first image data and registered event data include:
performing field of view-based cropping on the second image data based on a field of view of the first image data, to obtain cropped second image data; processing the event data by using a preset wide-angle image processing algorithm, to obtain first processed event data; performing field of view-based cropping on the first processed event data based on the field of view of the first image data, to obtain cropped event data; performing binocular registration on the cropped second image data and the first image data, to obtain the registration matrix; and performing registration on the cropped event data and the first image data based on the registration matrix, to obtain the registered first image data and the registered event data.

In a possible implementation of the third aspect, the first camera is the front-facing primary camera, and the second camera is the front-facing secondary primary camera.

If the electronic device works in a wide-angle focal length, the performing registration on the first image data and the second image data to obtain a registration matrix, and the performing registration on the first image data and the event data based on the registration matrix, to obtain registered first image data and registered event data include:
performing wide-angle distortion correction on the first image data, to obtain processed first image data; performing wide-angle distortion correction on the second image data, to obtain processed second image data; processing the event data by using a preset wide-angle image processing algorithm, to obtain third processed event data; performing binocular registration on the processed second image data and the processed first image data, to obtain the registration matrix; and performing registration on the third processed event data and the processed first image data based on the registration matrix, to obtain the registered first image data and the registered event data.

In a possible implementation of the third aspect, the method further includes: displaying a first stylized video or a first stylized picture based on the registered first image data and the registered event data.

According to a fourth aspect, an embodiment of this application provides an electronic device, including a memory, a processor, and a computer program that is stored in the memory and that can be run on the processor. When executing the computer program, the processor implements the method according to any possible implementation of the third aspect.

According to a fifth aspect, an embodiment of this application provides a computer-readable storage medium. The computer-readable storage medium stores a computer program. When the computer program is executed by a processor, the method according to any possible implementation of the third aspect is implemented.

According to a sixth aspect, an embodiment of this application provides a chip system. The chip system includes a processor, the processor is coupled to a memory, and the processor executes a computer program stored in the memory, to implement the method according to any possible implementation of the third aspect. The chip system may be a single chip or a chip module including a plurality of chips.

According to a seventh aspect, an embodiment of this application provides a computer program product. When the computer program product runs on an electronic device, the electronic device is enabled to perform the method according to any implementation of the third aspect.

It may be understood that, for beneficial effects of the second aspect to the seventh aspect, reference may be made to related descriptions in the first aspect. Details are not described herein again.

### BRIEF DESCRIPTION OF DRAWINGS

FIG. 1 is a diagram of event pixel readout according to an embodiment of this application;
FIG. 2 is a diagram of an internal framework of a hybrid image sensor according to an embodiment of this application;
FIG. 3A is a diagram of a pixel arrangement according to an embodiment of this application;
FIG. 3B is a diagram of another pixel arrangement according to an embodiment of this application;
FIG. 3C is a diagram of an overall circuit framework of a hybrid image sensor according to an embodiment of this application;
FIG. 4A is a diagram of a pixel arrangement according to an embodiment of this application;
FIG. 4B is a diagram of another overall circuit framework of a hybrid image sensor according to an embodiment of this application;
FIG. 5 is a block diagram of structure of an electronic device 500 according to an embodiment of this application;
FIG. 6A is a diagram of a rear-facing camera module arrangement according to an embodiment of this application;
FIG. 6B is a diagram of another rear-facing camera module arrangement according to an embodiment of this application;
FIG. 6C is a diagram of still another rear-facing camera module arrangement according to an embodiment of this application;
FIG. 6D is a diagram of a front-facing camera module arrangement according to an embodiment of this application;
FIG. 7A is a diagram of an event video mode according to an embodiment of this application;
FIG. 7B is a diagram of a stylized image according to an embodiment of this application;
FIG. 7C is a diagram of a stylized image according to an embodiment of this application;
FIG. 7D is a diagram of a stylized image according to an embodiment of this application;
FIG. 7E is a diagram of a stylized image according to an embodiment of this application;
FIG. 8 is a diagram of a bridge registration manner according to an embodiment of this application;
FIG. 9A is a diagram of a registration process according to an embodiment of this application;
FIG. 9B is a diagram of another registration process according to an embodiment of this application;
FIG. 9C is a diagram of still another registration process according to an embodiment of this application;
FIG. 10A is a diagram of another internal framework of a hybrid image sensor according to an embodiment of this application;
FIG. 10B is a diagram of a readout circuit according to an embodiment of this application;
FIG. 10C is a diagram of another readout circuit according to an embodiment of this application;
FIG. 10D is a diagram of a framework of an imaging system of an electronic device 500 according to an embodiment of this application;
FIG. 11 is a diagram of another framework of an imaging system of an electronic device 500 according to an embodiment of this application;
FIG. 12 is a diagram of a hard synchronization delay in a hybrid image sensor according to an embodiment of this application;
FIG. 13 is a diagram of hard synchronization in a hybrid image sensor according to an embodiment of this application;
FIG. 14 is another diagram of hard synchronization in a hybrid image sensor according to an embodiment of this application;
FIG. 15 is still another diagram of hard synchronization in a hybrid image sensor according to an embodiment of this application;
FIG. 16 is still another diagram of hard synchronization in a hybrid image sensor according to an embodiment of this application;
FIG. 17A is still another diagram of hard synchronization in a hybrid image sensor according to an embodiment of this application;
FIG. 17B is a diagram of time sequence switching according to an embodiment of this application;
FIG. 18 is another block diagram of an electronic device 500 according to an embodiment of this application; and
FIG. 19 is a block diagram of an image processing method according to an embodiment of this application.

### DESCRIPTION OF EMBODIMENTS

In the following description, for illustration instead of limitation, specific details such as a specific system structure and technology are provided, so as to thoroughly understand embodiments of this application.

Generally, an imaging process of a conventional camera may be as follows: In an exposure time period, light is transmitted to a photosensitive element through a lens; the photosensitive element senses an optical signal to generate an electrical signal, and transmits the electrical signal to an image signal processor (image signal processor, ISP); and after converting the electrical signal into image data, the ISP outputs the image data at a fixed frame rate.

In the foregoing imaging process, the conventional camera needs to maintain exposure for a period of time, so that the photosensitive element accumulates a specific quantity of photons. In the exposure time period, if a photographed object moves at a high speed relative to the camera, a motion blur problem occurs. In addition, even if a frame rate of a high-performance conventional camera is very high, there is a millisecond-level high latency. When light is low or brightness is high, information obtained by the conventional camera is limited, resulting in a small dynamic range.

In other words, due to reasons such as an imaging mechanism and a processing mechanism, the conventional camera usually has problems such as motion blur, a high latency (in a millisecond level), and a small dynamic range. Consequently, an imaging capability of an electronic device is low, and image experience of a user is poor. The electronic device includes the conventional camera.

To improve the image experience of the user, an event camera may be introduced into an electronic device, so as to improve an imaging capability of the conventional camera in some scenarios (for example, a motion scenario) by using event data output by the event camera and features such as a large dynamic range, a low latency (in a microsecond level), and no motion blur of the event camera.

The event camera (Event camera) may also be referred to as a dynamic vision sensor (dynamic vision sensor, DVS) or a neuromorphic vision sensor (neuromorphic vision sensor). An imaging mechanism, a data format, and a processing mechanism of the event camera are totally different from those of conventional cameras such as a complementary metal oxide semiconductor (Complementary Metal Oxide Semiconductor, CMOS) RGB camera and a charge coupled device (charge coupled device, CCD) RGB camera.

Different from that of the conventional camera that synchronously captures light intensity information of all pixels at a fixed frequency, each pixel of the event camera asynchronously captures a brightness change of pixels, that is, all pixels of the event camera are independent of each other, do not affect each other, and separately output an event. The event data output by the event camera has a high resolution, can reach a precision of 1 microsecond (µs), and has a low delay. Therefore, the event camera can capture a high-speed moving object. In addition, because there is no concept of an exposure time period, the event camera does not have motion blur. In addition, the event camera can still work normally in a very bright or very dark environment, and has a large dynamic range.

The event camera includes an event pixel array, and each event pixel in the event pixel array may output a corresponding event signal based on a brightness change. Specifically, for each event pixel, when brightness of the event pixel changes and a change amount reaches a specific threshold, an "event" is output. The "event" has three elements: a timestamp, pixel coordinates, and a polarity. The timestamp is used to represent a time at which the brightness of the event pixel changes, the pixel coordinates are used to represent a location of the event pixel, and the polarity is used to represent whether the brightness of the event pixel increases or decreases. In other words, the "event" may represent "specific time, a specific event pixel, and whether the brightness increases or decreases".

The "event" can be classified into a positive polarity (polarity) event or a negative polarity event based on whether the brightness of the event pixel increases or decreases. When brightness of an event pixel increases and a brightness increase value reaches a first threshold, a positive event signal is output, that is, a positive polarity event is output. When brightness of an event pixel decreases and a brightness decrease value reaches a second threshold, a negative event signal is output, that is, a negative polarity event is output. The first threshold and the second threshold may be set according to actual requirements.

An event data stream may be obtained by reading out an "event" of each event pixel of the event camera. A readout manner of the event camera may be classified into asynchronous readout (asynchronous readout) and synchronous readout (synchronous readout).

In the asynchronous readout manner, when a brightness value of an event pixel changes and a change value exceeds a specified threshold, an event signal is output, then address information and timestamp information are printed on the event signal, and an event data packet is output, to obtain an asynchronous event data stream.

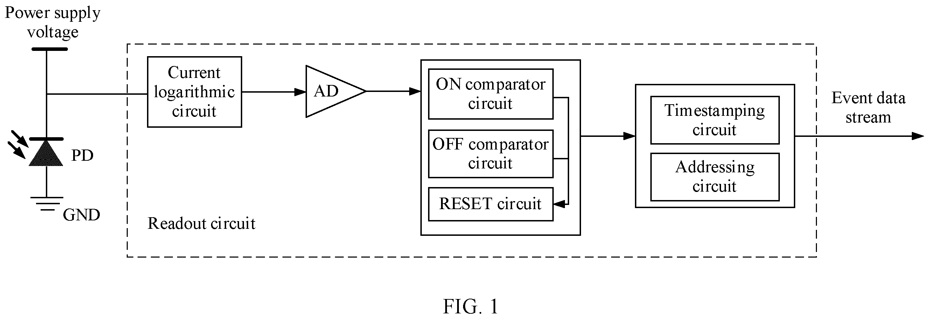

For example, refer to a diagram of event readout shown in FIG. 1. FIG. 1 shows only one event pixel. For example, a photosensitive element of the event pixel is a photodiode (photodiode, PD). A readout circuit of the event pixel includes but is not limited to: logic units such as a current logarithmic circuit, AD, an ON comparator circuit, an OFF comparator circuit, a RESET circuit, a timestamping circuit, and an addressing circuit.

After light is transmitted to the PD through a lens, the PD senses a light signal to output a photocurrent. Log conversion is performed on the photocurrent to obtain a log voltage. After the log voltage is amplified by the AD, an amplified voltage value is separately input to the ON comparator circuit and the OFF comparator circuit. The amplified voltage value is separately compared with a specified threshold of the ON comparator circuit and a specified threshold of the OFF comparator circuit. When the amplified voltage value reaches the specified threshold of the ON comparator circuit, it is considered that brightness of the PD increases, and when a brightness increase value reaches the first threshold, a positive event signal is output. When the amplified voltage value reaches the specified threshold of the OFF comparator circuit, it is considered that brightness of the PD decreases, and when a brightness decrease value reaches the second threshold, a negative event signal is output.

The ON comparator circuit (or referred to as a positive polarity comparator circuit) and the OFF comparator circuit (or referred to as a negative polarity comparator circuit) are independent of each other. If the event pixel triggers a positive polarity event or a negative polarity event, the RESET circuit is triggered to reset a related capacitor on the event pixel.

After the positive event signal or the negative event signal is output, the timestamping circuit prints timestamp (timestamp) information on the positive event signal or the negative event signal, the addressing circuit also prints address information on the positive event signal or the negative event signal, that is, prints x and y coordinates of the event signal, and finally, a four-dimensional event data packet of (x, y, p, t) is output.

In the four-dimensional event data packet, x and y represent a horizontal coordinate and a vertical coordinate of an event pixel, respectively; p represents a polarity value of the event pixel, that is, whether brightness of the event pixel increases or decreases; and t represents a timestamp, that is, a time at which the brightness of the event pixel changes.

It may be understood that each event pixel of the event camera may output a four-dimensional event data packet by using the readout circuit shown in FIG. 1 and a corresponding readout process, and four-dimensional event data packets of a plurality of event pixels may form an asynchronous event data stream. An event camera that uses an asynchronous readout manner may be referred to as an asynchronous event camera.

In the synchronous readout manner, when a brightness value of an event pixel changes and a change value exceeds a specified threshold, an event signal is output, then timestamp information is printed on the event signal, and event data is read out in a form of an event frame, to obtain a synchronous event frame data stream. A frame rate of the event frame is high, which can reach 10,000 frames per second or higher. Each event frame may share one or more timestamps.

Different from the asynchronous readout manner, the synchronous readout manner is used to read out event data in the form of the event frame. When each event frame is read out, if a brightness change value of an event pixel reaches a specified threshold of the ON comparator circuit, a value of the pixel in the event frame is +1. If a brightness change value of a pixel reaches a specified threshold of the OFF comparator circuit, a value of the pixel in the event frame is -1. If a brightness change value of a pixel does not reach the specified threshold of the ON comparator circuit and does not reach the specified threshold of the OFF comparator circuit, a value of the pixel in the event frame is 0. Therefore, a value of each event pixel in the synchronous readout event frame is +1, -1, or 0.

Similar to that in the asynchronous readout manner, in the synchronous readout manner, after a photosensitive element of each event pixel senses an optical signal to generate an electrical signal, the electrical signal is amplified by the AD, to obtain an amplified voltage value. The amplified voltage value is then transferred to the ON comparator circuit and the OFF comparator circuit, and a value of the pixel is correspondingly output based on a comparison result between the amplified voltage value and the specified thresholds. However, because the entire event frame is read out, no address needs to be printed on each valid event signal. In this case, the readout circuit of the event pixel may not include the addressing circuit. In other words, the addressing circuit in FIG. 1 is optional. If the readout manner is asynchronous readout, the addressing circuit needs to print address information on each event signal. If the readout manner is synchronous readout, the addressing circuit does not need to print address information on each event signal.

To improve an imaging capability of the electronic device in some scenarios by using features such as no motion blur and a low latency of the event camera, the event camera may be directly introduced into the electronic device. In this case, the electronic device may include the event camera and a conventional camera.

However, in a research process, an inventor finds that if the event camera is directly introduced into the electronic device, calculation processes such as focusing and image stabilization need to be performed on the event data output by the event camera. Consequently, impact on the existing solution is large, and implementation difficulty is high.

Based on this, to better introduce the event camera into the electronic device, to reduce impact on the existing solution, in embodiments of this application, the event camera is indirectly introduced into the electronic device by using a hybrid image sensor (Hybrid sensor).

The hybrid image sensor is an image sensor that combines an event pixel and a target pixel. The event data is output by using the event pixel in the hybrid image sensor. This improves an imaging capability of the conventional camera in a motion scenario, so that the event camera is indirectly introduced into the electronic device.

The hybrid image sensor includes an event pixel array and a target pixel array. The event pixel array may output event data, and the target pixel array may output second image data. The target pixel may be but is not limited to an RGB pixel, an RYB pixel, a black-and-white pixel, an infrared (Infrared Radiation, IR) pixel, or a near infrared (Near Infrared Radiation, NIR) pixel. A type of the target pixel is not limited herein.

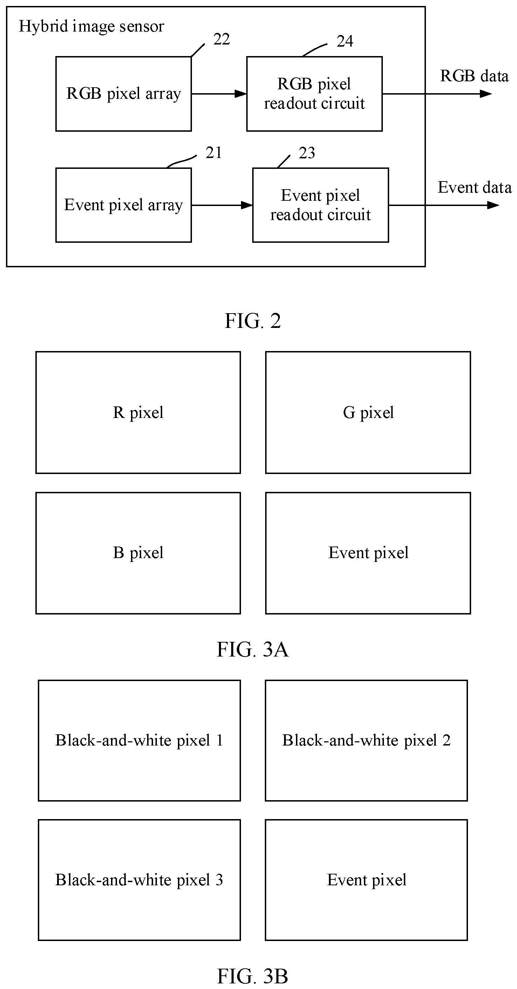

For example, the target pixel is the RGB pixel. FIG. 2 is a diagram of an internal framework of a hybrid image sensor according to an embodiment of this application. The hybrid image sensor may include but is not limited to an event pixel array 21, an RGB pixel array 22, an event pixel readout circuit 23, and an RGB pixel readout circuit 24.

The event pixel array 21 includes at least one event pixel, and the RGB pixel array 22 includes at least one RGB pixel. The event pixel readout circuit 23 is configured to read out a current obtained through light sensing of the event pixel, to output event data. The event readout manner may be asynchronous readout or synchronous readout. The RGB pixel readout circuit 24 is configured to read out a current obtained through light sensing of the RGB pixel, to output RGB data.

The RGB pixel array 22 may be, for example, but is not limited to, a Bayer pattern (Bayer pattern) or a quad pattern. A design of the RGB pixel part may be approximately the same as or different from that of the RGB image sensor.

An event pixel is added to the RGB pixel array 22. A manner of adding the event (Event) pixel to the RGB pixel array 22 may include but is not limited to spatial mixing and customizing a special pixel.

Spatial mixing means that some RGB pixels are removed from the RGB pixel array 22 and replaced with event pixels.

For example, FIG. 3A is a diagram of a pixel arrangement. The pixel arrangement includes an R pixel, a G pixel, a B pixel, and an event pixel.

In a conventional RGB pixel array, the event pixel in FIG. 3A is a G pixel. A G pixel in a conventional RGGB pixel arrangement is replaced with an event pixel, to fuse the event pixel and the RGB pixel in one image sensor.

It should be noted that, in FIG. 3A, a visible light band filter is added in front of the RGB pixel, no visible light band filter is added in front of the event pixel, and an infrared band filter may be added on both the RGB pixel and the event pixel. A red light filter is added in front of the R pixel, a green light filter is added in front of the G pixel, and a blue light filter is added in front of the B pixel.

Some RGB pixels in the RGB pixel array 22 are replaced with event pixels. Although the event pixel may be embedded in the RGB pixel array 22, a quantity of RGB pixels is reduced. However, a decrease in a quantity of RGB pixels reduces RGB imaging quality. Generally, RGB imaging quality is directly proportional to a quantity of RGB pixels. Therefore, a higher proportion of the quantity of RGB pixels in the hybrid image sensor indicates higher RGB imaging quality, and on the contrary, a lower proportion of the quantity of RGB pixels indicates lower RGB imaging quality.

When the hybrid image sensor is implemented in the spatial mixing manner, to avoid greatly reducing RGB imaging quality, a quantity of event pixels may be much smaller than a quantity of RGB pixels. In this way, the hybrid image sensor can output RGB data with a high resolution and event data with a low resolution. For example, a ratio of a quantity of RGB pixels to a quantity of event pixels in the hybrid image sensor is 8:1.

Certainly, if the RGB data output by the hybrid image sensor is not used for direct imaging or event data with high resolution is required, a quantity of event pixels in the hybrid image sensor may be appropriately increased, and a quantity of RGB pixels may be reduced. In other words, the quantity of event pixels and the quantity of RGB pixels in the hybrid image sensor may be set as required. This is not limited herein.

In some embodiments of this application, the hybrid image sensor may be used as a secondary primary camera, and is used together with a primary camera. The RGB data of the secondary primary camera is not directly used for imaging, and is only used in an image registration process. In this case, a requirement on resolution and imaging quality of the RGB data output by the hybrid image sensor is not high. Therefore, the quantity of event pixels in the hybrid image sensor may be appropriately increased, or even the RGB pixels in the hybrid image sensor may be replaced with black-and-white pixels.

After the RGB pixels in the hybrid image sensor are replaced with the black-and-white pixels, the hybrid image sensor includes the black-and-white pixels and the event pixels. For example, FIG. 3B is a diagram of another pixel arrangement. The pixel arrangement includes a black-and-white pixel 1, a black-and-white pixel 2, a black-and-white pixel 3, and an event pixel. In FIG. 3B, there may be no visible light band filter in front of the black-and-white pixel, but an infrared band filter may be disposed on both the black-and-white pixel and the event pixel.

In a process of replacing the RGB pixel or the black-and-white pixel with the event pixel, in addition to setting a quantity of RGB pixels (or black-and-white pixels) and a quantity of event pixels as required, a sensor area of the event pixel and a sensor area of the RGB pixel (or the black-and-white pixel) may be further set as required. For example, a sensor area of one event pixel may be the same as a sensor area of one RGB pixel (or one black-and-white pixel), or may be several times a sensor area of one RGB pixel (or one black-and-white pixel).

FIG. 3A and FIG. 3B are merely examples of a pixel arrangement. During specific application, some RGB pixels or black-and-white pixels in the image sensor may be periodically replaced with event pixels based on the pixel arrangement shown in FIG. 3A and FIG. 3B, so that the RGB pixels (or the black-and-white pixels) and the event pixels are fused in one image sensor.

It should be noted that the hybrid image sensor is implemented in the spatial mixing manner, so that the RGB imaging quality is not greatly reduced, and the event pixel is embedded. In addition, the RGB pixels (or black-and-white pixels) and event pixels are naturally aligned, and the hybrid image sensor shares the same lens. Therefore, the RGB data stream and the event data stream that are output by the hybrid image sensor are registered, and no additional registration algorithm is required.

When the hybrid image sensor is implemented in the spatial mixing manner, the event pixel and the RGB pixel (or the black-and-white pixel) each have a corresponding photosensitive element, that is, the event pixel and the RGB pixel (or the black-and-white pixel) do not share one photosensitive element. In this case, for an RGB pixel (or a black-and-white pixel), RGB data may be read out by using the RGB pixel readout circuit 24; and for an event pixel, event data may be read out by using the event pixel readout circuit 23.

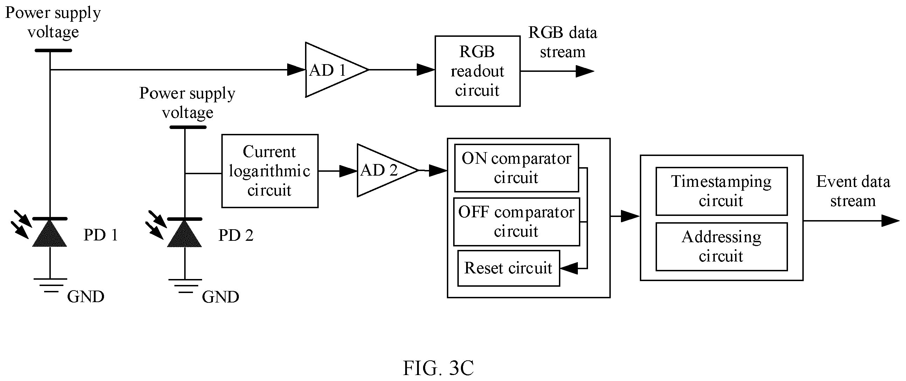

For example, FIG. 3C is a diagram of an overall circuit framework of a hybrid image sensor. FIG. 3C shows only one RGB pixel (or one black-and-white pixel) and one event pixel. For example, the photosensitive element of the RGB pixel (or the black-and-white pixel) is a PD 1. For example, the photosensitive element of the event pixel is a PD 2.

The PD 1 may perform read-out according to a normal RGB CMOS (or black-and-white CMOS) readout circuit. As shown in FIG. 3C, after light is transferred to the PD 1 through the lens, the PD 1 senses light to output a photosensitive current. After the photosensitive current is amplified by the AD 1, an amplified photosensitive current is output to the RGB readout circuit, and then the RGB readout current outputs an RGB data stream based on the photosensitive current.

A principle of the PD 2 readout circuit may be basically the same as that of the event pixel readout circuit of the normal event camera. As shown in FIG. 3C, after light is transmitted to the PD 1 through the lens, the PD 1 senses light to output a photosensitive current. Log conversion is performed on the photosensitive current, to obtain a log voltage. After the log voltage is amplified by the AD 2, an amplified voltage is obtained, and the amplified voltage is separately output to the ON comparator circuit and the OFF comparator circuit. When the amplified voltage is greater than the specified threshold of the ON comparator circuit, it is considered that brightness sensed by the PD 2 increases, and when a brightness increase value reaches a specific threshold, the ON comparator circuit outputs a valid event signal, where the valid event signal represents a +1 event. When the amplified voltage is greater than the specified threshold of the OFF comparator circuit, it is considered that brightness sensed by the PD 2 decreases, and when a brightness decrease value reaches a specific threshold, the OFF comparator circuit outputs a valid event signal, where the valid event signal represents a -1 event. After the ON comparator circuit or the OFF comparator circuit triggers the valid event signal, the reset circuit may be triggered to take effect, a register circuit of the PD 2 is reset, and then exposure is restarted.

The valid event signal triggered by the ON comparator circuit or the OFF comparator circuit is transmitted to the timestamping circuit and the addressing circuit, coordinate information and timestamp information of the event signal are printed, and the event data stream is output.

It may be understood that a manner of reading out the event data may be synchronous readout or asynchronous readout. If the readout manner is asynchronous readout, the addressing circuit is required. If the readout manner is synchronous readout, the addressing circuit is not required.

In FIG. 3C, the event pixel readout circuit may include logic units such as a current logarithmic circuit, the AD 2, the ON comparator circuit, the OFF comparator circuit, a reset circuit, a timestamping circuit, and an addressing circuit. The logic units such as the current logarithmic circuit, the AD 2, the ON comparator circuit, the OFF comparator circuit, and the reset circuit exist in each event pixel, and the timestamping circuit and the addressing circuit are logic units shared by a plurality of event pixels.

It should be noted that the overall circuit framework of the hybrid image sensor shown in FIG. 3C shows only the logic units, and electronic components such as a register circuit and a resistor may further exist between different logic units. In addition, in addition to the logical units shown in FIG. 3C, there may be another logical unit. For example, a column readout control unit and a row readout control unit may be further included, to control exposure and readout operations of event pixel rows and columns.

As described above, the hybrid image sensor may be implemented in the spatial mixing manner, or may be implemented in a manner of customizing a special pixel.

Customizing a special pixel means that a special pixel is set, the special pixel shares one photosensitive element, and two different readout circuits are integrated. One readout circuit is configured to change a current obtained through light sensing of the photosensitive element, to read out a normal RGB pixel value (or a black-and-white pixel value). The other readout circuit converts, by using the event pixel readout circuit, the change of the current obtained through light sensing of the photosensitive element into an event data stream with a microsecond-level time interval.

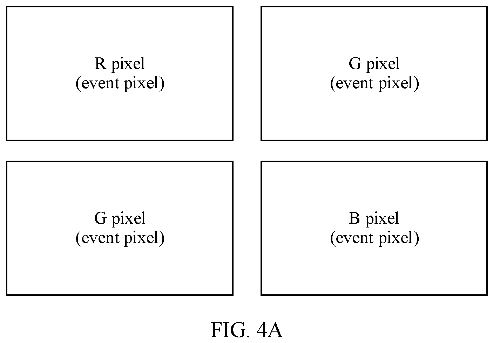

For example, FIG. 4A is a diagram of a pixel arrangement. The pixel arrangement includes an R pixel, a G pixel, a G pixel, and a B pixel, and each RGB pixel may also be used as an event pixel. For example, the R pixel in FIG. 4A is not only used as an R pixel, but also may be used as an event pixel. In this case, one pixel may be used as both an event pixel and an RGB pixel. Therefore, the RGB pixel array 22 and the event pixel array 21 in FIG. 2 may be a same pixel array. In addition, an event pixel readout circuit 23 and an RGB readout circuit 24 are integrated into one pixel, and are respectively configured to read out event data and RGB data.

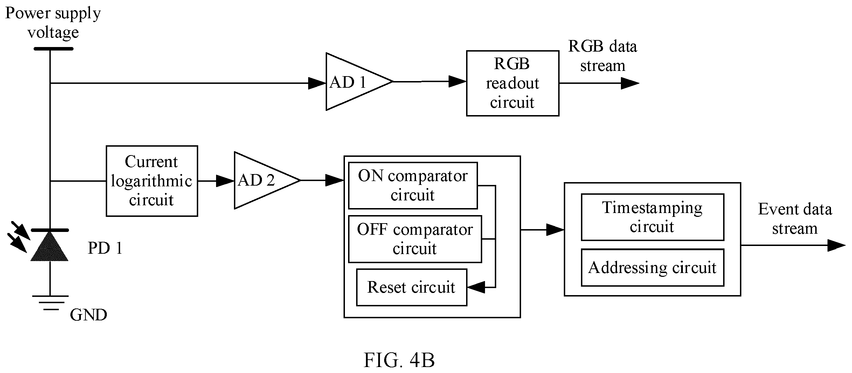

It should be noted that the RGB pixel in FIG. 4A may alternatively be replaced with a black-and-white pixel. In this case, the special pixel is not only used as a black-and-white pixel, but also used as an event pixel. For example, FIG. 4B is a diagram of another overall circuit framework of the hybrid image sensor. Only one pixel is shown in FIG. 4B, and a photosensitive element of the pixel is, for example, a PD 1. The pixel is not only used as an RGB pixel (or a black-and-white pixel), but also used as an event pixel.

As shown in FIG. 4B, a readout circuit of the event pixel is additionally added below the PD 1 of the RGB pixel. The RGB pixel and the event pixel share the PD 1, but readout circuits are different. To be specific, each pixel has two readout circuits. An RGB pixel value is read out from one readout circuit, and a high frame rate event pixel value (a positive/negative polarity value or a zero value) is read out from the other readout circuit. In this case, because there are more readout circuits, 3D stacking may be used on the image sensor, and more electronic components are added.

It may be understood that a visible light filter on each pixel in FIG. 4B is adapted to an RGB pixel. Certainly, if the RGB pixel in FIG. 4B is replaced with a black-and-white pixel, an infrared band light filter may be disposed on each pixel.

As shown in FIG. 4B, after light is transmitted to the PD 1 through the lens, the PD 1 senses the light to obtain a photosensitive current, and the photosensitive current is separately transmitted to an RGB readout circuit and an event pixel readout circuit. The two readout circuits separately perform readout, to output an RGB data stream and an event data stream. The RGB readout circuit and the event pixel readout circuit do not affect each other, and an anti-crosstalk design is also provided.

For the event pixel readout circuit, log conversion is performed on the photosensitive current of the PD 1, to obtain a log voltage, and the log voltage is amplified by the AD 2, to obtain an amplified voltage. The amplified voltage is transmitted to the ON comparator circuit and the OFF comparator circuit, to trigger the ON comparator circuit or the OFF comparator circuit to output an event signal. After the event signal passes through the timestamping circuit and the addressing circuit, address information and timestamp information are printed, and an event data stream is obtained.

For the RGB readout circuit, after the photosensitive current of the PD 1 is amplified by the AD 1, an amplified photosensitive current is transmitted to the RGB readout circuit. Then, the RGB readout circuit outputs an RGB data stream based on the amplified current.

It should be noted that, when the photosensitive element is shared, because a readout frequency of the event pixel is much higher than a readout frequency of the RGB pixel (or the black-and-white pixel), in FIG. 4B, after an ON comparator circuit or an OFF comparator circuit is triggered to output an event signal, the reset circuit is triggered to take effect. However, the reset circuit resets only a capacitor in the event pixel readout circuit, and does not interfere with continuous exposure of the PD 1. This avoids affecting the readout circuit of the RGB pixel (or the black-and-white pixel). For example, an additional register capacitor may be added before a current logarithmic circuit of the event pixel readout circuit, to store, in real time, a photocurrent generated when the PD 1 senses a brightness change in a very short time period, and the reset circuit resets only the register capacitor. In this way, the readout circuit of the RGB pixel (or the black-and-white pixel) is not affected, and in the foregoing very short time period, change may be performed by using a related parameter of the hybrid image sensor that is delivered by an upper layer.

In the manner of customizing the special pixel, the photosensitive element is shared. Therefore, RGB data and event data that are output by the hybrid image sensor are naturally aligned, and no additional registration is required. In addition, an event pixel readout circuit and an RGB pixel readout circuit that are in the hybrid image sensor are independent of each other. Therefore, the event pixel may output a synchronous event frame with a high frame rate in a synchronous readout manner, or may output an asynchronous event data stream in an asynchronous readout manner.

It should be noted that the overall circuit framework of the hybrid image sensor shown in FIG. 4B shows only the logic units, and electronic components such as a register capacitor and a resistor may further exist between different logic units.

Regardless of the spatial mixing manner or the manner of customizing the special pixel, the hybrid image sensor may have two mobile industry processor interfaces (mobile industry processor interface, MIPI) for transmission, to respectively transmit an RGB data stream and an event data stream. The event data stream may further have a necessary compression algorithm before being output by the MIPI.

It should be noted that the foregoing uses the RGB pixel and the black-and-white pixel as an example to describe two pixel mixing manners: spatial mixing and customizing the special pixel, and an overall circuit framework inside the hybrid image sensor. When a target pixel is an RYYB pixel, an IR pixel, or an NIR pixel, spatial mixing, customizing a special pixel, and an overall circuit framework of the RGB pixel are similar to those of the target pixel. For example, when the target pixel is an RYYB pixel, the G pixel in FIG. 3A may be adaptively a Y pixel. For another example, when the target pixel is an IR pixel or an NIR pixel, all RGB pixels in FIG. 3A may be replaced with IR pixels or NIR pixels.

Compared with directly introducing the event camera into the electronic device, indirectly introducing the event camera into the electronic device in a form of a hybrid image sensor has the following advantages: related calculations such as focusing, electronic image stabilization, and optical image stabilization may be performed by using the second image data output by the hybrid image sensor, and then a lens is pushed to move, so that processes such as computational focusing and image stabilization do not need to be performed on the event data, impact on an existing solution is smaller, and the solution is easier to be implemented.

However, in a research process, the inventor further finds that, in a process of introducing the hybrid image sensor into the electronic device, the hybrid image sensor usually cannot be well introduced into the electronic device due to many limitations of the hybrid image sensor.

For example, the target pixel is an RGB pixel. Regardless of an event camera or a hybrid image sensor, an event pixel readout circuit is more complex than an RGB pixel readout circuit. Therefore, an area of a readout circuit of an event pixel is much larger than that of an RGB pixel (or a black-and-white pixel).

Because the area of the readout circuit of the event pixel is larger, if a same quantity of layers are stacked, a placement area of a readout circuit of one event pixel is larger than a placement area of a readout circuit of one RGB pixel. Based on this, if spatially placed side by side in the hybrid image sensor, one event pixel occupies positions of several R pixels, G pixels, or B pixels. This severely affects imaging quality of RGB pixels.

Based on this, if the hybrid image sensor is directly introduced into the electronic device and used as a primary camera of the electronic device, because the placement area of the event pixel is much larger than the placement area of the RGB pixel, imaging quality of RGB data output by the hybrid image sensor is low, and consequently, RGB imaging quality on the electronic device like a mobile phone or a tablet computer is affected.

In addition, when a resolution of the RGB data is the same as a resolution of the event data, regardless of whether the readout manner of the event pixel is synchronous readout or asynchronous readout, a data amount of the event pixel is obviously higher than a data amount of the RGB pixel. Due to a camera bandwidth limitation of the electronic device, an event resolution in the hybrid image sensor cannot be very high. In this way, an event resolution of a hybrid image sensor on an electronic device like a mobile phone or a tablet is far lower than a resolution of an RGB camera. For example, an event resolution of the hybrid image sensor is less than 8M.

However, in embodiments of this application, to better introduce the hybrid image sensor into the electronic device, the primary camera and the hybrid image sensor are used together, to overcome or reduce many limitations of the hybrid image sensor.

In embodiments of this application, in a form of a hybrid image sensor, after the event camera is indirectly introduced into the electronic device like the mobile phone or the tablet computer, the event data generated by the event pixel may be added to the electronic device like the mobile phone or the tablet computer, and the event data can improve an imaging capability of a conventional camera of the electronic device for a motion scenario.

The hybrid image sensor provided in embodiments of this application may be applied to an electronic device. The electronic device may be an intelligent mobile terminal such as a smartphone or a tablet computer, or may be another type of electronic device. This is not limited herein.

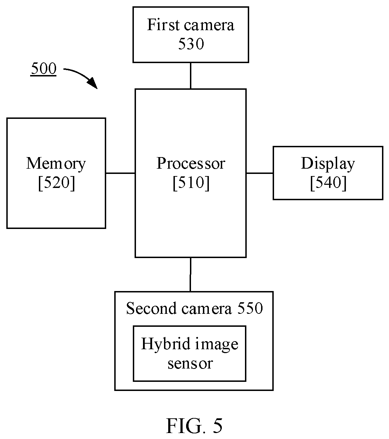

For example, FIG. 5 is a block diagram of a structure of an electronic device 500 according to an embodiment of this application. The electronic device 500 may include a processor 510, a memory 520, a first camera 530, a display 540, and a second camera 550.

It can be understood that the structure shown in this embodiment of this application does not constitute a specific limitation on the electronic device 500. In some other embodiments of this application, the electronic device 500 may include more or fewer components than those shown in the figure, or some components may be combined, or some components may be split, or there may be a different component arrangement. The components shown in the figure may be implemented by hardware, software, or a combination of software and hardware.

For example, when the electronic device 500 is an intelligent mobile terminal like a mobile phone or a tablet computer, the electronic device 500 may further include at least one of the following: a universal serial bus (universal serial bus, USB) interface, a charging management module, a power management module, a battery, an antenna, a mobile communication module, a wireless communication module, an audio module, a speaker, a receiver, a microphone, a headset jack, a sensor module, a button, a motor, an indicator, a user identification module (subscriber identification module, SIM) card interface, and the like. The sensor module may include a pressure sensor, a gyro sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The processor 510 may include one or more processing units. For example, the processor 510 may include an application processor (application processor, AP), a graphics processing unit (graphics processing unit, GPU), an ISP, a controller, a video codec, a digital signal processor (digital signal processor, DSP), and the like. Different processing units may be independent components, or may be integrated into one or more processors. The controller may generate an operation control signal based on an instruction operation code and a time sequence signal, to complete control of instruction reading and instruction execution.

In some embodiments, the processor 510 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a two-way synchronization serial bus, and includes a serial data line (serial data line, SDA) and a serial clock line (serial clock line, SCL). In some embodiments, the processor 510 may include a plurality of groups of I2C buses. The processor 510 may be coupled to the touch sensor through the I2C interface, so that the processor 510 communicates with the touch sensor through the I2C bus interface, to implement a touch function of the electronic device 500.

The MIPI interface may be configured to connect the processor 510 to peripheral components such as the display 540, the first camera 530, and the second camera 550. The MIPI interface includes a camera serial interface (camera serial interface, CSI), a display serial interface (display serial interface, DSI), and the like. In some embodiments, the processor 510 communicates with the first camera 530 and/or the second camera 550 through the CSI interface, to implement a shooting function of the electronic device 500. The processor 510 communicates with the display 540 through the DSI interface, to implement a display function of the electronic device 500.

The GPIO interface may be configured by software. The GPIO interface may be configured as a control signal or a data signal. In some embodiments, the GPIO interface may be configured to connect the processor 510 to the first camera 530, the second camera 550, the display 540, and the like. The GPIO interface may be further configured as an I2C interface, an MIPI interface, or the like.

It may be understood that an interface connection relationship between the modules illustrated in this embodiment of this application is merely an example for description, and does not constitute a limitation on the structure of the electronic device 500. In some other embodiments of this application, the electronic device 500 may alternatively use an interface connection manner different from that in the foregoing embodiment, or use a combination of a plurality of interface connection manners.

The electronic device 500 implements a display function by using the GPU, the display 540, the application processor, and the like. The GPU is a microprocessor for image processing, and is connected to the display 540 and the application processor. The GPU is configured to: perform mathematical and geometric computation, and render an image. The processor 510 may include one or more GPUs that execute program instructions to generate or change display information.

The display 540 is configured to display an image, a video, and the like. The display 540 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 500 may include one or N displays 540, where N is a positive integer greater than 1.

The electronic device 500 may implement a shooting function by using the ISP, the first camera 530, the second camera 550, the video codec, the GPU, the display 540, the application processor, and the like.

The ISP is configured to process data fed back by the first camera 530 or the second camera 550. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the first camera 530 or the second camera 550.

The first camera 530 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

The first camera 530 is usually a conventional camera, for example, an RGB camera. A type of the first camera 530 is not limited herein. The second camera 550 may include but is not limited to a lens and a hybrid image sensor. The lens includes one or more lenses, and the hybrid image sensor includes an event pixel and a target pixel. For related content of the hybrid image sensor, refer to the foregoing corresponding content. Details are not described herein again.

In this embodiment of this application, when the first camera 530 is used as a primary camera of the electronic device 500, the first camera 530 may be used together with the second camera 550. In this case, the second camera 550 may be used as a secondary primary camera, a wide-angle camera, or a long-focus camera of the electronic device 500.

It may be understood that, in addition to the first camera 530 and the second camera 550, the electronic device 500 may further include another camera. For example, the electronic device 500 may further include at least one of the following: an RGB wide-angle camera, an RGB long-focus camera, an auxiliary camera, and the like.

The digital signal processor is configured to process a digital signal, and may process another digital signal in addition to the digital image signal. For example, when the electronic device 500 selects a frequency, the digital signal processor is configured to perform Fourier transform on frequency energy.

The video codec is configured to compress or decompress a digital video. The electronic device 500 may support one or more video codecs. Therefore, the electronic device 500 may play or record videos in a plurality of coding formats, for example, moving picture experts group (moving picture experts group, MPEG)-1, MPEG-2, MPEG-3, and MPEG-4.

The memory 520 may be configured to store computer-executable program code. The executable program code includes instructions. The memory 520 may include a program storage area and a data storage area. The program storage area may store an operating system, an application required by at least one function (for example, a voice playing function or an image playing function), and the like. The data storage area may store data (for example, audio data and a phone book) and the like created when the electronic device 500 is used. In addition, the memory 520 may include a high-speed random access memory, and may further include a non-volatile memory, for example, at least one magnetic disk storage component, a flash memory component, or a universal flash storage (universal flash storage, UFS). The processor 510 runs the instructions stored in the internal memory 520 and/or the instructions stored in the memory disposed in the processor, to perform various function applications of the electronic device 500 and data processing.

As described above, the electronic device 500 may include a plurality of cameras. In this embodiment of this application, the electronic device 500 may include a first camera 530 and a second camera 550. Optionally, the electronic device 500 may further include another camera. The another camera includes but is not limited to at least one of the following: an RGB wide-angle camera, an RGB long-focus camera, and an auxiliary camera. The auxiliary camera may be, for example, a time of flight (Time of flight, ToF) camera.

In specific application, the hybrid image sensor may be used as a primary camera of the electronic device 500, or may be used as a secondary primary camera, a long-focus camera, or a wide-angle camera of the electronic device 500. In addition, the hybrid image sensor may be a front-facing camera or a rear-facing camera.

The following provides an example of a camera module arrangement that may be involved in embodiments of this application.

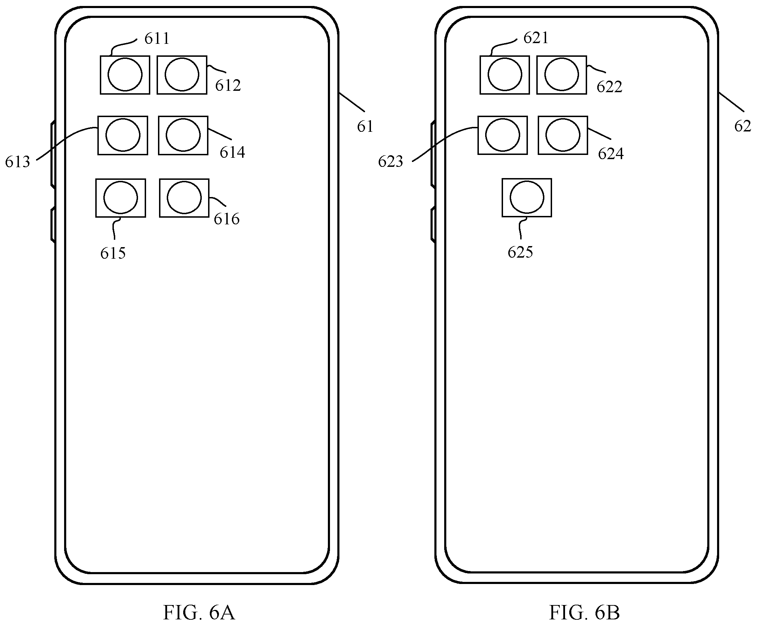

FIG. 6A is a diagram of a rear-facing camera module arrangement. A rear-facing camera module of a mobile phone 61 includes a primary camera 611, a secondary primary camera 612, a wide-angle camera 613, a long-focus camera 614, a long-focus camera 615, and an auxiliary camera 616. The auxiliary camera 616 may be an auxiliary camera of a type, for example, a ToF. The primary camera 611, the wide-angle camera 613, the long-focus camera 614, and the long-focus camera 615 are all RGB cameras.

The secondary primary camera 612 is a camera including a hybrid image sensor, and the camera including the hybrid image sensor includes an event pixel and an RGB pixel (or a black-and-white pixel). In other words, the hybrid image sensor is used as the secondary primary camera in the rear-facing camera module of the mobile phone 61.

The RGB pixel and the event pixel of the secondary primary camera 612 may be significantly lower than a pixel of the primary camera 611. For example, a resolution of the primary camera 611 is greater than 50M, a resolution of the RGB pixel of the secondary primary camera 612 is less than or equal to 12M, and the event pixel may be less than or equal to 3M.

A field of view (Field of view, FOV) of the secondary primary camera 612 may be close to that of the primary camera 611. In addition, the primary camera 611 and the secondary primary camera 612 may share a camera support, and the primary camera 611 has an optical image stabilization (Optical Image Stabilization, OIS) component. In this case, the OIS component is also added to the secondary primary camera, the primary camera 611 is an automatic focus (Automatic Focus, AF) lens, and the secondary primary camera 612 may be an AF lens or a fix focus (Fix Focus, FF) lens. The primary camera 611 has a variable aperture, and the secondary primary camera 612 may have a variable aperture or a fixed aperture.

It should be noted that the foregoing parameters such as the pixel, the FOV, the OIS, the AF, the FF, and the aperture of the primary camera 611 and the secondary primary camera 612 are merely used as an example. In specific application, the parameters of the primary camera 611 and the secondary primary camera 612 may be set based on a requirement.

As shown in FIG. 6A, an additional camera module is added to the rear-facing camera module, the additional camera module is placed in a position of the hybrid image sensor, and the hybrid image sensor is used as a secondary primary camera.

In addition to serving as the additional secondary primary camera, the hybrid image sensor may further replace an RGB wide-angle camera and serve as a wide-angle camera. For example, FIG. 6B is a diagram of another rear-facing camera module arrangement. The rear-facing camera module of the mobile phone 62 may include a primary camera 621, a wide-angle camera 622, a long-focus camera 623, a long-focus camera 624, and an auxiliary camera 625. The primary camera 621, the long-focus camera 623, and the long-focus camera 624 each may be an RGB camera.

The wide-angle camera 622 is a camera including a hybrid image sensor, and the hybrid image sensor includes an event pixel and an RGB pixel (or a black-and-white pixel). In other words, the RGB wide-angle camera is replaced with the hybrid image sensor, and the hybrid image sensor is used as the wide-angle camera in the rear-facing camera module.

It should be noted that parameters such as a pixel, an FOV, an OIS, an AF, an FF, and an aperture of the primary camera 621 and the wide-angle camera 622 may be set based on a requirement. This is not limited herein.

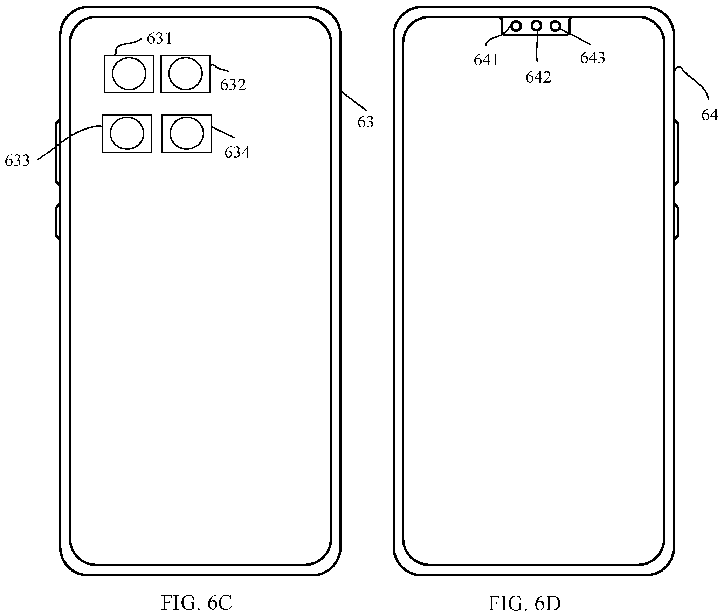

In addition to serving as the rear-facing secondary primary camera and the rear-facing wide-angle camera, the hybrid image sensor may also be used as a rear-facing long-focus camera. For example, FIG. 6C is a diagram of still another rear-facing camera module arrangement. The rear-facing camera module of the mobile phone 63 may include a primary camera 631, a wide-angle camera 632, a long-focus camera 633, and an auxiliary camera 634. Both the primary camera 631 and the wide-angle camera 632 are RGB cameras.

The long-focus camera 633 is a camera including a hybrid image sensor, and the hybrid image sensor includes an event pixel and an RGB pixel (or a black-and-white pixel). In other words, the RGB long-focus camera is replaced with the hybrid image sensor, and the hybrid image sensor is used as the long-focus camera in the rear-facing camera module.

It should be noted that parameters such as a pixel, an FOV, an OIS, an AF, an FF, and an aperture of the primary camera 631 and the long-focus camera 633 may be set based on a requirement. This is not limited herein.

In addition to serving as the rear-facing camera, the hybrid image sensor may be used as a front-facing camera. For example, FIG. 6D is a diagram of a front-facing camera module arrangement. The front-facing camera module of the mobile phone 64 may include a primary camera 641, a secondary primary camera 642, and an auxiliary camera 643. The primary camera 641 is an RGB camera.

The secondary primary camera 642 is a camera including a hybrid image sensor, and the hybrid image sensor includes an event pixel and an RGB pixel (or a black-and-white pixel). In other words, the hybrid image sensor is used as the secondary primary camera in the front-facing camera module.

It should be noted that parameters such as a pixel, an FOV, an OIS, an AF, an FF, and an aperture of the primary camera 641 and the secondary primary camera 642 may be set based on a requirement. This is not limited herein.

In FIG. 6A to FIG. 6D, the electronic device 500 may be specifically the mobile phone in FIG. 6A to FIG. 6D, and the first camera 530 may be specifically the primary camera of the mobile phone, the second camera 550 may be specifically the rear-facing secondary primary camera, the rear-facing wide-angle camera, the rear-facing long-focus camera, or the front-facing secondary primary camera of the mobile phone.

In other words, the hybrid image sensor may be used as the front-facing camera of the electronic device 500, or may be used as the rear-facing camera of the electronic device 500. In addition, the hybrid image sensor may be used as the secondary primary camera, the wide-angle camera, or the long-focus camera of the electronic device 500. Certainly, the hybrid image sensor may alternatively be used as the primary camera of the electronic device 500.

However, compared with that in a manner in which the hybrid image sensor is directly used as the primary camera, in a manner in which the hybrid image sensor is used as the secondary primary camera, the wide-angle camera, or the long-focus camera, and is used together with the primary camera, the electronic device 500 can have better RGB imaging quality, lower costs, and easier implementation.

Specifically, if the hybrid image sensor is directly used as the primary camera, regardless of whether the hybrid image sensor uses a spatial mixing manner or a manner of customizing a special pixel, quality of an RGB image of the hybrid image sensor is greatly degraded, and consequently, RGB imaging quality of the electronic device 500 is poor.

In other words, because an area of an event pixel is larger than an area of an RGB pixel (or a black-and-white pixel), when some RGB pixels are replaced with event pixels in the spatial mixing manner, RGB image quality is greatly degraded. Even if the hybrid image sensor is implemented in the manner of customizing the special pixel, there is large crosstalk, and imaging quality of the RGB pixel and the event pixel is affected.

In addition, manufacturing costs of the hybrid image sensor are high, and more pixels indicate higher costs. However, a resolution requirement of the electronic device 500 is usually high. Therefore, a high-resolution hybrid image sensor is usually required. A high-resolution hybrid image sensor has a large quantity of pixels, and costs are very high.

A larger quantity of event pixels in the hybrid image sensor indicates a larger data amount of the event data output by the hybrid image sensor, and a higher camera bandwidth is required. Therefore, the event pixels of the hybrid image sensor are also limited. Under a camera bandwidth constraint (for example, an MIPI) of the electronic device, the resolution of the event pixel of the hybrid image sensor cannot be extremely high. Therefore, implementation difficulty is high.

However, the hybrid image sensor is used as the secondary primary camera, the wide-angle camera, or the long-focus camera, and is used together with the primary camera. Because RGB data of the hybrid image sensor is not directly used for imaging, even if RGB imaging quality of the hybrid image sensor is poor, RGB imaging quality of the electronic device 500 is not greatly reduced.

In addition, the resolution of the hybrid image sensor used as the secondary primary camera, the wide-angle sensor, or the long-focus sensor does not need to be very high. A low-resolution hybrid image sensor has lower manufacturing costs, and a data volume of event pixels is small. This can also be implemented under the camera bandwidth constraint of an electronic device. Therefore, implementation difficulty is low.

In addition, power consumption can be further reduced because the event camera is introduced into the electronic device 500 in the hybrid image sensor manner. Specifically, power consumption of the event pixel in the hybrid image sensor is lower than power consumption of the RGB pixel. Therefore, power consumption of the hybrid image sensor into which the event pixel is introduced is lower than power consumption of an RGB image sensor with a same resolution. In addition, after the event pixel is added, a video of the high-resolution RGB camera may output an RGB video with a high resolution and a low frame rate, then, the RGB video with the high resolution and the low frame rate is interpolated into a high-frame-rate video (for example, a video with 15 fps is interpolated into a video with 60 fps) by using the low-power event pixel. Compared with that in which a high-resolution RGB image sensor directly outputs a high-frame-rate video (for example, 60 fps), overall power consumption is lower.

In addition to describing an example of a hardware structure of the electronic device 500 and a possible camera module arrangement of the electronic device 500, the following uses the electronic device 500 as an example to describe a process in which the first camera 530 and the second camera 550 are used together.

After the electronic device 500 starts the first camera 530 and the second camera 550, the first camera 530 may output first image data, and the second camera 550 may output second image data and event data. Specifically, the second camera 550 includes an event pixel part and a target pixel part. The event data may be output based on the event pixel part, and the second image data may be output based on the target pixel part.

After obtaining the first image data, the second image data, and the event data, the electronic device 500 may perform corresponding processing on at least one of the first image data, the second image data, and the event data, and then send an image for display and/or store an image.

In some embodiments, the electronic device 500 may use the event data output by the second camera 550, to improve an imaging capability of the first camera for a motion scenario. In this case, the second image data and the event data that are output by the second camera 550 are usually not directly sent for display. For example, the electronic device 500 performs, by using the event data output by the second camera 550, image deblurring (deblur) or video frame interpolation on the first image data output by the first camera 530, to obtain a to-be-displayed image or a to-be-displayed video stream. In addition, the display 540 of the electronic device 500 displays the to-be-displayed or the to-be-displayed video stream.

In some other embodiments, in addition to improving an imaging capability of the first camera 530 for a motion scenario by using the event data output by the second camera 550, more imaging modes may be provided for the user by using the event data and/or the second image data output by the second camera 550, to improve image experience of the user.

In this case, the electronic device 500 may send the data output by the second camera 550 for display. Specifically, the electronic device 500 may separately send the event data for display, or may separately send the second image data for display, or may superimpose the event data and the first image data for display or superimpose the event data and the second image data for display.

In some embodiments of this application, the electronic device 500 may add an "Event video" shooting mode. After the mode is entered, the electronic device 500 may display a stylized picture or a stylized video based on the second image data and/or the event data that are/is output by the second camera 550. This provides more playability for the user and improves user experience.

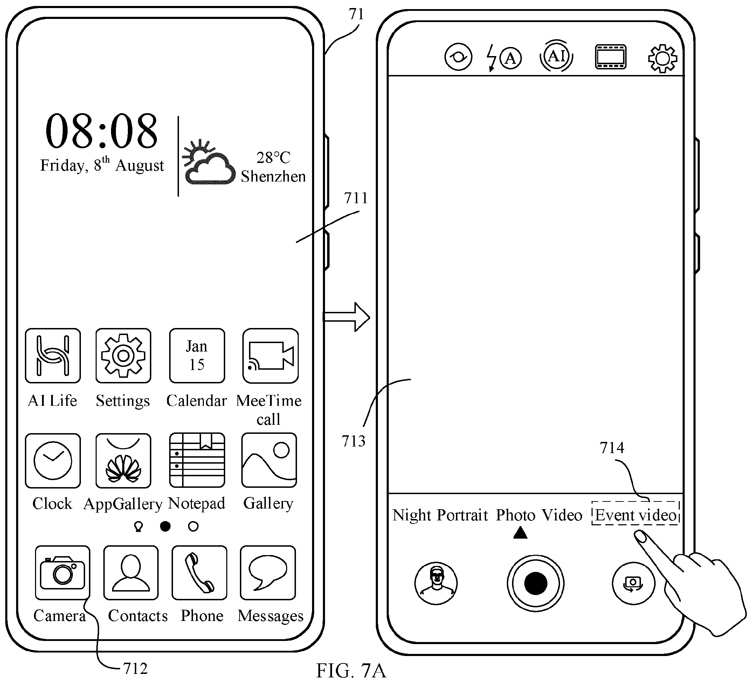

For example, refer to a diagram of the event video mode shown in FIG. 7A. A home screen 711 of the mobile phone 71 includes applications such as AI Life, Settings, Calendar, Clock, and Camera 712. After detecting a tap operation on the camera 712, the mobile phone 71 enters a photo mode in response to the tap operation, and displays a photo interface 713. Control buttons of shooting modes such as night, portrait, video, and event video 714 are displayed on the photo interface 713. After detecting a tap operation on the event video 714, the mobile phone 71 enters the "Event video" mode.

Generally, when starting the camera 712, the electronic device 500 starts the first camera 530 to perform photographing or video recording, and synchronously starts the second camera 550. Certainly, when starting the camera 712, the electronic device 500 starts only the first camera 530, and starts the second camera 550 when detecting the tap operation for the event video 714.

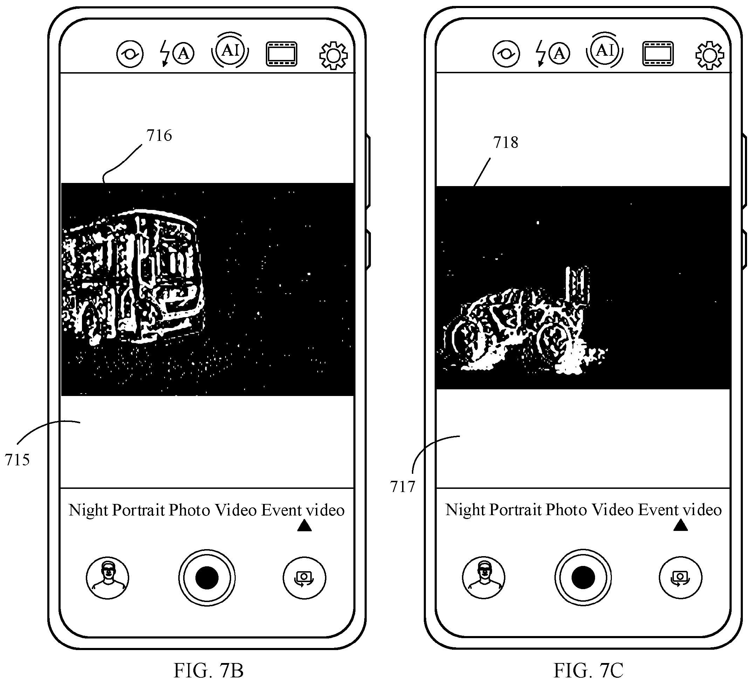

In the "Event video" mode, the mobile phone 71 may perform frame compression on all event data output by the second camera 550 in a fixed time, to obtain a to-be-displayed image, and display the to-be-displayed image. For example, as shown in FIG. 7B, in the "Event video" mode, the mobile phone 71 performs frame compression on original event data in a fixed time to obtain an image 716, and displays the image 716 in an interface 715. In the image 716, white represents a +1 event of an event pixel, black represents a -1 event of the event pixel, and gray represents no event.

In the "Event video" mode, the mobile phone 71 may synthesize some event data output by the second camera 550 in a fixed time period, to obtain a to-be-displayed image, and display the to-be-displayed image. For example, as shown in FIG. 7C, in the "Event video" mode, the mobile phone 71 synthesizes some event data within an RGB exposure time period to obtain an image 718, and displays the image 718 in the interface 717. In the image 718, white represents a +1 event of an event pixel, and black represents a -1 event of the event pixel. In this case, the fixed time is the RGB exposure time period of the first camera 530 or the second camera 550.

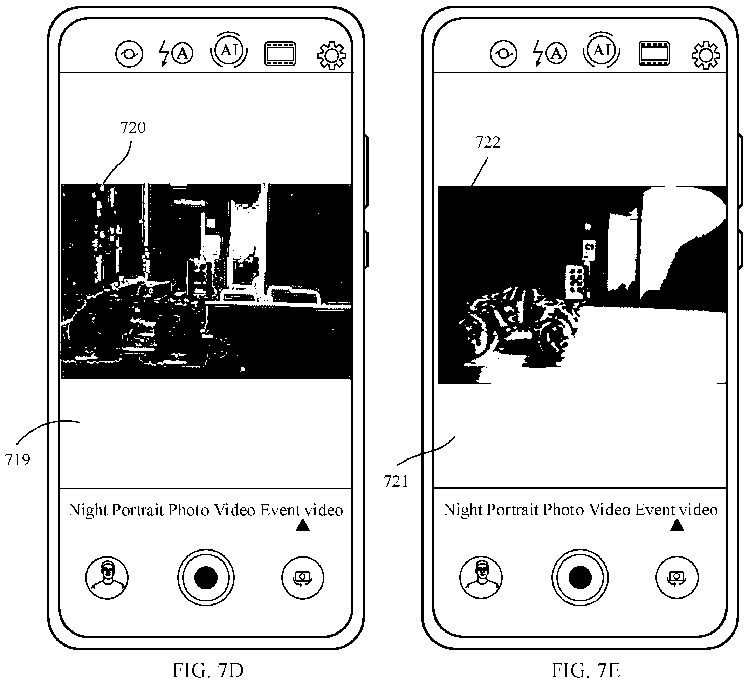

In the "Event video" mode, the mobile phone 71 may alternatively synthesize all event data output by the second camera 550 in the fixed time period, to obtain a synthesized image, superimpose the synthesized image on the RGB image, to obtain a to-be-displayed image, and display the to-be-displayed image. For example, as shown in FIG. 7D, in the "Event video" mode, the mobile phone 71 synthesizes all event data within an RGB complete exposure time period, to obtain a synthesized image, then superimposes the synthesized image on the RGB image, to obtain an image 720, and displays the image 720 in an interface 719. In the image 720, white represents a +1 event of an event pixel, and black represents a -1 event of the event pixel. The RGB image superimposed with the composite image may be output by the first camera 530, or may be output by the second camera 550. In other words, the event data may be superimposed on the RGB image output by the first camera 530, or the event data may be superimposed on the RGB image output by the second camera 550.

In the "Event video" mode, the mobile phone 71 may further superimpose, on an edge image, the event data output by the second camera 550, to obtain a to-be-displayed image, and display the to-be-displayed image. The edge image is generated based on the RGB image. For example, as shown in FIG. 7E, in the "Event video" mode, the mobile phone 71 superimposes the event image data on the edge image to obtain an image 722, and displays the image 722 in the interface 721. In the image 722, red represents a +1 event of an event pixel, blue represents a -1 event of the event pixel, and a black-and-white image represents the edge image generated by the RGB image. In this case, the RGB image may be output by the first camera 530, or may be output by the second camera 550.

As shown in the image 722 in FIG. 7E, a black-and-white edge image generated by the RGB image is used as a background, and is used as an edge of a static object in the image. Event data is represented as blue and red, and is used as a moving object in the image, to form a sketch-like stylized video.

The stylized video may be further made into a cartoon style or a sketch style, and may be specifically shown in the image 718 in FIG. 7C. The stylized video may also be used to predict movement tracks of some moving objects, and may be specifically shown in the image 720 in FIG. 7D. The stylized video may further form a motion smearing effect, which is similar to "stream light", and a color style of a motion region may be further modified, as shown in the image 722 in FIG. 7E.

It should be noted that, in FIG. 7B to FIG. 7E, the mobile phone 71 may obtain a to-be-displayed video stream based on a plurality of consecutive frames of to-be-displayed images, so that the mobile phone 71 can output a stylized video in the "Event video" mode. Certainly, the mobile phone 71 may also set an "Event image" mode, and output a stylized picture in this mode.

In addition, colors of positive and negative polarities of the event data on the video may be customized by the user. For example, a default color of positive and negative polarity events of the event data is red and blue. The user may adjust the default color to black and white or any other two contrast colors with an obvious difference as required. In this way, image experience of the user can be further improved.

After the event camera is introduced into the electronic device 500 in a form of a hybrid image sensor, because an event camera records complete motion of an object, an equivalent frame rate may reach tens of thousands of frames, and the event data includes only an object contour. Therefore, the electronic device 500 may output the event data to the user as a special video, or may superimpose the event data on an image video (for example, an RGB video), to form many stylized videos. For example, a contour map may be extracted in real time from a scene currently seen by the user, to form a video like a comic or a sketch; or continuous motion recorded by the event camera is superimposed on a motion video recorded by the RGB camera, to form a special video with a high frame rate. For another example, the event data can display a motion track of an object, can continuously display the track without a picture jump, and can display a video of a comic or sketch style presented based on real motion. In this way, the user can explore an updated camera play method, and user experience is better.

Generally, when a stylized video or a stylized picture is displayed based on the first image data output by the first camera 530 and the event data output by the second camera 550, the first image data and the event data need to be registered. Similarly, when the stylized video or the stylized picture is displayed based on the second image data and the event data, the second image data and the event data also need to be registered.

The second image data and the event data that are output by the second camera 550 are registered. Therefore, no additional image registration algorithm needs to be added.

However, the first image data output by the first camera 530 and the event data output by the second camera 550 are not registered. Therefore, an additional image registration algorithm usually needs to be added to perform registration on the first image data and the event data. Then, an image is sent for display and/or an image is stored based on the first image data and the event data.

In some embodiments, the electronic device 500 may directly perform registration on the first image data output by the first camera 530 and the event data output by the second camera 550, to obtain registered first image data and registered event data. For example, image registration is performed on the first image data and the event data in an artificial intelligence (Artificial Intelligence, AI) registration manner.

In some other embodiments, the electronic device 500 may alternatively perform registration on the first image data of the first camera and the event data in a two-segment "bridge" registration manner.

The two-segment "bridge" registration manner includes two times of registration. The first registration is registration performed on the first image data output by the first camera 530 and the second image data output by the second camera 550; and the second registration is registration performed on the first image data output by the first camera 530 and the event data output by the second camera 550.

Specifically, the electronic device 500 first performs binocular registration on the first image data and the second image data to obtain a registration matrix H, and then performs registration on the first image data and the event data based on the registration matrix H to obtain registered first image data and registered event data.

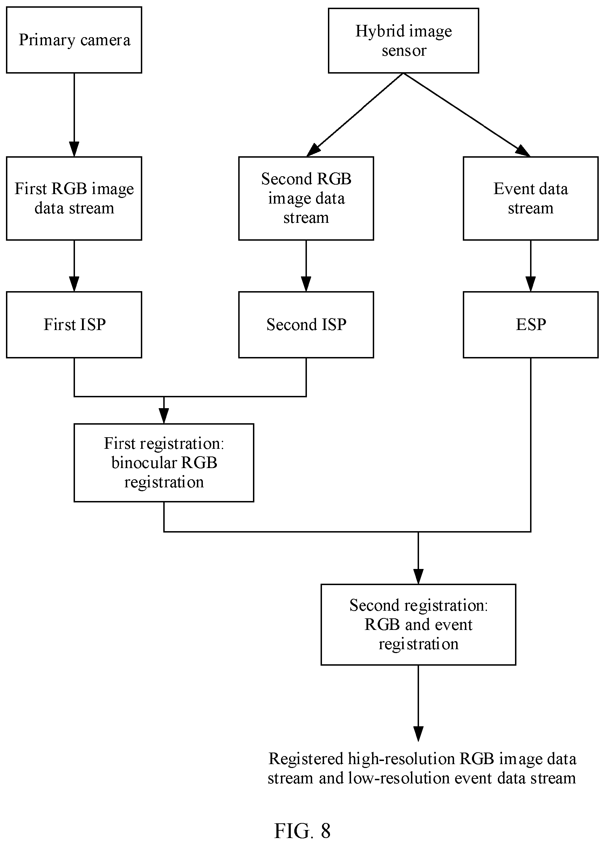

For example, the first camera 530 is used as a primary camera, and the first image data is RGB image data. Refer to a diagram of a bridge registration manner shown in FIG. 8. The primary camera outputs a first RGB image data stream, and the hybrid image sensor of the second camera 550 separately outputs a second RGB image data stream and an event data stream. After the first RGB image data stream is processed by a first ISP and the second RGB image data stream is processed by a second ISP, first registration is performed, that is, binocular RGB registration is performed on the first RGB image data stream processed by the first ISP and the second RGB image data stream processed by the second ISP.

When performing binocular RGB registration, the electronic device 500 may first obtain a preset parameter, and then perform binocular RGB registration based on the preset parameter.

The preset parameter may include but is not limited to the following parameters: intrinsic and extrinsic parameter calibration data and other calibration parameters that are obtained through offline calibration of the primary camera and the hybrid image sensor; data fed back by a gyro sensor or an inertial measurement unit (Inertial Measurement Unit, IMU) in real time; real-time OIS data of the primary camera and the hybrid image sensor; focus motor stroke data of the primary camera and the hybrid image sensor; phase (Phase Detection, PD) focus data of the primary camera and the hybrid image sensor; and current focus depth data obtained by depth components such as a TOF and a laser.

The foregoing other calibration data may be, for example, related calibration parameters such as brightness and noise. After binocular RGB registration, differences between brightness, noise, colors, and the like of images of the primary camera and the hybrid image sensor at a same moment may be within a specific range by using the other calibration data.

The electronic device 500 may include a gyro sensor or an IMU, and displacement and a rotation angle of the electronic device 500 in each axial direction may be calculated by using data fed back by the gyro sensor or the IMU. The electronic device 500 may calculate a picture frame difference between the primary camera and the hybrid image sensor by using the real-time OIS data of the primary camera and the hybrid image sensor; and may determine depth information required for binocular RGB registration by using the focus motor stroke data of the primary camera and the hybrid image sensor, the PD data, and the focus depth data obtained by the depth component like the TOF.

After performing binocular RGB registration on the first RGB image data stream and the second RGB image data stream, the electronic device 500 may obtain a registration matrix H, and then perform second registration by using the registration matrix H. Specifically, after the event data stream is processed by an event signal processor (Event Signal Processing, ESP), the event data stream processed by the ESP and the first RGB image data stream processed by the first ISP are registered based on the registration matrix H.

In the second registration process, the following parameters also need to be used: intrinsic and extrinsic parameter calibration data and other calibration parameters that are obtained through offline calibration of the primary camera and the hybrid image sensor; data fed back by a gyro sensor or an IMU in real-time; real-time OIS data of the primary camera and the hybrid image sensor; focus motor stroke data of the primary camera and the hybrid image sensor; PD data of the primary camera and the hybrid image sensor; and current focus depth data obtained by depth components such as a TOF and a laser.

After the second registration, a registered high-resolution RGB image data stream and a registered low-resolution event data stream may be obtained.

It should be noted that, compared with a direct registration manner, the two-segment "bridge" registration manner has a smaller registration deviation. Direct registration refers to directly perform registration on the first image data stream output by the first camera 530 with the event data stream output by the second camera 550.

As described above, the second camera 550 may be used as the front-facing secondary primary camera, the rear-facing secondary primary camera, the wide-angle camera, or the long-focus camera of the electronic device 500. A two-segment "bridge" registration process may vary with a role played by the second camera 550. For example, when the second camera 550 is used as the wide-angle camera, wide-angle distortion correction further needs to be performed on an image obtained after ISP and ESP processing, to adapt to a wide-angle lens, and then FOV cropping is performed, to ensure that the first camera 530 and the second camera 550 have a same frame.

The following separately describes, by using examples, corresponding two-segment "bridge" registration processes when the second camera 550 is used as the front-facing secondary primary camera, the rear-facing secondary primary camera, the wide-angle camera, and the long-focus camera of the electronic device 500.
1. The first camera 530 is used as the primary camera of the electronic device 500, and the second camera 550 is used as the secondary primary camera of the electronic device 500. The primary camera and the secondary primary camera may be front-facing cameras, or may be rear-facing cameras.

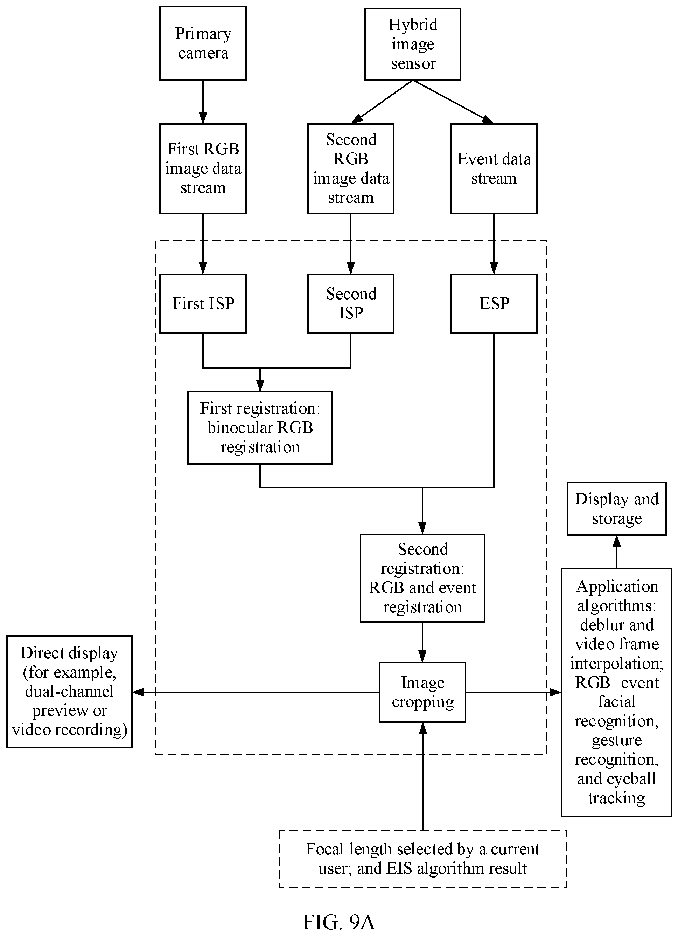

For example, refer to a diagram of a registration process shown in FIG. 9A. Similar to that in FIG. 8, after two-segment "bridge" registration is performed on data output by a primary camera and data output by a hybrid image sensor, a high-resolution RGB image data stream and a low-resolution event data stream are obtained. For a specific process, refer to related content in FIG. 8. Details are not described herein again.

After obtaining the high-resolution RGB image data stream and the low-resolution event data stream, the electronic device 500 may perform operations such as image cropping and image affine transformation (warp) based on a focal length selected by a user, a result of an electronic image stabilization (Electric Image Stabilization, EIS) algorithm, and the like, to obtain to-be-processed image data. The to-be-processed image data may include to-be-processed RGB image data and to-be-processed event data.

The to-be-processed image data may be directly sent for display, that is, the electronic device 500 directly displays the to-be-processed image data in a viewfinder frame. For example, the electronic device 500 uses the to-be-processed RGB image data as one preview video stream, uses the to-be-processed event data as another preview video stream, and simultaneously displays the two preview video streams in one interface, to implement dual-channel preview. For another example, the electronic device 500 may use the to-be-processed RGB image data or the to-be-processed event data as one video recording video stream, or generate one stylized video stream based on the to-be-processed RGB image data and the to-be-processed event data, and display the video recording video stream or the stylized video stream in the video recording viewfinder frame.

The electronic device 500 may form, based on the to-be-processed RGB image data and the to-be-processed event data, the stylized video or the stylized picture shown in FIG. 7B to FIG. 7E; or may transmit the to-be-processed image data to an application algorithm. The application algorithm processes the to-be-processed image data, and then sends the processed image data for display and storage. For example, the application algorithm may include algorithms such as a deblur algorithm, a video frame interpolation algorithm, facial recognition, gesture recognition, and eyeball tracking. In this case, the algorithms such as facial recognition, gesture recognition, and eyeball tracking are implemented based on RGB data and event data.

It should be noted that a processing process in a dashed-line box in FIG. 9A may be hardened on a system-on-a-chip (System-on-a-chip, SOC) of the electronic device 500, to reduce power consumption and a processing delay. A processing process in a dashed-line box may include the following parts in FIG. 9A: a first ISP, a second ISP, an ESP, first registration, second registration, image cropping, and the like.

In FIG. 9A, when the primary camera is the rear-facing primary camera, and the hybrid image sensor is the rear-facing secondary primary camera, the focal length selected by the user may be, for example, 0.8X to 3.5X. In this case, the application algorithm may include a deblur algorithm, a video frame interpolation algorithm, and the like. When the primary camera is the front-facing primary camera, and the hybrid image sensor is the front-facing secondary primary camera, in addition to including the deblur algorithm, the video frame interpolation algorithm, and the like, the application algorithm may further include algorithms such as facial recognition, gesture recognition, and eyeball tracking based on RGB data and event data.

In FIG. 9A, when the primary camera is the front-facing primary camera, and the hybrid image sensor is the front-facing secondary primary camera, if the front-facing primary camera works in a non-wide-angle focal length (for example, 0.8X to 2X), an algorithm for adapting to the wide-angle lens may not be added to the second ISP and the ESP. If the front-facing primary camera works in a wide-angle focal length (for example, 0.6X to 0.8X), and the front-facing primary camera is the wide-angle camera, an algorithm like RGB wide-angle distortion correction may be adaptively added to the first ISP and the second ISP, and algorithms such as event wide-angle distortion correction, lens shading correction (lens shading correction, LSC), and timestamp correction (timestamp correction, TSC) may be added to the ESP, to adapt to the wide-angle lens.

2. The first camera 530 is used as the primary camera of the electronic device 500, and the second camera 550 is used as the wide-angle camera of the electronic device 500.

In this case, when the electronic device 500 works in a primary focal length and a wide-angle focal length, processing processes are correspondingly different.

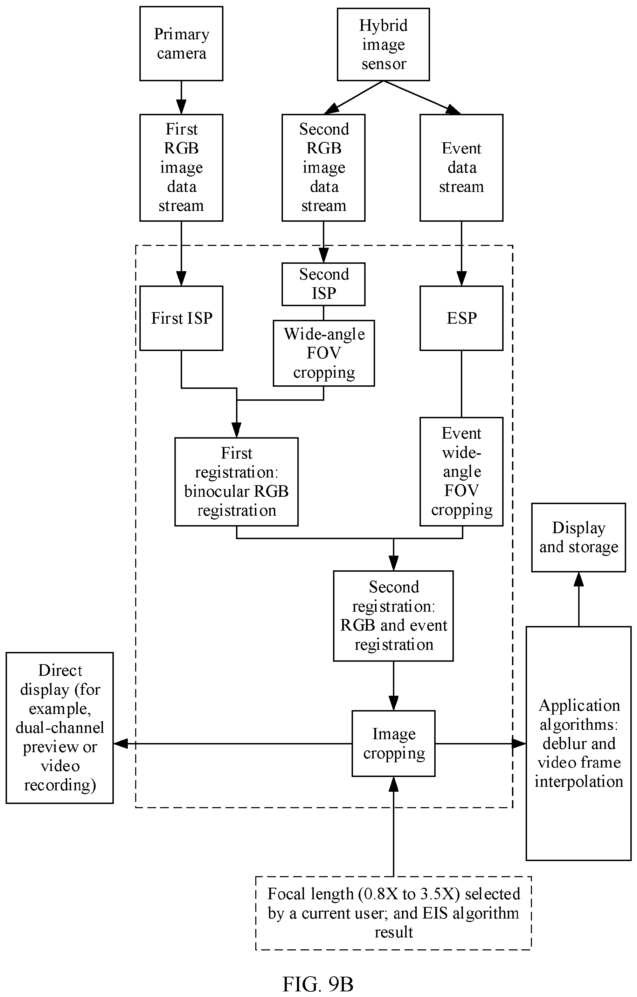

For example, refer to a diagram of another registration process shown in FIG. 9B. After two-segment "bridge" registration is performed on data output by the primary camera and data output by the hybrid image sensor, a high-resolution RGB image data stream and a low-resolution event data stream may be obtained. For a specific process, refer to related content in FIG. 8. Details are not described herein again.

In FIG. 9B, a focal length selected by a user is 0.8X to 3.5X, that is, the focal length works in a primary focal length. In this case, after processing a second RGB image data stream, a second ISP further performs a wide-angle FOV cropping operation to crop redundant picture content in a wide-angle RGB image. In addition, a wide-angle distortion correction algorithm is added to the second ISP to adapt to a wide-angle lens. A wide-angle distortion correction algorithm, an LSC algorithm, and a TSC algorithm for event data are further added to an ESP to adapt to the wide-angle lens. In addition, after processing the event data stream, the ESP further performs event wide-angle FOV cropping, to crop an image that exceeds an FOV of the primary camera. Based on this, a high-resolution RGB image data stream and a low-resolution event data stream that are of a same frame can be obtained through the two-segment "bridge" registration process. A process after the RGB image data stream and the event data stream that are of the same frame are obtained is similar to the process in FIG. 9A. Details are not described herein again.

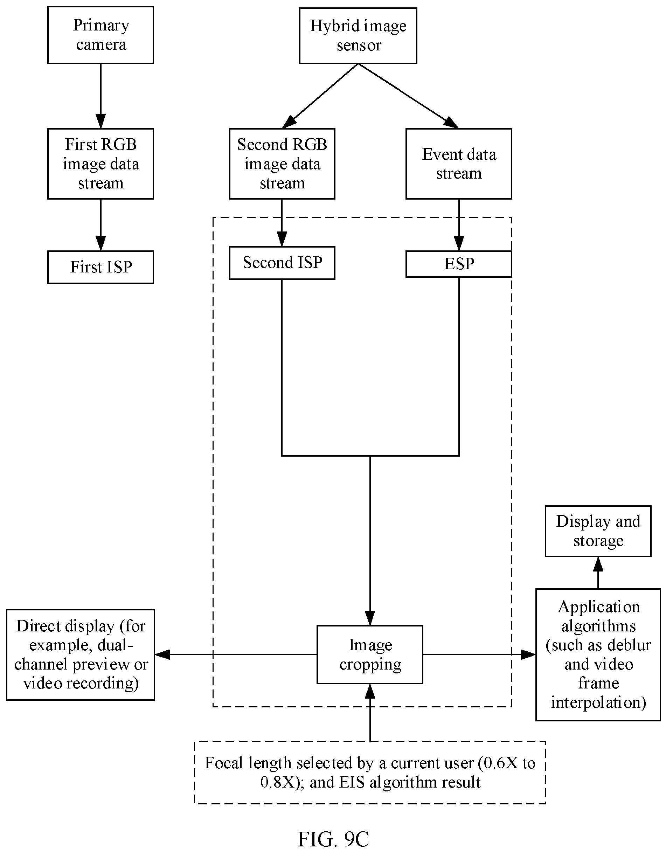

For another example, refer to a diagram of still another registration process shown in FIG. 9C. A focal length selected by the user is 0.6X to 0.8X, that is, works in a wide-angle focal length. In the wide-angle focal length, the electronic device 500 may enable only the hybrid image sensor, process the second RGB image data stream and the event data stream that are output by the hybrid image sensor, and then perform operations such as image stabilization cropping and warping based on the focal length selected by the user and an EIS algorithm result. In this way, the high-resolution RGB image data stream and the event data stream that are registered in the wide-angle focal length are obtained.

In this case, to adapt to the wide-angle lens, an RGB image wide-angle distortion correction algorithm may be added to the second ISP, and algorithms such as wide-angle distortion correction, LSC, and TSC for event data may be added to the ESP. It may be understood that the second RGB image data and the event data stream that are output by the hybrid image sensor are registered. Therefore, image registration does not need to be additionally performed through the two-segment "bridge" registration process.

3. The first camera 530 is used as the primary camera of the electronic device 500, and the second camera 550 is used as the long-focus camera of the electronic device 500.

When the hybrid image sensor is used as the long-focus camera, a process similar to that in FIG. 9B and FIG. 9C may be used, to first perform two-segment "bridge" registration on high-resolution RGB data and low-resolution event data, and then apply the two-segment "bridge" registration to an algorithm. Details are not described herein again.

For example, when work in the primary focal length, similar to that in FIG. 9B, the first RGB image data stream output by the primary camera and the event data output by the hybrid image sensor are registered through the two-segment "bridge" registration process, to obtain a registered high-resolution RGB image data stream and a registered low-resolution event data stream. In addition, because the hybrid image sensor is used as the long-focus camera, a related algorithm adapted to the long-focus lens may be added to the second ISP and the ESP, to perform an operation like FOV cropping on the first RGB image data stream.

Similar to that in FIG. 9C, when the electronic device works in the long-focus focal length, only the hybrid image sensor may be started in the long-focus focal length, and after the second RGB image data stream and the event data stream that are output by the hybrid image sensor are processed, based on the focal length selected by the user and the EIS algorithm result, operations such as image stabilization cropping and warping are performed, to obtain a high-resolution RGB image data stream and an event data stream that are registered in the long-focus focal length. In this case, to adapt to the long-focus lens, a corresponding algorithm may be added to the second ISP and the ESP. The second RGB image data and the event data stream that are output by the hybrid image sensor are registered. Therefore, image registration does not need to be additionally performed through the two-segment "bridge" registration process.

For another example, when working in a low focal length (for example, 3.5 to 10X) of the long-focus focal length, the electronic device 500 may also simultaneously start the first camera 530 and the second camera 550, to obtain the first RGB image data, the second RGB image data, and the event data; crop the first RGB image data based on the long-focus focal length, to obtain cropped first image data; perform binocular RGB registration on the cropped first RGB image data and the second RGB image data, to obtain a registration matrix; then, perform registration on the cropped first RGB image data and the event data based on the registration matrix, to obtain registered event data and registered first RGB image data; and finally, fuse the registered first RGB image data, the registered event data, and the second RGB image data, to obtain fused image data. Color and noise clarity of the fused image data are significantly improved, and no motion blur occurs. In other words, after the event data is fused, deblurring may be performed on the RGB image data. In this embodiment of this application, the two-segment "bridge" registration manner is used, so that not only a registration deviation is reduced, but also a high temporal resolution of the event data and a feature of no motion blur can be introduced into related algorithm applications such as deblur and video frame interpolation. In addition, a problem that the event data is not well registered with the high-resolution RGB data, and it is difficult for a separate event camera to perform autofocus can be resolved. In addition, the hybrid image sensor is used as the front-facing secondary primary camera, and a feature of the event data may be further applied to algorithm applications such as facial recognition, gesture recognition, and eyeball tracking, to improve user experience.

As described above, the electronic device 500 may reduce a registration deviation through two-segment "bridge" registration. However, if time synchronization is not performed between the second image data and the event data that are output by the hybrid image sensor, and time synchronization is not performed between the first camera 530 and the second camera 550, there is still a specific registration deviation for the image data through two-segment "bridge" registration.

To further reduce the registration deviation, in this embodiment of this application, time synchronization may be performed on the second image data and the event data that are output by the hybrid image sensor, and time synchronization may be performed on the first camera 530 and the second camera 550.

The time synchronization manner may be classified into soft synchronization and hard synchronization. In this embodiment of this application, time synchronization may be performed on the second image data and the event data in a hard synchronization manner.

In some embodiments, hard synchronization may be performed on the second image data and the event data outside the hybrid image sensor.

The hybrid image sensor includes a target pixel part and an event pixel part. The target pixel part may include but is not limited to a target pixel array, a target pixel readout circuit, and the like. The event pixel part may include but is not limited to an event pixel array and an event pixel array readout circuit.

Specifically, an interface (for example, a GPIO interface) may be opened in the target pixel part, and then the target pixel part and the event pixel part are connected based on the interface by using an external circuit, to implement hard synchronization between the second image data and the event data. The external circuit is disposed outside the hybrid image sensor.

In this case, the target pixel part and the event pixel part may be considered as two independent image sensors, and the target pixel part and the event pixel part are connected by using an external circuit. This is equivalent to connecting the two independent image sensors in series. In addition, clock signals of the target pixel part and the event pixel part are different. During specific implementation, hard synchronization may be implemented in a primary/secondary synchronization manner, that is, the target pixel part is used as a master (master), and the event pixel part is used as a slave (slave).

In some other embodiments, hard synchronization may alternatively be performed on the second image data and the event data inside the hybrid image sensor. In this case, a frame readout controller inside the hybrid image sensor may provide a frame synchronization signal based on an exposure time period of the target pixel and a readout manner of the event data, and transfer the frame synchronization signal to a timestamping circuit in an event pixel readout circuit by using a hardware connection cable. In this way, the timestamping circuit is triggered to print an additional timestamp. In this case, the frame synchronization signal is used as a standard time for hardware synchronization.

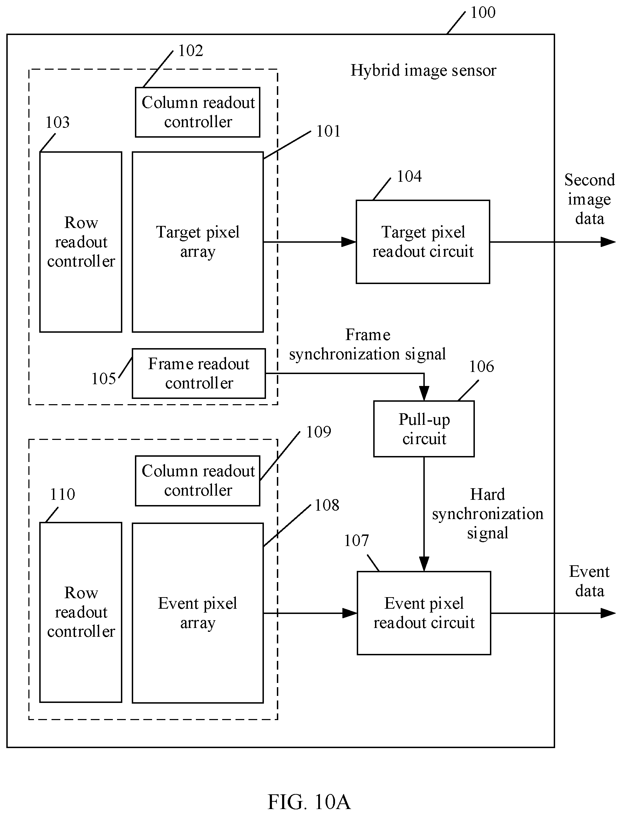

For example, refer to a diagram of another internal framework of the hybrid image sensor shown in FIG. 10A. The hybrid image sensor 100 may include but is not limited to: a target pixel array 101, a column readout controller 102, a row readout controller 103, a target pixel readout circuit 104, a frame readout controller 105, a pull-up circuit 106, an event pixel readout circuit 107, an event pixel array 108, a column readout controller 109, and a row readout controller 110.

The frame readout controller 105 is connected to the pull-up circuit 106 by using a hardware connection cable, and the pull-up circuit 106 is connected to the event pixel readout circuit 107 by using a hardware connection cable.

The frame readout controller 105 outputs a frame synchronization signal based on the exposure time period of the target pixel. The frame synchronization signal is transmitted to the pull-up circuit 106 by using a hardware connection cable. After pulling up a voltage of the frame synchronization signal, the pull-up circuit 106 outputs a hard synchronization signal. The hard synchronization signal is transmitted to a timestamping circuit of the event pixel readout circuit 107 by using a hardware connection cable. The timestamping circuit prints a timestamp under triggering of the hard synchronization signal, and adds a mark as an external trigger (External trigger) timestamp to serve as an additional timestamp. In other words, the timestamping circuit may print an additional timestamp in response to the hard synchronization signal.

Generally, the voltage of the frame synchronization signal provided by the frame readout controller 105 is lower than a valid high electrical level of the hard synchronization signal. Therefore, the pull-up circuit 106 needs to be added in the middle to pull up the voltage of the frame synchronization signal. Certainly, in some cases, if the voltage of the frame synchronization signal is equal to or higher than the valid high electrical level of the hard synchronization signal, the pull-up circuit 106 may not be required to pull up the voltage of the frame synchronization signal.

It should be noted that, in this embodiment of this application, the frame synchronization signal is extracted via the frame readout controller, the frame synchronization signal is used as a standard moment of hardware synchronization, and the frame synchronization signal is transferred to the timestamping circuit of the event pixel by using a hardware connection cable, to trigger the timestamping circuit to print the additional timestamp. In this way, hard synchronization is implemented inside the hybrid image sensor. Compared with implementing hard synchronization outside the hybrid image sensor by using the external circuit, implementing hard synchronization inside the hybrid image sensor in this embodiment of this application can improve stability of a peripheral circuit of the hybrid image sensor. In addition, because the target pixel part and the event pixel part use a same sensor clock signal, a time synchronization effect is better, time synchronization is faster.

It may be understood that the target pixel array 101 includes at least one target pixel. For example, the target pixel is an RGB pixel.

The column readout controller 102 and the row readout controller 103 are configured to implement an exposure operation and a readout operation of the target pixel. For example, the column readout controller 102 and the row readout controller 103 may control, based on an internal clock signal of the sensor and an exposure time period, closing and opening of a column switch and a row switch respectively, to control exposure and readout of each column of pixels and each row of pixels.

The target pixel readout circuit 104 is configured to read out the second image data after the target pixel is light-sensitive. For example, after the column readout controller 102 and the row readout controller 103 control the column switch and the row switch to be closed, the target pixel senses light to obtain a photosensitive current. After the photosensitive current is read out by the target pixel readout circuit 104, the second image data is obtained.

In addition to delivering the frame synchronization signal based on the exposure time period of the target pixel to implement hard synchronization, the frame readout controller 105 may further read out an image frame based on a frame rate of the target pixel and the like.

The event pixel array 108 includes at least one event pixel. The column readout controller 109 and the row readout controller 110 are configured to implement a readout operation of an event pixel. The event pixel readout circuit 107 is configured to read out an event of the event pixel, to obtain an event data stream. For example, the column readout controller 109 is configured to control the column switch to be turned on and turned off, and the row readout controller 110 is configured to control the row switch to be turned on and turned off. When the column switch and the row switch are turned on, the event pixel senses light to obtain a photosensitive current, and the event pixel readout circuit 107 reads out the photosensitive current to obtain the event data stream. A readout manner may be asynchronous readout, or may be synchronous readout. Details are not described herein.

It can be learned from FIG. 3A, FIG. 3B, and FIG. 4A that the hybrid image sensor may be implemented in a spatial mixing manner, or the hybrid image sensor may be implemented in a manner of customizing a special pixel. When the hybrid image sensor is implemented in the manner of customizing the special pixel, one pixel is used as both an event pixel and a target pixel. Therefore, in this case, the target pixel array 101 and the event pixel array 108 may be the same.

It should be noted that the target pixel readout circuit in a broad sense may include the column readout controller 102, the row readout controller 103, the frame readout controller 105, and the target pixel readout circuit 104. Division in FIG. 10A is merely for ease of description. Similarly, the event pixel readout circuit in a broad sense may include a column readout controller 109, a row readout controller 110, and an event pixel readout circuit 107. Division in FIG. 10A is merely for ease of description.

It can be learned from FIG. 3C and FIG. 4B that the event pixel readout circuit 107 may include but is not limited to an ON comparator circuit, an OFF comparator circuit, a reset circuit, a timestamping circuit, an addressing circuit, and the like. When hard synchronization is implemented in the hybrid image sensor, the timestamping circuit prints a timestamp on the event signal, prints an additional timestamp based on the hard synchronization signal, and outputs the additional timestamp.

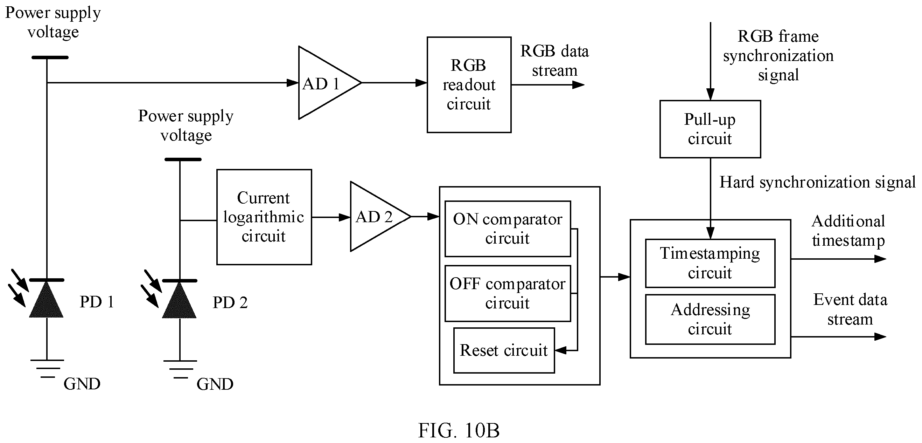

For example, the target pixel is an RGB pixel, and the second image data is RGB data. FIG. 10B is a diagram of a readout circuit. Based on FIG. 3C, an RGB frame synchronization signal provided by the frame readout controller is transmitted to the pull-up circuit by using a hardware connection cable, and the pull-up circuit pulls up a voltage of the RGB frame synchronization signal and outputs a hard synchronization signal. The hard synchronization signal is then transmitted to the timestamping circuit by using a hardware connection cable. The timestamping circuit prints additional timestamp information and outputs the additional timestamp when triggered by a hard synchronization signal. In this case, not only the event data stream is output, but also the additional timestamp is output.

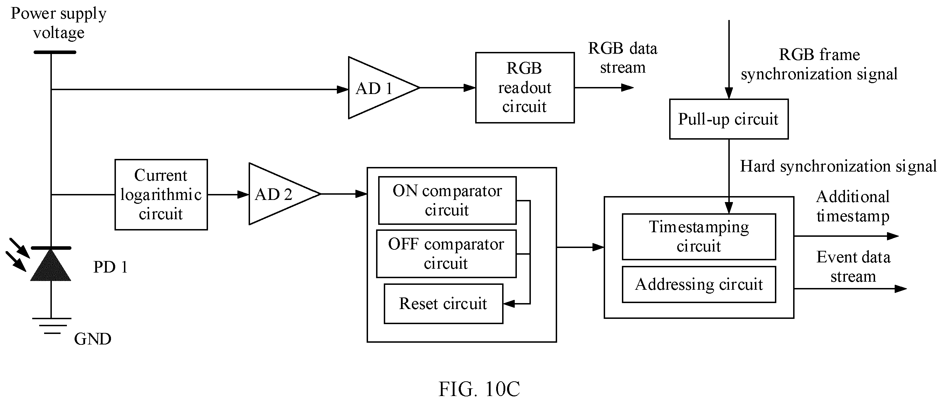

For another example, the target pixel is an RGB pixel, and the second image data is RGB data. FIG. 10C is a diagram of another readout circuit. Based on FIG. 4B, the timestamping circuit prints additional timestamp information in response to the hard synchronization signal, and outputs the additional timestamp.

It should be noted that, for similarities between FIG. 10B and FIG. 3C and similarities between FIG. 10C and FIG. 4B, reference may be made to corresponding content in FIG. 3C and FIG. 4B. Details are not described herein again.

It may be understood that the ON comparator circuit, the OFF comparator circuit, the reset circuit, and the like are circuits in which each event pixel exists, but the timestamping circuit, the addressing circuit, the pull-up circuit, and the like are circuits shared by a plurality of pixels. The addressing circuit is optional. When the event readout manner is asynchronous readout, the addressing circuit needs to print address information on each event signal. When the event readout manner is synchronous readout, the addressing circuit does not need to print address information on each event signal.

Generally, the timestamping circuit may print timestamp information to a positive event signal or a negative event signal, for example, t in a four-dimensional event data packet (x, y, p, t). When hard synchronization is implemented in the hybrid image sensor, the timestamping circuit prints a special trigger timestamp as an additional timestamp when receiving the hard synchronization signal. It may be understood that the additional timestamp is different from t in the four-dimensional event data packet (x, y, p, t).

The additional timestamp may include but is not limited to additional timestamp mark information and timestamp information. The additional timestamp mark information may represent that this data is an additional timestamp, that is, which data is the additional timestamp may be determined through the information.

The additional timestamp may be used to perform time synchronization alignment on the second image data and the event data. Generally, after receiving the second image data, the event data, and the additional timestamp, an SOC of the electronic device 500 may perform time synchronization alignment on the event data and the second image data based on the additional timestamp.

The additional timestamp may be embedded in the event data stream and transmitted to the SOC of the electronic device 500 through the event data stream. For example, when the event readout manner is asynchronous readout, the additional timestamp may be inserted into the asynchronous event data stream in a time sequence, and transmitted to the SOC through the asynchronous event data stream. When the event readout manner is synchronous readout, the additional timestamp may be inserted into an event frame, and transmitted to the SOC through the synchronous event frame data stream. Specifically, the additional timestamp may be inserted into a frame header or a frame trailer of the event frame. A location of the additional timestamp in the event frame is not limited herein.

Certainly, the additional timestamp may not be embedded in the event data stream and transmitted to the SOC through the event data stream, but transmitted to the SOC through an interface between the hybrid image sensor and the SOC. In this case, an interface used to transmit the additional timestamp is different from an interface used to transmit the event data stream. For example, the event data stream is transmitted through an MIPI interface, and the additional timestamp is transmitted through an I2C interface.

Compared with transmitting the additional timestamp to the SOC independent of the event data stream, inserting the additional timestamp into the asynchronous event data stream or the synchronous event frame enables the additional timestamp to be transmitted to the SOC through the event data stream, so that the additional timestamp can be transmitted to the SOC in a more timely manner, and the SOC has a less waiting time.

Specifically, if the hybrid image sensor transmits the additional timestamp to the SOC through an additional interface (for example, the I2C interface), because a resolution of the event data is very high, and a transmission rate of the I2C interface is lower than a transmission rate of the event data, after obtaining the event data, the SOC needs to wait the additional timestamp transmitted through the I2C interface. However, if the additional timestamp is inserted into the event data stream, the SOC also receives the additional timestamp when receiving the event data. Therefore, a waiting time is short.

In other words, an equivalent frame rate of the event data is very high, but a data transmission frequency of an interface like the I2C interface is much lower than a frame rate of the event data. If the additional timestamp is not embedded into the event data stream, after a back-end algorithm receives the event data and the second image data for a period of time, the second image data and the event data can be aligned only after the additional timestamp is transmitted through the interface like the I2C interface. As a result, many application algorithms have a long delay and cannot be processed in real time.

As shown in FIG. 10A, the frame readout controller 105 may deliver a frame synchronization signal based on an exposure time period, and read out an image frame based on a frame rate. The exposure time period, the frame rate, and the like are setting parameters of the hybrid image sensor, and the setting parameters may be preset. When working, the hybrid image sensor may work based on the setting parameters of the hybrid image sensor, and output the second image data, the event data, the additional timestamp, and the like.

The setting parameters of the hybrid image sensor may be set by using hybrid image sensor setting, and the hybrid image sensor setting is delivered by the SOC of the electronic device 500. In this case, the SOC may deliver different hybrid image sensor setting as required, to adjust the setting parameters of the hybrid image sensor, and further adjust a working process and an output result of the hybrid image sensor.

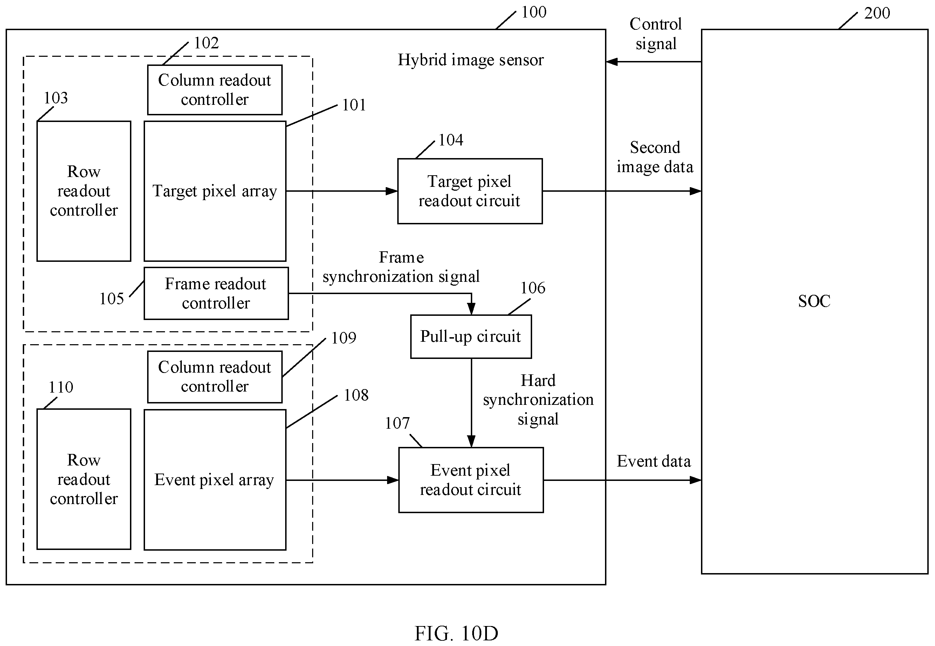

For example, FIG. 10D is a diagram of a framework of an imaging system of an electronic device 500. The imaging system includes a hybrid image sensor 100 and an SOC 200. For related descriptions of the hybrid image sensor 100, refer to related content in FIG. 10A. Details are not described herein again. The SOC 200 may be a main control chip system of the electronic device 500. The SOC 200 may integrate processors such as a central processing unit (central processing unit, CPU), an ISP, and an ESP. In addition, the SOC 200 may further integrate at least one of a storage unit, an interface unit, a system clock, a power supply unit, and the like.

As shown in FIG. 10D, the SOC 200 delivers a control signal to the hybrid image sensor 100. The control signal may include the hybrid image sensor setting. The hybrid image sensor setting includes but is not limited to the following control parameters: an exposure time period and an exposure manner of a target pixel, and a readout manner of an event pixel. The exposure manner includes global shutter (Global Shutter, GS) and rolling shutter (Rolling Shutter, RS). The exposure time period includes an exposure start time point and an exposure end time point. The readout manner includes asynchronous readout and synchronous readout.

After receiving the control signal delivered by the SOC 200, the hybrid image sensor 100 signals the control signal to obtain a corresponding control parameter, controls, based on the corresponding control parameter, the hybrid image sensor to work, and outputs the second image data, the event data, the additional timestamp, and the like.

For example, after the control signal is parsed, control parameters such as an exposure time period, an exposure manner, and a readout manner are obtained, exposure of the target pixel array 101 is controlled based on the exposure time period and the exposure manner, and the target pixel readout circuit 104 is controlled to perform a readout operation to obtain the second image data. The event pixel readout circuit 107 is controlled, based on the readout manner, to read out an event, to obtain the event data. In addition, the frame readout controller 105 further outputs a frame synchronization signal based on an exposure time period, an exposure manner, and the like, to trigger the timestamping circuit in the event pixel readout circuit 107 to print an additional timestamp.

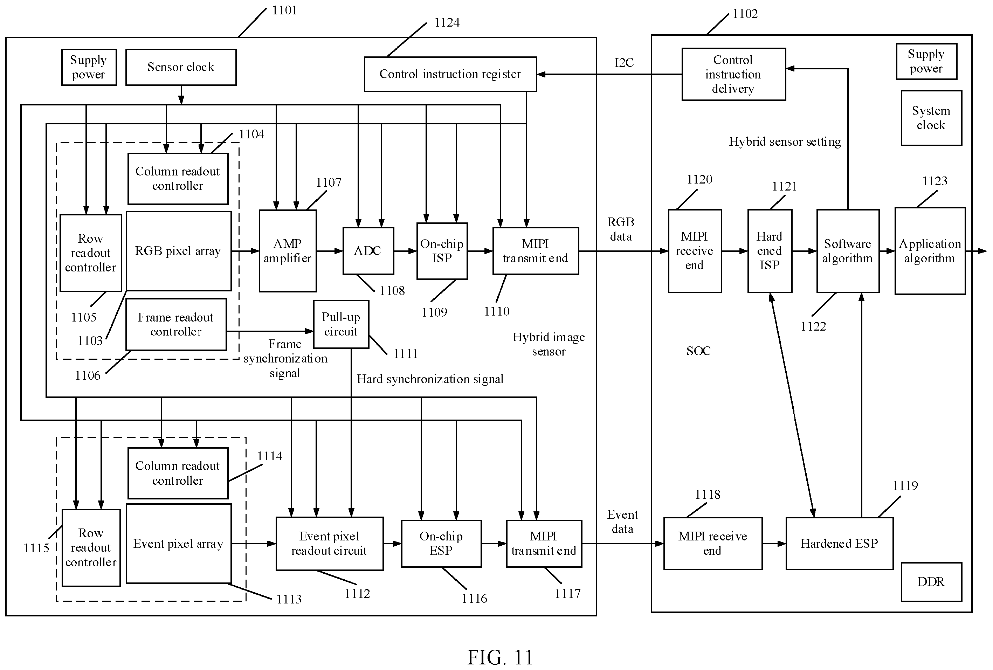

To better receive a solution in which hard synchronization is implemented inside the hybrid image sensor, the following describes an example with reference to FIG. 11. In this case, the target pixel is an RGB pixel, and the second image data is RGB data.

FIG. 11 is a diagram of another framework of an imaging system of an electronic device 500. The imaging system may include a hybrid image sensor 1101 and an SOC 1102. RGB data and event data are respectively transmitted between the hybrid image sensor 1101 and the SOC 1102 through two MIPI interfaces, and the SOC 1102 transmits a control signal to the hybrid image sensor 1101 through an I2C interface.

The hybrid image sensor 1101 includes an RGB pixel part and an event pixel part.

The RGB pixel part includes but is not limited to an RGB pixel array 1103, a column readout controller 1104, a row readout controller 1105, a frame readout controller 1106, an AMP amplifier 1107, an ADC 1108, an on-chip ISP 1109, and an MIPI transmit end 1110. A pixel array, a readout circuit, and the like of the RGB pixel part may be the same as or similar to a pixel array, a readout circuit, and the like of the RGB image sensor. The RGB pixel readout circuit includes an AMP amplifier 1107 and an ADC 110.

The event pixel part includes but is not limited to an event pixel array 1113, a column readout controller 1114, a row readout controller 1115, an event pixel readout circuit 1112, an on-chip ESP 1116, and an MIPI transmit end 1117.

The RGB pixel part and event pixel part are controlled by a sensor clock in the hybrid image sensor. However, the event pixel part may perform frequency multiplication on the sensor clock. That is, the RGB pixel part and event pixel part share the same clock.

The RGB pixel part and the event pixel part are connected by using a pull-up circuit 1111. Specifically, the frame readout controller 1106 is connected to the pull-up circuit 1111 by using a hardware connection cable, and the pull-up circuit 1111 is connected to the event pixel readout circuit 1112 by using a hardware connection cable, and may be specifically connected to a timestamping circuit in the event pixel readout circuit 1112. For specific descriptions of the event pixel readout circuit 1112, refer to FIG. 10B and FIG. 10C. Details are not described herein again.

The SOC 1102 may include an MIPI receive end 1118, a hardened ESP 1119, an MIPI receive end 1120, a hardened ISP 1121, a software-based algorithm 1122, and an application algorithm 1123.

A control instruction register 1124 of the hybrid image sensor 1101 may receive a control signal delivered by the SOC 1102, and control, based on the control signal, each unit in the hybrid image sensor to work, to output RGB data, event data, and an additional timestamp. The control signal may be transmitted by the SOC 1102 to the control instruction register 1124 through the I2C interface.

For example, the control signal delivered by the SCO 1102 may include at least one of the following control parameters: hybrid image sensor setting, an on-chip ISP algorithm parameter or an on-chip ESP algorithm parameter, an MIPI transmission parameter of RGB data, an MIPI transmission parameter of the event data, one time programmable (One Time Programmable, OTP) information, and the like. The hybrid image sensor setting may include but is not limited to an RGB readout parameter and an event readout parameter.

The RGB readout parameter may include an RGB exposure manner, an exposure time period, an RGB gain, a quantity of bits, and the like. The exposure time period may include an exposure start time point and an exposure end time point.

The event readout parameter may include an event readout manner, a filter parameter of an analog end of each event pixel, a comparison threshold, a refractory period (refractory period) of a reset circuit, a trigger manner and a trigger moment of a hard synchronization signal, and the like.

After receiving the control signal, the hybrid image sensor 1101 may parse the control signal to obtain instruction code and an instruction address that correspond to each control parameter, and transmit, based on the instruction address, the instruction code corresponding to each control parameter to each unit, to control each unit to work based on the control parameter.

For example, if the control signal includes an RGB gain, the control instruction register 1124 transmits instruction code corresponding to the RGB gain to the AMP amplifier 1107 based on the instruction address, and the AMP amplifier 1107 outputs a result based on the delivered RGB gain in response to the instruction code. In this way, the RGB gain of the AMP amplifier 1107 can be controlled based on the control signal.

Similarly, if the control signal includes a quantity of bits, the control instruction register 1124 transmits, based on the instruction address, instruction code corresponding to the quantity of bits to the ADC 1108, and the ADC 1108 performs analog-to-digital conversion in response to the instruction code based on the quantity of delivered bits. In this way, the quantity of bits of the ADC 1108 can be controlled based on the control signal.

If the control signal includes the on-chip ISP algorithm parameter and the MIPI transmission parameter of the RGB data, the control instruction register 1124 transmits, based on the instruction address, instruction code corresponding to the on-chip ISP algorithm parameter to the on-chip ISP 1109, and transmits instruction code corresponding to the MIPI transmission parameter of the RGB data to the MIPI transmit end 1110. In response to the instruction code, the on-chip ISP 1109 runs a corresponding algorithm based on the on-chip ISP algorithm parameter. In response to the instruction code, the MIPI transmit end 1110 controls an MIPI packaging manner, an MIPI transmission mode, a transmission rate, and the like of the RGB data stream based on the MIPI transmission parameter.

If the control signal includes the event readout parameter, the control instruction register 1124 transmits, based on the instruction address, instruction code corresponding to the event readout parameter to the event pixel readout circuit 1112. The event pixel readout circuit 1112 controls, in response to the instruction code, specified thresholds of an ON comparator circuit and an OFF comparator circuit in the event pixel readout circuit 1112, controls a refractory period (that is, a reset time) of a reset circuit in the event pixel readout circuit 1112, and controls a filter parameter of an analog end of each event pixel. For example, the filter parameter is an upper cut-off frequency and a lower cut-off frequency of a band-pass filter.

In addition, the timestamping circuit in the event pixel readout circuit 1112 further prints an additional timestamp under triggering of the hard synchronization signal. The hard synchronization signal is transmitted by the pull-up circuit 1111 to the timestamping circuit by using a hardware connection cable, and the hard synchronization signal is a signal output after the pull-up circuit performs voltage pull-up on a frame synchronization signal after receiving the frame synchronization signal led out by the frame readout controller 1106.

If the control signal includes the on-chip ESP algorithm parameter and the MIPI transmission parameter of the event data, the control instruction register 1124 transmits, based on the instruction address, instruction code corresponding to the on-chip ESP algorithm parameter to the on-chip ESP 1116, and transmits instruction code corresponding to the MIPI transmission parameter of the event data to the MIPI transmit end 1117. The on-chip ISP 1116 runs a corresponding algorithm based on the on-chip ISP algorithm parameter in response to the instruction code. In response to the instruction code, the MIPI transmit end 1117 controls an MIPI packaging manner, an MIPI transmission mode, a transmission rate, and the like of the event data stream based on the MIPI transmission parameter.

The on-chip ISP 1109 may be integrated with an on-chip ISP algorithm pipe. For example, an on-chip dead pixel correction (dead pixel correction, DPC) algorithm, a remoscia algorithm or a demoscia algorithm, and an automatic white balance (Auto White Balance, AWB) algorithm are integrated into the on-chip ISP 1109.

In this embodiment of this application, the DPC algorithm on the on-chip ISP 1109 may be different from a DPC algorithm of a conventional RGB image sensor. Specifically, in the hybrid image sensor, the on-chip ISP 1109 runs a DPC algorithm occupied by an event pixel and a DPC algorithm for a conventional RGB pixel. The DPC algorithm occupied by the event pixel and the DPC algorithm for the conventional RGB pixel may be in a serial relationship or a parallel relationship.

It should be noted that, if the RGB pixel and the event pixel of the hybrid image sensor are arranged in parallel, that is, the event pixel periodically occupies the RGB pixel in space, the on-chip ISP algorithm increases missing of a part of RGB pixel caused by occupation of the event pixel. In this case, for the RGB pixel, each event pixel is a dead pixel. Therefore, the DPC algorithm occupied by the event pixel is implemented in the on-chip ISP.

The on-chip ESP algorithm pipe may be integrated into the on-chip ESP 1116. In this case, the on-chip ESP algorithm may include, for example, algorithm modules such as DPC (dead/hot pixel correction), event rate control, and event compression of the event pixel. In other words, different modes and a related algorithm parameter in the on-chip ESP algorithm pipe in the hybrid image sensor may be controlled through the control signal delivered by the I2C.

As shown in FIG. 11, the RGB data and the event data that are output by the hybrid image sensor 1101 are separately transmitted to the SOC 1102 by using the MIPI. The SOC 1102 receives, by using the MIPI receive end 1118, the event data sent by the MIPI transmit end 1117. The event data may be a synchronous event frame data stream, or may be an asynchronous event data stream. In this case, the event data includes an additional timestamp, that is, the additional timestamp is inserted into the asynchronous event data stream or the synchronous event frame. The MIPI receive end 1120 receives the RGB data stream sent by the MIPI transmit end 1110.

After receiving the event data, the MIPI receive end 1118 transmits the event data to the hardened ESP 1119 for data processing. Similarly, after receiving the RGB event, the MIPI receive end 1120 transmits the RGB event to the hardened ISP 1121 for data processing.

In this embodiment of this application, the hardened ESP 1119 and the hardened ISP 1121 may separately perform related signal processing such as denoising and flicker removal on the RGB data and the event data, to improve signal quality of the RGB data and the event data. In addition, related functions of the hardened ESP 1119 and the hardened ISP 1121 may also be implemented by using a software-based ESP and a software-based ISP module.

In this embodiment of this application, the hardened ESP 1119 and the hardened ISP 1121 may further transmit related data to each other, and the related data may be used as an algorithm input of the ISP algorithm or the ESP algorithm. The related data may include, for example, a statistical result of the RGB image and a statistical result of the event data.

After receiving the RGB data processed by the hardened ISP 1121 and the event data processed by the hardened ESP 1119, the software-based algorithm 1122 performs a 3A algorithm on the processed RGB data and the processed event data, to calculate hybrid image sensor setting, and transmits, based on a specific setting delivery time sequence, the hybrid image sensor setting to the hybrid image sensor 1101 through the I2C interface. The hybrid image sensor 1101 outputs RGB data and event data in response to the delivered hybrid image sensor setting. The hybrid image sensor setting may include an RGB exposure parameter and an event camera parameter. The RGB exposure parameter includes, for example, an exposure manner and an exposure time period. The event camera parameter includes, for example, an event readout manner, a readout rate, specified thresholds of the ON comparator circuit and the OFF comparator circuit, a filter parameter, a hard synchronization trigger time, and a reset time of the reset circuit.

The 3A algorithm may include an auto-exposure algorithm, an auto-focus algorithm, and an auto white balance algorithm.

It may be understood that the hybrid image sensor 1101 has preset default hybrid image sensor setting. Generally, the hybrid image sensor 1101 first outputs an additional timestamp, RGB data, and event data based on the default hybrid image sensor setting, and then the SOC 1102 calculates new hybrid image sensor setting based on the RGB data and the event data, and delivers the new hybrid image sensor setting to the hybrid image sensor 1101, to adjust a working process and an output result of the hybrid image sensor 1101, so as to obtain a new additional timestamp, RGB data, and event data.

The event data output by the hybrid image sensor 1101 includes an additional timestamp. When receiving the event data, the software-based algorithm 1122 also receives the additional timestamp. This reduces a waiting time of the SOC. After receiving the additional timestamp, the software-based algorithm 1122 may determine, based on the additional timestamp, event data corresponding to each frame of RGB data.

In this embodiment of this application, the software-based algorithm 1122 may be used to calculate and control a related parameter of the hybrid image sensor, to adjust output image quality and the like of the RGB pixel and the event pixel, to obtain RGB image data and event image data that can be accepted by the application algorithm 1123.

The event data and the RGB data that are processed by the software-based algorithm 1122 are transferred to the application algorithm 1123, and then the application algorithm 1123 correspondingly processes the event data and the RGB data, to finally obtain to-be-displayed image data and/or to-be-stored image data. The application algorithm 1123 may be algorithms such as deblur, video frame interpolation, and facial recognition, gesture recognition, and eyeball tracking based on the RGB and event data.

It may be understood that the software-based algorithm 1122 and the application algorithm 1123 may be applied to a processor of the SOC 1102, for example, run on processors such as a CPU and an AP. In addition, different algorithm modules in processes such as the hardened ISP 1121, the hardened ESP 1119, the software-based algorithm 1122, and the application algorithm 1123 may need to store a large amount of data in a calculation process. Therefore, in an algorithm processing process, a double data rate (Double Data Rate, DDR) memory in the SOC is invoked online or offline to store or transfer data. The SOC 1102 may further adaptively include units such as a power supply unit and a system clock unit, and the hybrid image sensor 1101 may further include units such as a power supply unit.

It should be noted that, hard synchronization and alignment of the RGB data and the event data are performed inside the hybrid image sensor, so that an image registration deviation can be reduced, and a hole of a camera can be reduced in the electronic device 500 without re-molding. This reduces costs. In addition, the target pixel and the event pixel in the hybrid image sensor can share components such as AF and OIS.

In specific application, the hybrid image sensor usually outputs second image data at a fixed frame rate. In this case, the frame readout controller may read out the second image data at a preset frame rate. However, an exposure manner of the target pixel may be global shutter (Global Shutter, GS) or rolling shutter (Rolling Shutter, RS). In addition, a readout manner of the event data of the hybrid image sensor may be synchronous readout or asynchronous readout. There is no concept of a frame for asynchronous readout, and an entire event frame is readout for synchronous readout.

A time and a quantity of frame synchronization signals delivered by the frame readout controller vary based on an exposure manner and an event readout manner. Generally, there are the following four cases: global shutter exposure and synchronous readout, global shutter exposure and asynchronous readout, rolling shutter exposure and synchronous readout, and rolling shutter exposure and asynchronous readout. In other words, hard synchronization policies are different in different cases, and there may be four different hard synchronization policies in the foregoing four different cases.

Circuits and transmission lines required by the four different hard synchronization policies are implemented in the hybrid image sensor. When the hybrid image sensor is implemented in a spatial mixing manner and a manner of customizing a special pixel, an overall circuit framework inside the hybrid image sensor may be different. For specific descriptions, refer to FIG. 10B and FIG. 10C. Details are not described herein again.

The following describes hard synchronization policies in four different cases by using examples.

Case 1: global shutter exposure and asynchronous readout.

In this case, a target pixel array uses a global shutter exposure manner. Therefore, for each target pixel, an exposure start time point and an exposure end time point are the same. For each frame of second image data, the frame readout controller may deliver one frame synchronization signal at the exposure start time point, and deliver one frame synchronization signal at the exposure end time point. In other words, the frame readout controller delivers two frame synchronization signals at each frame of second image data, which respectively represent the exposure start time point and the exposure end time point.

For each frame synchronization signal, the frame synchronization signal is transmitted to the pull-up circuit by using a hardware connection cable. After pulling up the frame synchronization signal, the pull-up circuit outputs a hard synchronization signal. The hard synchronization signal is transmitted to the timestamping circuit by using the hardware connection cable. The timestamping circuit prints an additional timestamp when triggered by the hard synchronization signal. The additional timestamp may be inserted into an asynchronous event data stream in a time sequence.

In other words, for each frame of second image data, the timestamping circuit receives two hard synchronization signals, and prints two additional timestamps in response to the two frame synchronization signals.

It should be noted that the frame synchronization signal is transmitted to the timestamping circuit by using a hardware connection cable. Therefore, there is a signal transmission delay and a pull-up circuit delay from a time when the frame synchronization signal is provided to a time when the timestamping circuit receives the hard synchronization signal. Signal transmission delay = Transmission line length/speed of light. For example, if the transmission line length is 2 cm, the signal transmission delay is approximately 2 cm/3*10^8 m/s = 0.067 ns (nanosecond).

In addition to the signal transmission delay and pull-up circuit delay, there is also a timestamp delay. The timestamping delay refers to a processing delay of printing an additional timestamp after the timestamping circuit receives the hard synchronization signal.

In a specific application, the frame synchronization signal and the hard synchronization signal are transmitted by using a hardware connection cable, so that it can be ensured that a total delay between the frame synchronization signal and the hard synchronization signal is at a nanosecond (ns) level.

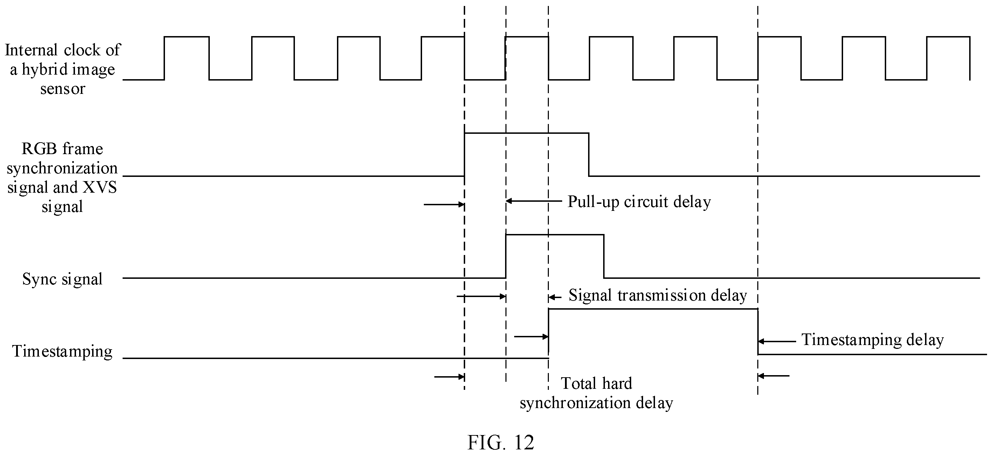

For example, FIG. 12 is a diagram of a hard synchronization delay in a hybrid image sensor. In this case, a total hard synchronization delay= a pull-up circuit delay + a signal transmission delay + a timestamping delay. An RGB frame synchronization signal is an xvs signal, and a hard synchronization signal is a sync signal.

Because a voltage of the RGB frame synchronization signal is lower than a valid high electrical level of the hard synchronization signal, a pull-up circuit needs to be added in the middle. Therefore, the pull-up circuit delay exists. The timestamping delay is a processing delay of printing an additional timestamp on an event signal by the timestamping circuit after the sync signal is received.

After the timestamping circuit prints the additional timestamp under triggering of the hard synchronization signal, because the event readout manner is asynchronous readout, the additional timestamp may be inserted into an asynchronous event data stream in a time sequence, and transmitted to an SOC through the asynchronous event data stream.

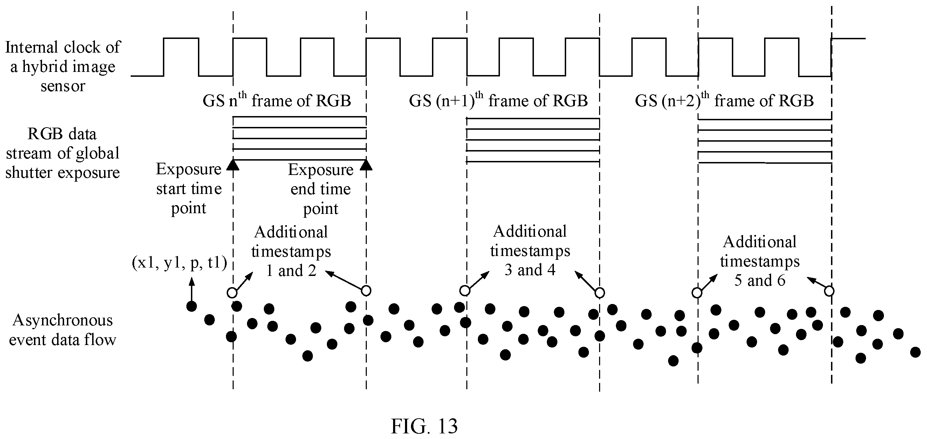

For example, FIG. 13 is a diagram of hard synchronization in a hybrid image sensor. In an asynchronous event data stream output by the hybrid image sensor, a black dot represents an event data packet, and the event data packet is a four-dimensional event data packet of (x, y, p, t). A white dot represents an additional timestamp, and the additional timestamp is an additional timestamp signal generated by the timestamping circuit based on the hard synchronization signal.

The additional timestamp may be inserted into the asynchronous event data and transmitted to the SOC of the electronic device 500, or may be used as an additional metadata data packet and synchronously transmitted to the SOC of the electronic device 500 with an event data stream.

As shown in FIG. 13, RGB pixels in the hybrid image sensor are global shutter exposure. Therefore, exposure start time points of all the RGB pixels are the same and exposure end time points of all the RGB pixels are the same. In addition, each frame of RGB data under global shutter exposure provides two RGB frame synchronization signals, which respectively represent an exposure start time point and an exposure end time point.

That is, for each frame of RGB data, at the exposure start time point, the frame readout controller provides an RGB frame synchronization signal, and the RGB frame synchronization signal is transmitted to the pull-up circuit by using the hardware connection cable. After pulling up the frame synchronization signal, the pull-up circuit outputs a hard synchronization signal, and transmits the hard synchronization signal to the timestamping circuit by using the hardware connection cable. After receiving the hard synchronization signal, the timestamping circuit prints an additional timestamp under triggering of the hard synchronization signal, and then inserts the additional timestamp into the asynchronous event data stream in a time sequence.

Similarly, at the exposure end time point, the frame readout controller also provides an RGB frame synchronization signal, and the RGB frame synchronization signal is transmitted to the pull-up circuit by using the hardware connection cable. After pulling up the frame synchronization signal, the pull-up circuit outputs a hard synchronization signal, and transmits the hard synchronization signal to the timestamping circuit by using the hardware connection cable. The timestamping circuit prints a timestamp based on the hard synchronization signal, and then inserts an additional timestamp into the asynchronous event data stream in a time sequence.

In this way, each frame of RGB data for global shutter exposure corresponds to two additional timestamps. As shown in FIG. 13, an exposure start time point and an exposure end time point of an n^{th} frame of RGB data correspond to an additional timestamp 1 and an additional timestamp 2, respectively; an exposure start time point and an exposure end time point of an (n+1)^{th} frame of RGB data correspond to an additional timestamp 3 and an additional timestamp 4, respectively; and an exposure start time point and an exposure end time point of an (n+2)^{th} frame of RGB data correspond to an additional timestamp 5 and an additional timestamp 6, respectively.

After receiving the additional timestamp, the RGB data, and the asynchronous event data stream that are output by the hybrid image sensor, the SOC of the electronic device 500 performs time synchronization alignment on the RGB data and the asynchronous event data based on the additional timestamp, to determine event data corresponding to each frame of RGB image. For example, event data corresponding to the n^{th} frame of RGB image is a four-dimensional event data packet whose time is between the additional timestamp 1 and the additional timestamp 2; event data corresponding to the (n+1)^{th} frame of RGB image is a four-dimensional event data packet whose time is between the additional timestamp 3 and the additional timestamp 4; and event data corresponding to the (n+2)^{th} frame of RGB image is a four-dimensional event data packet whose time is between the additional timestamp 5 and the additional timestamp 6.

Case 2: rolling shutter exposure and asynchronous readout.

In this case, a target pixel array uses a rolling shutter exposure manner. When exposure of last several rows of pixels of the target pixel is not completed, exposure of first several rows of pixels of the target pixel starts to be performed in a next frame. In this case, the hard synchronization policy may be: One frame synchronization signal is delivered for each frame of second image data, and a delivery moment of the frame synchronization signal may be any moment in the frame of visible light image. For example, the frame readout controller may deliver a frame synchronization signal when exposure of a first row of pixels of each frame of second image data image ends.

Similar to the foregoing case 1, the frame synchronization signal is transmitted to the pull-up circuit by using the hardware connection cable, and then the pull-up circuit transmits a hard synchronization signal to the timestamping circuit by using the hardware connection cable. The timestamping circuit prints an additional timestamp under triggering of the hard synchronization signal. The additional timestamp may be inserted into an asynchronous event data flow, or transmitted to an SOC as an additional metadata packet. In addition, a total delay between the frame synchronization signal and the hard synchronization signal includes a signal transmission delay, a pull-up delay, and a timestamping delay.

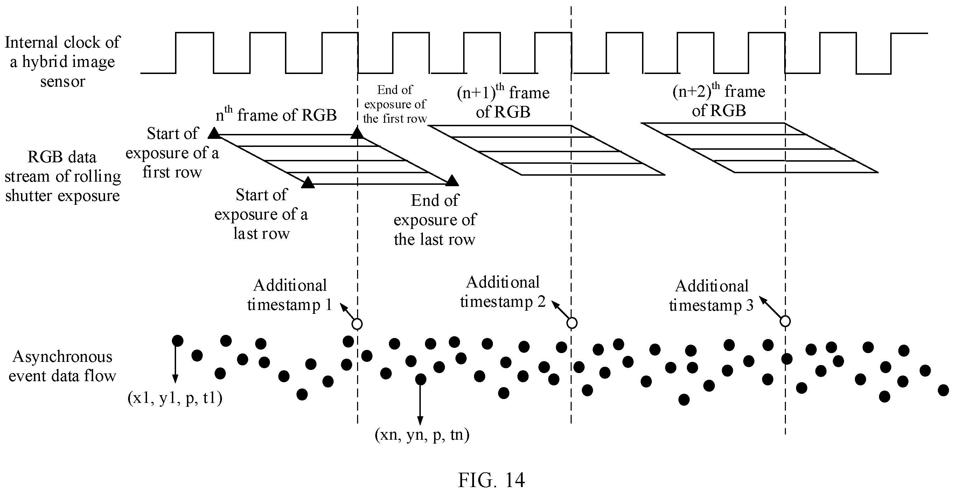

For example, refer to another diagram of hard synchronization in a hybrid image sensor shown in FIG. 14. An RGB pixel of the hybrid image sensor is partially exposed. Therefore, when exposure of last several rows of pixels of the RGB pixel is not completed, exposure of a next frame of first several rows of pixels of the RGB pixel has started. In this case, the frame readout controller delivers an RGB frame synchronization signal at an exposure end time point of a first row of RGB pixels.

In other words, based on an internal clock signal of the hybrid image sensor, the frame readout controller delivers an RGB frame synchronization signal when exposure of a first row of RGB pixels of each frame of RGB image ends. The RGB frame synchronization signal is transmitted to the pull-up circuit by using the hardware connection cable. After pulling up the RGB frame synchronization signal, the pull-up circuit outputs a hard synchronization signal, and transmits the hard synchronization signal to the timestamping circuit of the event pixel by using the hardware connection cable. The timestamping circuit prints an additional timestamp on the event signal based on the hard synchronization signal. The additional timestamp may be inserted into an asynchronous event data stream.

In this case, a frame synchronization signal is delivered for each frame of RGB image. Therefore, each frame of RGB image corresponds to an additional timestamp. As shown in FIG. 14, an exposure end time point of a first row of RGB data of an n^{th} frame corresponds to an additional timestamp 1, an exposure end time point of a first row of RGB data of an (n+1)^{th} frame corresponds to an additional timestamp 2, and an exposure end time point of a first row of RGB data of an (n+2)^{th} frame corresponds to an additional timestamp 3.

It can be learned by comparing FIG. 14 and FIG. 13 that each frame of RGB image in FIG. 14 provides only one hard synchronization signal, but each frame of RGB image in FIG. 13 provides two hard synchronization signals.

After receiving the additional timestamp, the RGB data, and the asynchronous event data stream that are output by the hybrid image sensor, the SOC of the electronic device 500 may sequentially calculate an exposure start time point and an exposure end time point of each row of RGB based on the additional timestamp, an exposure time period of an RGB image frame, and an exposure interval between two adjacent rows of RGB, and may perform time synchronization alignment on the RGB data and the asynchronous event data, to determine event data corresponding to each frame of RGB image. In addition, in the calculation process, a total delay between the RGB frame synchronization signal and the hard synchronization signal may be further considered (for example, as shown in FIG. 12). In addition, if the RGB image is cropped, a delay difference between each RGB pixel and each time pixel may be calculated based on a cropping ratio.

Case 3: global shutter exposure and synchronous readout.

Different from that in asynchronous readout, an event frame at a high frame rate is read out in synchronous readout. In addition, each event frame is a ternary map including +1, -1, and 0, and the event frame no longer records coordinate information of an event. In addition, each event frame shares one or more timestamps. For example, each event frame records only one timestamp as a timestamp of the entire event frame, or records timestamps representing all positive events in the event frame and timestamps representing all negative events in the event frame.

In the global shutter exposure manner, the frame readout controller may deliver two frame synchronization signals in each frame of second image data, and specifically, may separately deliver one frame synchronization signal at an exposure start time point and an exposure end time point; or may deliver one frame synchronization signal or two frame synchronization signals in one frame period. The frame period may be a time period between an exposure start time point of a current frame and an exposure start time point of a next frame.

When one frame synchronization signal is delivered in one frame period, a delivery moment of the frame synchronization signal may be an exposure start time point of a current frame, that is, the frame readout controller delivers one frame synchronization signal at an exposure start time point of each frame of second image data. In this case, the event pixel readout circuit not only prints an additional timestamp based on the hard synchronization signal, but also resynchronizes a first event frame in the frame period with the hard synchronization signal. Therefore, the additional timestamp corresponding to the exposure start time point is aligned with the exposure start time point.

When two frame synchronization signals are delivered in one frame period, delivery moments of the frame synchronization signal may be an exposure start time point and an exposure end time point of a current frame, that is, the frame readout controller delivers one frame synchronization signal at the exposure start time point of each frame of second image data, and also delivers one frame synchronization signal at the exposure end time point. In this case, the event pixel readout circuit not only prints an additional timestamp based on the hard synchronization signal, but also resynchronizes a first event frame in the frame period with the hard synchronization signal corresponding to the exposure start time point. Therefore, the additional timestamp corresponding to the exposure start time is aligned with the exposure start time point, but the additional timestamp corresponding to the exposure end time point is not necessarily aligned with the exposure end time point.

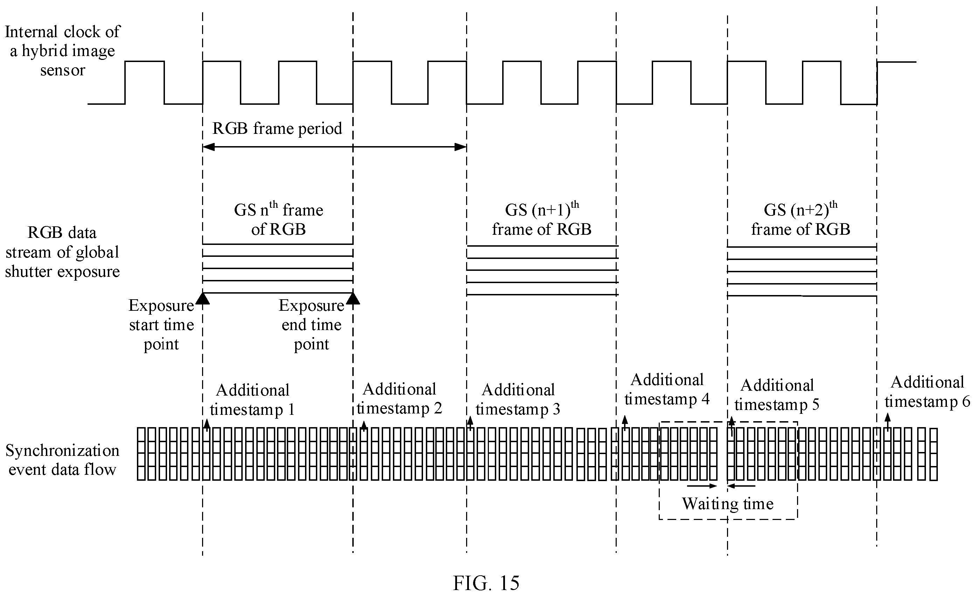

For example, FIG. 15 is still another diagram of hard synchronization in a hybrid image sensor. An RGB pixel in the hybrid image sensor is global shutter exposure. Therefore, exposure start time points of all the RGB pixels are the same and exposure end time points of all the RGB pixels are the same.

In an implementation, two RGB frame synchronization signals are provided for each frame of RGB data under global shutter exposure, respectively representing an exposure start time point and an exposure end time point. An additional timestamp is separately printed based on the two RGB frame synchronization signals.

As shown in FIG. 15, for each frame of RGB data, the frame readout controller separately delivers an RGB frame synchronization signal at the RGB exposure start time and the RGB exposure end time based on an internal clock signal of the hybrid image sensor. Each RGB frame synchronization signal is transmitted to the pull-up circuit by using the hardware connection cable. After pulling up the RGB frame synchronization signal, the pull-up circuit outputs a hard synchronization signal, and transmits the hard synchronization signal to the timestamping circuit by using the hardware connection cable.

The timestamping circuit may print an additional timestamp in real time in response to the hard synchronization signal, and register the additional timestamp. In this case, the registered additional timestamp is in a state of waiting to be read out. When a next event frame is received, the additional timestamp of the register is inserted into an event frame.

Certainly, the timestamping circuit may not print an additional timestamp in real time, but wait for a next event frame after receiving the hard synchronization signal; and print, in response to the hard synchronization signal, an additional timestamp when the next event frame arrives, and insert the additional event timestamp into the next event frame.

It should be noted that, in a process of inserting the additional timestamp into the event frame, if an additional timestamp is not read out currently and the current event frame is being read out, the additional timestamp may be inserted into a frame trailer of the current event frame; or if an additional timestamp is not read out currently and the current event frame has been completely read out, the additional timestamp may be added to a frame header of a next event frame, so that the additional timestamp is transmitted to the SOC through a synchronization event frame data stream.

As shown in FIG. 15, the synchronization event frame data stream includes a plurality of event frames. Each large rectangle represents one event frame, and each large rectangle includes four small rectangles. One RGB frame synchronization signal is delivered at each of the exposure start time points and the exposure end time points of the n^{th} frame of RGB data, the (n+1)^{th} frame of RGB data, and the (n+2)^{th} frame of RGB data. The timestamping circuit prints an additional timestamp based on the hard synchronization signal, and adds the additional timestamp to frame header data of the next event frame. Details are shown in the additional timestamp 1 to the additional timestamp 6.

After receiving the additional timestamp, the RGB data, and the synchronization event frame data stream that are output by the hybrid image sensor, the SOC of the electronic device 500 performs time synchronization alignment on the RGB data and the synchronization event frame based on the additional timestamp, to determine event data corresponding to each frame of RGB image. For example, event data corresponding to the n^{th} frame of RGB image is an event frame whose time is between the additional timestamp 1 and the additional timestamp 2; event data corresponding to the (n+1)^{th} frame of RGB image is an event frame whose time is between the additional timestamp 3 and the additional timestamp 4; and event data corresponding to the (n+2)^{th} frame of RGB image is an event frame whose time is between the additional timestamp 5 and the additional timestamp 6.

In another implementation, for each frame of RGB data, a time period from an exposure start time point of the frame to an exposure start time point of a next frame is counted as one RGB frame period. In this case, the RGB frame synchronization signal is delivered at a fixed moment, and then the event camera of the hybrid image sensor synchronously generates a fixed quantity of frames in the RGB frame period. The fixed quantity may be controlled by the hybrid image sensor setting, and may be changed by a back-end algorithm.

The fixed moment may be, for example, an exposure start time point, or an exposure start time point and an exposure end time point.

In other words, in this case, one RGB frame synchronization signal may be delivered only at the exposure start time point, or one RGB frame synchronization signal may be separately delivered at the exposure start time point and the exposure end time point respectively. Therefore, there may be only one additional timestamp or two additional timestamps in one RGB frame period.

When the RGB frame synchronization signal is delivered only at the exposure start time point, there can be only one additional timestamp in one RGB frame period. As shown in FIG. 15, in the RGB frame period, an RGB frame synchronization signal is delivered at the exposure start time point of the n^{th} frame of RGB image, and no RGB frame synchronization signal is delivered at the exposure end time point of the n^{th} frame of RGB image. Therefore, only the additional timestamp 1 is included in the frame period. In a next RGB frame period, an RGB frame synchronization signal is delivered at the exposure start time point of the (n+1)^{th} frame of RGB image, and no RGB frame synchronization signal is delivered at the exposure start time point of the (n+1)^{th} frame of RGB image. Therefore, only the additional timestamp 3 is included in the frame period. Similarly, the RGB frame synchronization signal is delivered only at the exposure start time point of the (n+2)^{th} frame of RGB image. Therefore, only the additional timestamp 5 is included in the frame period.

When the RGB frame synchronization signal is delivered at both the exposure start time point and the exposure end time point, there may be two additional timestamps in one RGB frame period. As shown in FIG. 15, in an RGB frame period, an RGB frame synchronization signal is separately delivered at the exposure start time point and the exposure end time point of the n^{th} frame of RGB image. Therefore, the frame period includes the additional timestamp 1 and the additional timestamp 2. In a next RGB frame period, an RGB frame synchronization signal is delivered at both the exposure start time point and the exposure end time point of the (n+1)^{th} frame of RGB image. Therefore, the frame period includes the additional timestamp 3 and the additional timestamp 4. Similarly, an RGB frame synchronization signal is delivered at both the exposure start time point and the exposure end time point of the (n+2)^{th} frame of RGB image. Therefore, the frame period includes the additional timestamp 5 and the additional timestamp 6.

Regardless of whether one RGB frame synchronization signal is delivered or two RGB frame synchronization signals are delivered in one RGB frame period, the first event frame in the frame period needs to be resynchronized with the hard synchronization signal corresponding to the exposure start time point. As shown in FIG. 15, the additional timestamp 1, the additional timestamp 3, and the additional timestamp 5 are all aligned with the exposure start time point of RGB, and the additional timestamp 2, the additional timestamp 4, and the additional timestamp 6 are not necessarily aligned with the exposure end time point of RGB.

Resynchronization means that if no event frame is output at a moment corresponding to the hard synchronization signal, the event pixel readout circuit is refreshed once, to ensure that an event frame is definitely output at the moment corresponding to the hard synchronization signal, so that an additional timestamp printed based on the hard synchronization signal can be aligned with the first event frame in the frame period.

A resynchronization process may be as follows: A comparator circuit of an event pixel is enabled on hardware. In this case, if brightness changes of some event pixels meet a trigger threshold of the comparator circuit, an event is triggered. If the event is triggered, the event pixel readout circuit prints a timestamp of the event trigger. A frame timestamp is output even if no event pixel of the current event frame is triggered. For example, if there is an encoding algorithm on the sensor, event data of the event frame is skipped and only a frame header and a frame trailer are retained, and frame timestamp information is placed in the frame header or frame trailer. If no encoding algorithm is available on the sensor, an event image with all pixel values being 0 is output.

It should be noted that, if a frame rate of the event frame is not an integer multiple of a frame rate of an RGB frame, a periodicity of the event frame is unstable, that is, in a case in a dashed box in FIG. 15, an interval between two consecutive event frames is prolonged, and a blank waiting time occurs. For example, if the frame rate of the RGB frame is 30 FPS, and the frame rate of the event frame is 4000 FPS, the waiting time may be calculated to obtain 4K/30=133.33, (133.33mod1=0.33)*1/4000=0.083 ms. In this case, an image sensor may mark the waiting time and transmit the waiting time to a back-end processing algorithm.

Case 4: rolling shutter exposure and synchronous readout.

Similar to the case 3, there are also two hard synchronization triggering manners. A first manner is as follows: One frame synchronization signal is output for each frame of second image data. Specifically, one frame synchronization signal may be output at an exposure end time point of a first row of target pixels, at a time point at which a first row of target pixels starts to be read out, or at a time point at which there is a specific interval from the foregoing two time points. A second manner is as follows: In an RGB frame period, a frame synchronization signal is output, and a first frame event frame in the frame period is resynchronized with the hard synchronization signal.

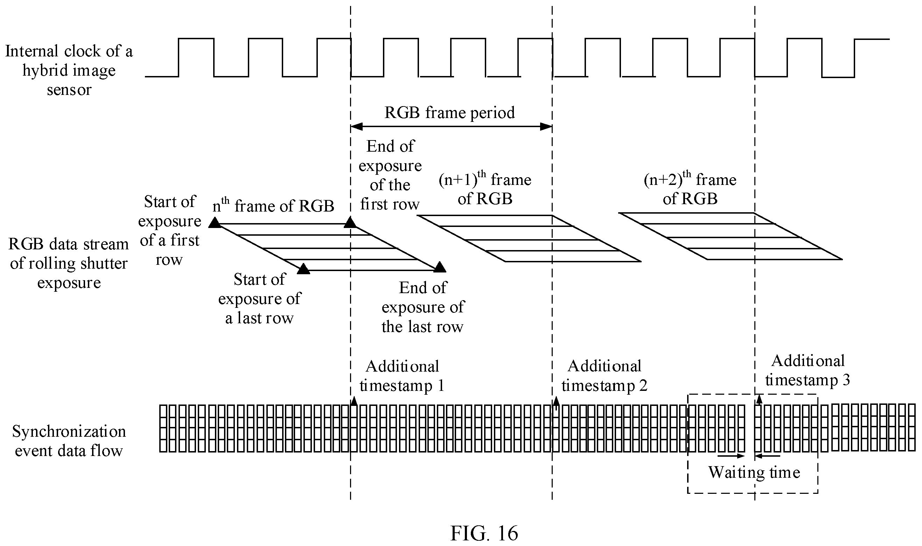

For example, refer to still another diagram of hard synchronization in the hybrid image sensor in FIG. 16. In an implementation, for each frame of RGB data, an RGB frame synchronization signal is provided at an exposure end time point of a first row of RGB pixels. In this case, similar to the foregoing several cases, the RGB frame synchronization signal provided by the frame readout controller is transmitted to the pull-up circuit by using the hardware connection cable. After pulling up the RGB frame synchronization signal, the pull-up circuit outputs a hard synchronization signal, and transmits the hard synchronization signal to the timestamping circuit by using the hardware connection cable. In addition, a total delay between the hard synchronization signal and the RGB frame synchronization signal includes a signal transmission delay, a pull-up delay, and a timestamping delay. After the timestamping circuit receives the hard synchronization signal of the pull-up circuit, the timestamping circuit prints an additional timestamp for a next event frame under triggering of the hard synchronization signal, and adds the additional timestamp to header data of the event frame. The additional timestamp is transmitted to the SOC through an event frame data stream.

In another implementation, the frame readout controller delivers an RGB frame synchronization signal at the exposure end time point of the first row of pixels, and then the event camera of the hybrid image sensor synchronously generates a fixed quantity of frames in the RGB frame period. The fixed quantity may be controlled by the hybrid image sensor setting, and may be changed by a back-end algorithm. In this case, the RGB frame period is a time period from an exposure end time point of a first row of pixels of a current frame to an exposure end time point of a first row of pixels of a next frame.

In this case, a first event frame in each RGB frame period is resynchronized with the RGB hard synchronization signal. As shown in FIG. 16, an n^{th} frame of RGB image corresponds to an additional timestamp 1, an (n+1)^{th} frame of RGB image corresponds to an additional timestamp 2, and an (n+2)^{th} frame of RGB image corresponds to an additional timestamp 3. The additional timestamp 1, the additional timestamp 2, and the additional timestamp 3 are all aligned with the exposure end time point of the first row of RGB pixels.

In addition, there is a waiting time between a last event frame in the RGB frame period and a first event frame in a next RGB frame period. This may be specifically shown by a dashed-line box at the additional timestamp 3 in FIG. 16.

If a frame rate of an event frame is not an integer multiple of a frame rate of an RGB frame, a waiting time interval may be calculated. For a specific calculation manner, refer to related content in the foregoing global shutter exposure and synchronous readout.

However, an additional requirement of a hard synchronization policy of global shutter exposure and synchronous readout is that a waiting time is the same as a normal frame interval. In other words, the hybrid image sensor needs to be designed according to FIG. 16, and the received hybrid image sensor setting needs to meet that a frame rate of a delivered event frame is an integer multiple of a frame rate of an RGB frame.

It should be noted that, in the hard synchronization policies in the foregoing four cases, only one frame of image data is output in one frame period. However, if there are a plurality of frames in one frame period, for example, in a staggered frame output manner, a manner of calculating the frame period may be correspondingly changed to one complete frame period including a plurality of frames.

In this case, the plurality of frames in one frame period may be considered as different frames, and a frame synchronization signal is provided at an exposure start time point and an exposure end time point of each frame, or at an exposure end time point of a first row of each frame. For example, there are two frames in one frame period, which are respectively a long frame and a short frame. In this case, the long frame and the short frame are considered as different frames. If the exposure manner is global shutter exposure, a frame synchronization signal may be provided at both the exposure start time point and the exposure end time point of the long frame, and a frame synchronization signal may be provided at both the exposure start time point and the exposure end time point of the short frame. In this case, there are four hard synchronization signals in one frame period. If the exposure manner is rolling shutter exposure, a frame synchronization signal may be provided at both an exposure end time point of a first row of pixels of the long frame and an exposure end time point of a first row of pixels of the short frame. In this case, two hard synchronization signals are exposed in one frame period.

It should be noted that the electronic device 500 has different application modes, for example, a photo mode and a video mode (or a video recording mode). In different application modes, the hard synchronization triggering mode may be different. For example, when the electronic device 500 is in the video mode (or the video recording mode), hard synchronization between RGB data and event data in the hybrid image sensor may be implemented based on a hard synchronization process shown in FIG. 16.

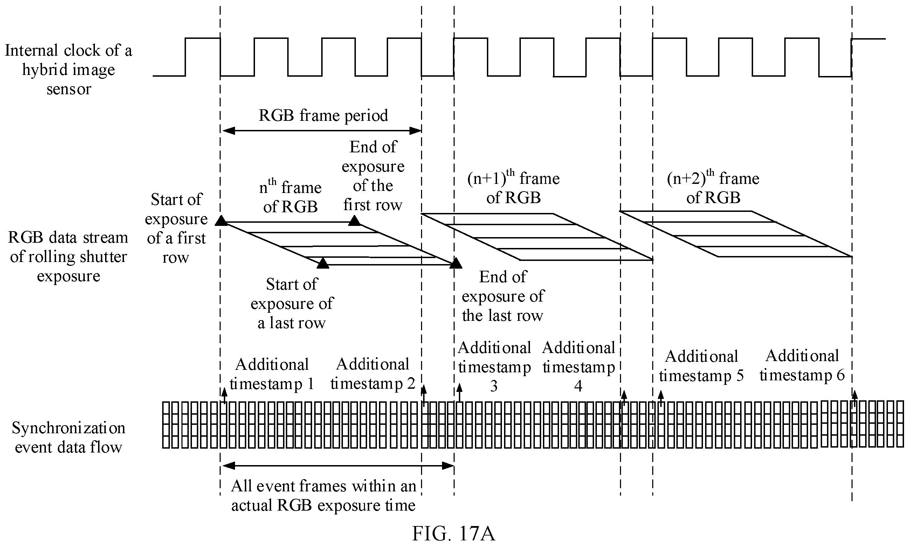

In photo mode, especially in a snapshot mode, the hybrid image sensor can also implement a special hard synchronization trigger mode. For example, FIG. 17A is another diagram of hard synchronization in a hybrid image sensor. Different from that in FIG. 16, in this case, two frame synchronization signals are delivered during rolling shutter exposure of each frame of RGB image. Specifically, an RGB frame synchronization signal is delivered at an exposure start time point of the first row of RGB pixels, and an RGB frame synchronization signal is also delivered at an exposure end time point of the last row of RGB pixels.

As shown in FIG. 17A, for an n^{th} frame of RGB image, the frame readout controller delivers an RGB frame synchronization signal at an exposure start time point of a first row of a first pixel of the n^{th} frame of RGB image, and also delivers an RGB frame synchronization signal at an exposure end time point of a last row of a last pixel of the n^{th} frame of RGB image. Likewise, two RGB frame synchronization signals are also delivered for an (n+1)^{th} frame of RGB image and an (n+2)^{th} frame of RGB image.

Similar to that in the foregoing cases, after the frame readout controller outputs the RGB frame synchronization signal, the RGB frame synchronization signal is transmitted to the pull-up circuit by using the hardware connection cable, and the pull-up circuit pulls up the RGB frame synchronization signal and outputs a hard synchronization signal. The hard synchronization signal is transmitted to the timestamping circuit by using a hardware connection, and the timestamping circuit prints an additional timestamp under triggering of the hard synchronization signal. In this case, because two RGB frame synchronization signals are delivered for each frame of RGB image, each frame of RGB image corresponds to two additional timestamps.

As shown in FIG. 17A, two RGB frame synchronization signals of the n^{th} frame of RGB image respectively correspond to an additional timestamp 1 and an additional timestamp 3. Two RGB frame synchronization signals of the (n+1)^{th} frame of RGB image respectively correspond to an additional timestamp 2 and an additional timestamp 5. Two RGB frame synchronization signals of the (n+2)^{th} frame of RGB image respectively correspond to an additional timestamp 4 and an additional timestamp 6.

The additional timestamp 1 to the additional timestamp 6 may be inserted into header data of the event frame, and transmitted to the SOC of the electronic device 500 through a synchronous event frame data stream. In addition, one RGB frame period also corresponds to two additional timestamps. For example, an RGB frame period from an exposure start time point of the n^{th} frame of RGB image to an exposure start time point of the (n+1)^{th} frame of RGB image corresponds to the additional timestamp 1 and the additional timestamp 2.

However, due to rolling shutter exposure, one RGB frame period is not a complete exposure time period of one frame of RGB image. In this case, the RGB frame period is a time period from an exposure start time point of a first row of pixels of a current frame to an exposure start time point of a first row of pixels of a next frame. For example, for the n^{th} frame of RGB image in FIG. 17A, the complete exposure time period is a time period between the additional timestamp 1 and the additional timestamp 3, but the RGB frame period is a timestamp between the additional timestamp 1 and the additional timestamp 2.

In the photo mode, if a back-end algorithm on the SOC needs to process a frame of RGB image, all event frames within a complete exposure time period of the frame of image are required, instead of all event frames within the RGB frame period.

For example, for the n^{th} frame of RGB image, the complete exposure time period is a time period between the additional timestamp 1 and the additional timestamp 3. Therefore, all event frames between the additional timestamp 1 and the additional timestamp 3 are required, instead of all event frames between the additional timestamp 1 and the additional timestamp 2.

In different application modes, a hard synchronization signal triggering mode changes accordingly. The hard synchronization signal triggering mode may also be controlled by the SOC. In this case, the SOC may deliver different hybrid image sensor setting to the hybrid image sensor based on different application modes, and then the hybrid image sensor performs corresponding switching after receiving the hybrid image sensor setting. For example, the electronic device 500 is in a video shooting mode at a moment. In this case, the hybrid image sensor may perform hard synchronization in the manner shown in FIG. 16, to output RGB data and event data, that is, deliver an RGB frame synchronization signal in each frame of RGB image. At a next moment, a user needs to switch from the video shooting mode to the photo mode. Specifically, switching may be performed by tapping a corresponding control. For example, refer to a scenario shown in FIG. 7A. The user may tap a "Photo" mode control in a photo interface 713, to switch from the video shooting mode to the shooting mode.

After detecting a switching instruction, the electronic device 500 generates corresponding hybrid image sensor setting, and delivers the hybrid image sensor setting to the hybrid image sensor. In response to the delivered hybrid image sensor setting, the hybrid image sensor performs hard synchronization triggering according to FIG. 17A, to output RGB data and event data.

Generally, the hybrid image sensor setting delivered by the n^{th} frame of RGB image takes effect at the (n+2)^{th} frame of RGB image.

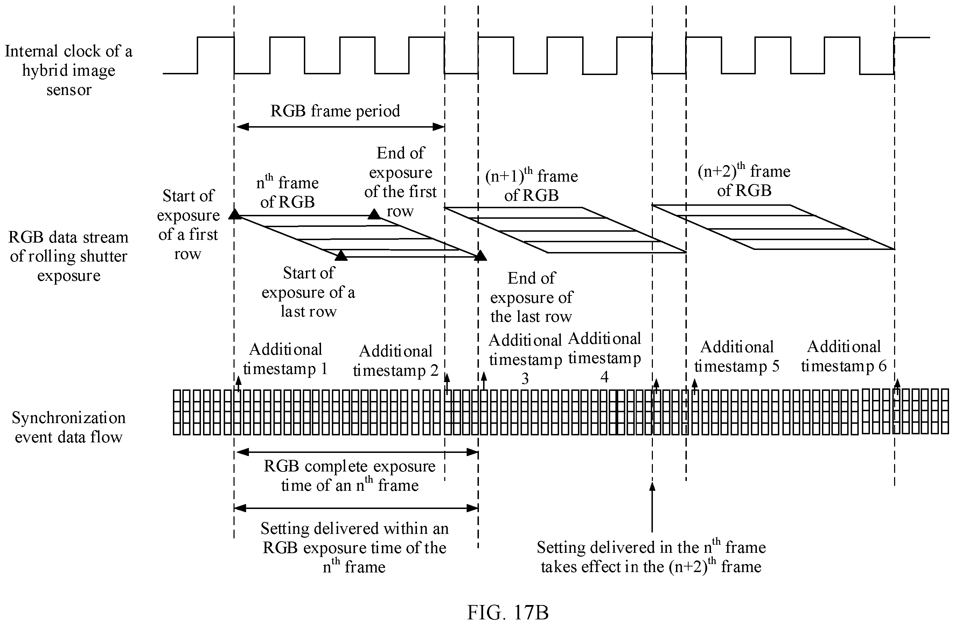

For example, refer to a diagram of time sequence switching shown in FIG. 17B. In this case, before the n^{th} frame of RGB image starts to be exposed, if the user switches from the video mode to the photo mode, the hard synchronization trigger mode also needs to be changed. Based on this, the SOC generates corresponding hybrid image sensor setting in the manner shown in FIG. 17A, and delivers the hybrid image sensor setting to the hybrid image sensor through the I2C.

After obtaining the hybrid image sensor setting, the hybrid image sensor delivers an instruction to an RGB pixel part and an event pixel part within an exposure time period of the n^{th} frame of RGB. A delivery time point may be within a complete exposure time period of the n^{th} frame of RGB, and is generally within an interval from an end of exposure of a first row to an end of exposure of a last row, or delivered after a fixed time interval after the first row of a first pixel starts to be exposed. In this case, because the first row of the (n+1)^{th} frame of RGB may have been exposed, the setting is not responded to in the frame period of the (n+1)^{th} frame of RGB, but the setting is switched in the frame period of the (n+2)^{th} frame of RGB, that is, at a time point of an arrow in the figure.

It should be noted that, in different application modes, the SOC may deliver different hybrid image sensor setting, to implement a hard synchronization triggering manner of the hybrid image sensor in the current application mode. As shown in FIG. 17A, when the video mode is switched to the photo mode, the SOC may deliver corresponding hybrid image sensor setting, to switch the hard synchronization triggering manner in FIG. 16 to that in FIG. 17A. Certainly, if the photo mode is switched to the video mode, the SOC may alternatively deliver corresponding hybrid image sensor setting, to switch the hard synchronization triggering manner in FIG. 17A to that in FIG. 16.

It should be noted that a frequency of an internal clock of the hybrid image sensor is very high, and signals such as a frame synchronization signal and a hard synchronization signal need to be aligned with a rising edge or a falling edge of a clock signal. Signal alignment in FIG. 12 to FIG. 17B is merely used as an example to describe hard synchronization triggering in different cases, and does not constitute a special limitation.

In other words, in the time sequence diagrams shown in FIG. 12 to FIG. 17B, a frequency of a clock signal is very high, and each signal may be triggered based on a rising edge or a falling edge of the clock signal. However, the rising edge and the falling edge of the clock signal corresponding to a dashed line in FIG. 12 to FIG. 17B do not represent actual edge directions. All signals may be triggered based on the rising edge or may be triggered based on the falling edge, or some signals may be triggered based on a rising edge and some signals may be triggered based on the falling edge.

In this embodiment of this application, in addition to implementing hard synchronization between the RGB data and the event data in a hard synchronization manner, the hybrid image sensor may perform time alignment between the first camera 530 and the second camera 550 in the hard synchronization manner, to further reduce a registration deviation.

In this case, the second image data and the event data in the hybrid image sensor have been hard-synchronized and aligned inside the sensor. Therefore, the first image data of the first camera 530 only needs to be hard-synchronized and aligned with the second image data of the hybrid image sensor.

In some embodiments of this application, an FOV difference between the first camera 530 and the hybrid image sensor is small, but a resolution difference is large. A resolution of the first image data of the first camera 530 is high, and a resolution of the second image data of the hybrid image sensor is low. In addition, clocks of the first camera 530 and the hybrid image sensor are also inconsistent.

Based on this, when the first camera 530 and the hybrid image sensor are started synchronously, it can be ensured that the frame rates are the same. In addition, based on an actual resolution, a lens FOV, an internal clock difference, a readout time of each row of the first camera 530 and the hybrid image sensor, a binocular calibration deviation, and the like, a difference between an exposure time period of each row of pixels in a same region of interest (region of interest, ROI) photographed by the first camera 530 and an exposure time period of each row of pixels in the same region of interest photographed by the hybrid image sensor is controlled to be less than X milliseconds (ms), and a maximum error of Y milliseconds (ms) is allowed. X is, for example, 3 ms, and Y is, for example, 6 ms.

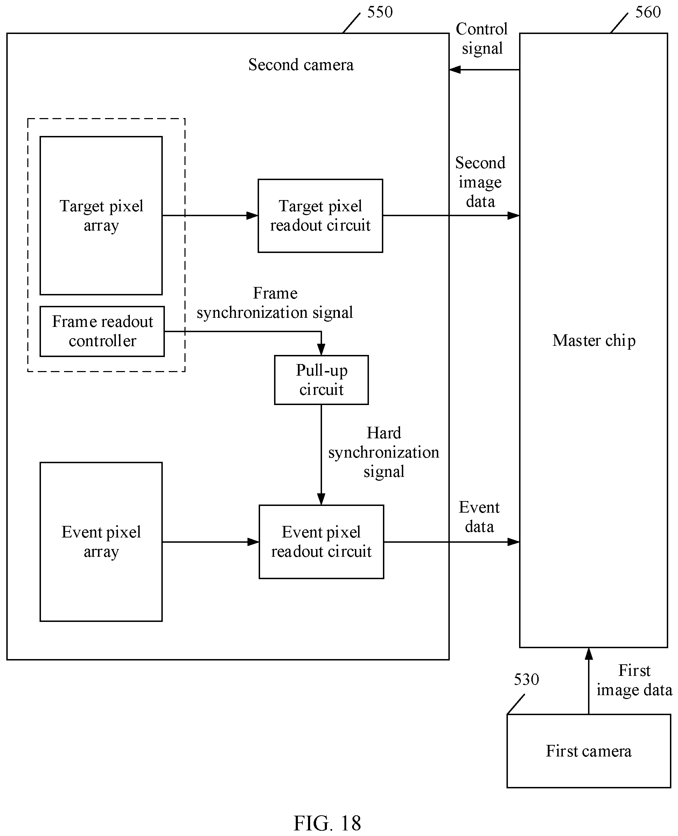

Refer to another block diagram of an electronic device 500 shown in FIG. 18. The electronic device 500 may include a first camera 530, a second camera 550, and a master chip 560. The second camera 550 includes a hybrid image sensor, and the hybrid image sensor includes a target pixel part and an event pixel part.

The first camera 530 is configured to output first image data. The second camera 550 is configured to output second image data through the target pixel part, and output event data through the event pixel part.

The master chip 560 is configured to: obtain the first image data, the second image data, and the event data; and send an image for display and/or store an image based on at least one of the first image data, the second image data, and the event data.

It may be understood that the master chip 560 may be specifically the SOC of the electronic device 500, and may integrate one or more processors 510, a memory, and the like. For example, the master chip 560 may integrate processors such as a CPU, an ISP, and a DSP.

The first camera 530 may be, for example, an RGB camera, and the target pixel part may be, for example, an RGB pixel part. In this case, both the first image data and the second image data are RGB image data.

In this embodiment of this application, the master chip 560 may enable at least one of the first camera 530 and the second camera 550 based on a requirement.

The master chip 560 may send an image for display and/or store an image based on only the first image data or the second image data. For example, the master chip 560 may directly send the image data for display after performing operations such as image stabilization and image cropping on the first image data or the second image data based on a focal length selected by the user, an EIS algorithm result, and the like. Alternatively, the master chip 560 may send the image data to an application algorithm, and the application algorithm processes the image data, and sends the processed image data for display and storage.

The master chip 560 may send an image for display and/or store an image only based on the event data. For example, the master chip 560 performs frame compression on the event data to obtain a stylized video or a stylized picture, and sends the stylized video or the stylized picture for display and storage.

The master chip 560 may send an image for display and/or store an image based on the second image data and the event data. For example, the master chip 560 superimposes the event data on the second image data to obtain a stylized video or a stylized picture, and sends the stylized video or the stylized picture for display and storage.

The master chip 560 may send an image for display and/or store an image based on the first image data, the second image data, and the event data. For example, the master chip 560 first performs a two-segment "bridge" registration process based on the first image data, the second image data, and the event data, to obtain registered first image data and registered event data, and then performs image cropping based on the registered first image data and the registered event data, to obtain a to-be-displayed image or send cropped image to an application algorithm for processing.

In a possible implementation, if the first camera 530 is a rear-facing primary camera, and the second camera 550 is a wide-angle camera, if the electronic device works in a primary focal length, a corresponding operation of adapting to the wide-angle camera needs to be additionally performed.

For example, similar to the process in FIG. 9B, an algorithm and an operation that adapt to the wide-angle camera are correspondingly added to the ISP and the ESP of the master chip 560. In this case, the master chip 560 first performs field of view-based cropping on a field of view of the second image data based on the field of view of the first image data, to obtain cropped second image data. Generally, an FOV of the wide-angle camera is greater than an FOV of the primary camera, and a redundant picture in the second image data may be cropped through FOV cropping. An FOV of the cropped second image data is the same as or slightly different from the FOV of the first image data. Then, the event data is processed by using a preset wide-angle image processing algorithm, to obtain first processed event data. The preset wide-angle image processing algorithm may include wide-angle distortion correction, LSC, TSC, and the like. Then, field of view-based cropping is performed on the first processed event data based on the field of view of the first image data, to obtain cropped event data, where an FOV of the cropped event data is slightly different from or the same as the FOV of the first image data. Binocular registration is performed on the cropped second image data and the first image data, to obtain a registration matrix. Registration is performed on the cropped event data and the first image data based on the registration matrix, to obtain registered first image data and registered event data.

In a possible implementation, if the first camera 530 is a rear-facing primary camera, and the second camera 550 is a wide-angle camera, if the electronic device works in the wide-angle focal length, similar to the process in FIG. 9C, an algorithm and an operation that adapt to the wide-angle camera are added to the ISP and the ESP of the master chip 560. Specifically, wide-angle distortion correction is first performed on the second image data, to obtain corrected second image data; and then the event data is processed by using a preset wide-angle image processing algorithm, to obtain second processed event data. Finally, an image is sent for display and/or an image is stored based on the second processed event data and the corrected second image data.

In a possible implementation, the first camera is a front-facing primary camera, and the second camera is a front-facing secondary primary camera. If the electronic device works in a wide-angle focal length, the master chip 560 is specifically configured to perform wide-angle distortion correction on the first image data, to obtain processed first image data. The processed first image data is image data on which additional wide-angle distortion correction has been performed. Wide-angle distortion correction is performed on the second image data, to obtain processed second image data. The event data is processed by using a preset wide-angle image processing algorithm, to obtain third processed event data. Binocular registration is performed on the processed second image data and the processed first image data, to obtain a registration matrix. Registration is performed on the third processed event data and the processed first image data based on the registration matrix, to obtain registered first image data and registered event data.

The first processed event data, the second processed event data, and the third processed event data are event data obtained by using the preset wide-angle image processing algorithm.

In a possible implementation, the master chip 560 is specifically configured to: generate a first stylized video or a first stylized picture based on the registered first image data and the registered event data, and send the first stylized video or the first stylized picture for display; or generate a second stylized video or a second stylized picture based on the second image data and the event data, and send the second stylized video or the second stylized picture for display; or generate a third styled video or a third styled picture based on the event data, and send the third styled video or the third styled picture for display.

It may be understood that the first, the second, and the third in the first stylized video or the first stylized picture, the second stylized video or the second stylized picture, and the third stylized video or the third stylized picture are merely used to distinguish between stylized videos or stylized pictures in different cases. For a process of generating the stylized video or the stylized picture in various cases, refer to the foregoing descriptions. Details are not described herein again.

In a possible implementation, the master chip 560 may further deliver a control signal to the second camera 550, to control a hard synchronization triggering manner inside the hybrid image sensor. When the application mode is switched, a switching control signal may also be delivered to the second camera 550, to switch the hard synchronization triggering manner inside the hybrid image sensor. For a specific process, refer to the foregoing descriptions. Details are not described herein again. Certainly, the hard synchronization triggering manner inside the hybrid image sensor may alternatively be fixedly set in advance, and the master chip 560 cannot change the hard synchronization triggering manner inside the hybrid image sensor by using a control signal.

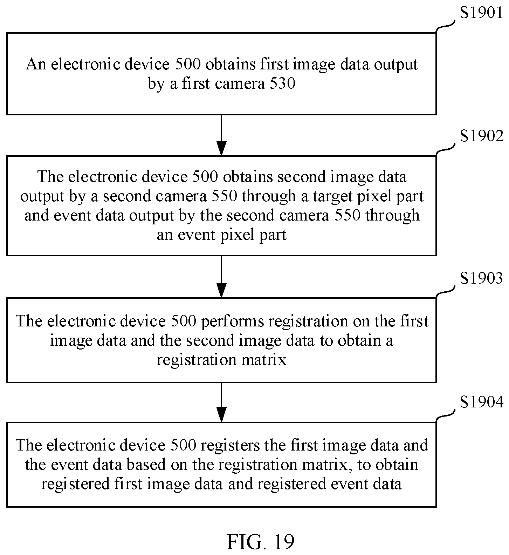

FIG. 19 is a block diagram of an image processing method. The method may be applied to an electronic device 500, and the method includes the following steps.

Step S1901: The electronic device 500 obtains first image data output by a first camera 530.

Step S1902: The electronic device 500 obtains second image data output by a second camera 550 through a target pixel part and event data output by the second camera 550 through an event pixel part.

Step S1903: The electronic device 500 performs registration on the first image data and the second image data to obtain a registration matrix.

Step S1904: The electronic device 500 registers the first image data and the event data based on the registration matrix, to obtain registered first image data and registered event data.

It may be understood that a preset parameter needs to be used in a registration process in step S1903 and step S1904. For the preset parameter, refer to the foregoing description. Details are not described herein again. In addition, due to different roles played by the first camera 530 and the second camera 550, a two-segment "bridge" registration process may also be correspondingly different. For example, when a wide-angle lens is involved, an additional operation of adapting to the wide-angle lens needs to be performed. The operation may include wide-angle distortion correction, FOV cropping, TSC, LSC, and the like. For a specific process, refer to the foregoing descriptions. Details are not described herein again.

The electronic device provided in this embodiment of this application may include a memory, a processor, and a computer program that is stored in the memory and that can be run on the processor. When executing the computer program, the processor implements the method according to any one of the foregoing method embodiments.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on an electronic device, the electronic device is enabled to implement the steps in the foregoing method embodiments when executing the computer program product.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, the descriptions of each embodiment have respective focuses. For a part that is not described in detail in an embodiment, refer to related descriptions in other embodiments. It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application. In addition, in descriptions of this specification and claims of this application, terms "first", "second", "third", and the like are merely intended for differentiated description, but shall not be understood as an indication or an implication of relative importance. Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device, comprising a master chip, a first camera, and a second camera, wherein the second camera comprises a hybrid image sensor, and the hybrid image sensor comprises a target pixel part and an event pixel part;
the first camera is configured to output first image data;
the second camera is configured to output second image data through the target pixel part, and output event data through the event pixel part; and
the master chip is configured to: obtain the first image data, the second image data, and the event data; and send an image for display and/or store an image based on at least one of the first image data, the second image data, and the event data.

2. The electronic device according to claim 1, wherein the first camera is a front-facing primary camera of the electronic device, and the second camera is a front-facing secondary primary camera of the electronic device; or
the first camera is a rear-facing primary camera of the electronic device, and the second camera is a rear-facing secondary primary camera, a wide-angle camera, or a long-focus camera of the electronic device.

3. The electronic device according to claim 1 or 2, wherein the master chip is specifically configured to:
perform binocular registration on the first image data and the second image data to obtain a registration matrix;
perform registration on the first image data and the event data based on the registration matrix, to obtain registered first image data and registered event data; and
send an image for display and/or store an image based on the registered first image data and the registered event data.

4. The electronic device according to claim 3, wherein the first camera is the rear-facing primary camera, and the second camera is the wide-angle camera; and
if the electronic device works in a primary focal length, the master chip is specifically configured to:
perform field of view-based cropping on the second image data based on a field of view of the first image data, to obtain cropped second image data;
process the event data by using a preset wide-angle image processing algorithm, to obtain first processed event data;
perform field of view-based cropping on the first processed event data based on the field of view of the first image data, to obtain cropped event data;
perform binocular registration on the cropped second image data and the first image data, to obtain the registration matrix; and
perform registration on the cropped event data and the first image data based on the registration matrix, to obtain the registered first image data and the registered event data.

5. The electronic device according to claim 4, wherein if the electronic device works in a wide-angle focal length, the master chip is further configured to:
perform wide-angle distortion correction on the second image data, to obtain corrected second image data;
process the event data by using the preset wide-angle image processing algorithm, to obtain second processed event data; and
send an image for display and/or store an image based on the second processed event data and the corrected second image data.

6. The electronic device according to claim 3, wherein the first camera is the front-facing primary camera, and the second camera is the front-facing secondary primary camera; and
if the electronic device works in a wide-angle focal length, the master chip is specifically configured to:
perform wide-angle distortion correction on the first image data, to obtain processed first image data;
perform wide-angle distortion correction on the second image data, to obtain processed second image data;
process the event data by using a preset wide-angle image processing algorithm, to obtain third processed event data;
perform binocular registration on the processed second image data and the processed first image data, to obtain the registration matrix; and
perform registration on the third processed event data and the processed first image data based on the registration matrix, to obtain the registered first image data and the registered event data.

7. The electronic device according to claim 3, wherein the master chip is specifically configured to:
generate a first stylized video or a first stylized picture based on the registered first image data and the registered event data, and send the first stylized video or the first stylized picture for display.

8. The electronic device according to claim 1, wherein the master chip is specifically configured to:
generate a second stylized video or a second stylized picture based on the second image data and the event data, and send the second stylized video or the second stylized picture for display; or
generate a third stylized video or a third stylized picture based on the event data, and send the third stylized video or the third stylized picture for display.

9. The electronic device according to any one of claims 1 to 8, wherein the target pixel part comprises a target pixel array and a target pixel readout circuit, and the event pixel part comprises an event pixel array and an event pixel readout circuit;
the target pixel readout circuit is configured to perform an exposure operation and a readout operation on the target pixel array to obtain the second image data; and
the event pixel readout circuit is configured to perform a readout operation on the event pixel array to obtain the event data.

10. The electronic device according to claim 9, wherein the hybrid image sensor further comprises a pull-up circuit, the target pixel readout circuit comprises a frame readout controller, and the event pixel readout circuit comprises a timestamping circuit;
the frame readout controller is connected to the pull-up circuit by using a hardware connection cable, and the pull-up circuit is connected to the timestamping circuit by using the hardware connection cable;
the frame readout controller is configured to output a frame synchronization signal;
the pull-up circuit is configured to receive the frame synchronization signal, and output a hard synchronization signal after performing voltage pull-up on the frame synchronization signal; and
the timestamping circuit is further configured to: receive the hard synchronization signal, print an additional timestamp under triggering of the hard synchronization signal, and output the additional timestamp.

11. The electronic device according to claim 10, wherein the event pixel readout circuit is further configured to embed the additional timestamp in a time sequence in an asynchronous event data stream, or embed the additional timestamp in a synchronous event frame data stream; and
the event data is the asynchronous event data stream or the synchronous event frame data stream.

12. The electronic device according to claim 11, wherein the master chip is specifically configured to: receive the asynchronous event data stream or the synchronous event frame data stream; and perform time alignment between the event data and the second image data based on the additional timestamp in the asynchronous event data stream or the synchronous event frame data stream.

13. The electronic device according to claim 10, wherein if an exposure manner of the target pixel array is global shutter exposure, and a readout manner of the event pixel array is asynchronous readout, the frame readout controller is specifically configured to: for each frame of second image data, separately output one frame synchronization signal at an exposure start time point and an exposure end time point; or
if an exposure manner of the target pixel array is rolling shutter exposure, and a readout manner of the event pixel array is asynchronous readout, the frame readout controller is specifically configured to: for each frame of second image data, output one frame synchronization signal at an exposure end time point of a first row of target pixels.

14. The electronic device according to claim 10, wherein an exposure manner of the target pixel array is global shutter exposure, and a readout manner of the event pixel array is synchronous readout; and
the frame readout controller is specifically configured to: for each frame of second image data, separately output one frame synchronization signal at an exposure start time point and an exposure end time point.

15. The electronic device according to claim 10, wherein an exposure manner of the target pixel array is global shutter exposure, and a readout manner of the event pixel array is synchronous readout;
the frame readout controller is specifically configured to: for each frame period, separately output one frame synchronization signal at an exposure start time point and an exposure end time point, or output one frame synchronization signal at an exposure start time point, wherein the frame period is a time period from an exposure start time point of a current frame to an exposure start time point of a next frame; and
the event pixel readout circuit is further configured to: resynchronize a first event frame in the frame period with the hard synchronization signal corresponding to the exposure start time point, and embed the additional timestamp corresponding to the exposure start time point into the first event frame in the frame period.

16. The electronic device according to claim 10, wherein an exposure manner of the target pixel array is rolling shutter exposure, and a readout manner of the event pixel array is synchronous readout; and
the frame readout controller is specifically configured to: for each frame of second image data, output one frame synchronization signal at a preset moment, wherein the preset moment is an exposure end time point of a first row of target pixels or a start readout time point of a first row of target pixels.

17. The electronic device according to claim 10, wherein an exposure manner of the target pixel array is rolling shutter exposure, and a readout manner of the event pixel array is synchronous readout;
the frame readout controller is specifically configured to: for each frame period, output one frame synchronization signal at an exposure end time point of a first row of target pixels, wherein the frame period is a time period from an exposure end time point of a first row of target pixels of a current frame to an exposure end time point of a first row of target pixels of a next frame; and
the event pixel readout circuit is further configured to: resynchronize a first event frame in the frame period with the hard synchronization signal corresponding to the exposure end time point of the first row of target pixels, and embed the additional timestamp corresponding to the exposure end time point of the first row of target pixels into a timestamp of the first event frame in the frame period.

18. The electronic device according to claim 15 or 17, wherein if at least two frames of second image data exist in one frame period, the frame readout controller is specifically configured to: for each frame of second image data, separately output one frame synchronization signal at an exposure start time point and an exposure end time point, or separately output one frame synchronization signal at an exposure end time point of a first row of target pixels.

19. The electronic device according to any one of claims 9 to 18, wherein the master chip is further configured to: deliver a control signal to the hybrid image sensor, wherein the control signal comprises a first readout parameter and a second readout parameter, the first readout parameter comprises an exposure manner and an exposure time period, and the second readout parameter comprises an event readout manner; and
the hybrid image sensor is further configured to: receive the control signal, and parse the control signal to obtain the first readout parameter and the second readout parameter; based on the first readout parameter, control the target pixel readout circuit to perform an exposure operation and a readout operation to obtain the second image data, and control the frame readout controller to output the frame synchronization signal; and based on the second readout parameter, control the event pixel readout circuit to perform a readout operation to obtain the event data and the additional timestamp.

20. The electronic device according to claim 19, wherein the master chip is further configured to: calculate a to-be-delivered sensor setting parameter based on the second image data and the event data, and generate the control signal based on the to-be-delivered sensor setting parameter.

21. The electronic device according to claim 20, wherein the exposure manner of the target pixel array is rolling shutter exposure, and the readout manner of the event pixel array is synchronous readout;
the master chip is further configured to: if a switching operation is detected, generate a switching control signal in response to the switching operation, and deliver the switching control signal to the hybrid image sensor, wherein the switching operation indicates to switch from a video mode to a photo mode, and the switching control signal comprises a sensor setting parameter in the photo mode; and
the hybrid image sensor is further configured to: receive the switching control signal, and parse the switching control signal to obtain the sensor setting parameter in the photo mode; and based on the sensor setting parameter, control the frame readout controller to output one frame synchronization signal at the exposure start time point of the first row of target pixels of each frame of second image data and output one frame synchronization signal at an exposure end time point of a last row of target pixels of each frame of second image data, so as to control the timestamping circuit to: in response to the hard synchronization signal, print one additional timestamp at the exposure start time point of the first row of target pixels, print one additional timestamp at the exposure end time point of the last row of target pixels, and embed the additional timestamp into a next event frame.

22. The electronic device according to claim 21, wherein the switching control signal is delivered within an exposure time period of an n^{th} frame of second image data, and takes effect within an exposure time period of an (n+2)^{th} frame of second image data.

23. A hybrid image sensor, comprising a target pixel array, a target pixel readout circuit, an event pixel array, an event pixel readout circuit, and a pull-up circuit, wherein
the target pixel readout circuit comprises a frame readout controller, and the event pixel readout circuit comprises a timestamping circuit;
the frame readout controller is connected to the pull-up circuit by using a hardware connection cable, and the pull-up circuit is connected to the timestamping circuit by using the hardware connection cable;
the target pixel readout circuit is configured to perform an exposure operation and a readout operation on the target pixel array, to output second image data;
the event pixel readout circuit is configured to perform a readout operation on the event pixel array, to output event data;
the frame readout controller is configured to output a frame synchronization signal;
the pull-up circuit is configured to receive the frame synchronization signal, and output a hard synchronization signal after performing voltage pull-up on the frame synchronization signal; and
the timestamping circuit is further configured to: receive the hard synchronization signal, print an additional timestamp under triggering of the hard synchronization signal, and output the additional timestamp.

24. The hybrid image sensor according to claim 23, wherein the event pixel readout circuit is further configured to embed the additional timestamp in a time sequence in an asynchronous event data stream, or embed the additional timestamp in a synchronous event frame data stream; and
the event data is the asynchronous event data stream or the synchronous event frame data stream.

25. The hybrid image sensor according to claim 23, wherein if an exposure manner of the target pixel array is global shutter exposure, and a readout manner of the event pixel array is asynchronous readout, the frame readout controller is specifically configured to: for each frame of second image data, separately output one frame synchronization signal at an exposure start time point and an exposure end time point; or
if an exposure manner of the target pixel array is rolling shutter exposure, and a readout manner of the event pixel array is asynchronous readout, the frame readout controller is specifically configured to: for each frame of second image data, output one frame synchronization signal at an exposure end time point of a first row of target pixels.

26. The hybrid image sensor according to claim 23, wherein an exposure manner of the target pixel array is global shutter exposure, and a readout manner of the event pixel array is synchronous readout; and
the frame readout controller is specifically configured to: for each frame of second image data, separately output one frame synchronization signal at an exposure start time point and an exposure end time point.

27. The hybrid image sensor according to claim 23, wherein an exposure manner of the target pixel array is global shutter exposure, and a readout manner of the event pixel array is synchronous readout;
the frame readout controller is specifically configured to: for each frame period, separately output one frame synchronization signal at an exposure start time point and an exposure end time point, or output one frame synchronization signal at an exposure start time point, wherein the frame period is a time period from an exposure start time point of a current frame to an exposure start time point of a next frame; and
the event pixel readout circuit is further configured to: resynchronize a first event frame in the frame period with the hard synchronization signal corresponding to the exposure start time point, and embed the additional timestamp corresponding to the exposure start time point into the first event frame in the frame period.

28. The hybrid image sensor according to claim 23, wherein an exposure manner of the target pixel array is rolling shutter exposure, and a readout manner of the event pixel array is synchronous readout; and
the frame readout controller is specifically configured to: for each frame of second image data, output one frame synchronization signal at an exposure end time point of a first row of target pixels.

29. The hybrid image sensor according to claim 23, wherein an exposure manner of the target pixel array is rolling shutter exposure, and a readout manner of the event pixel array is synchronous readout;
the frame readout controller is specifically configured to: for each frame period, output one frame synchronization signal at an exposure end time point of a first row of target pixels, wherein the frame period is a time period from an exposure end time point of a first row of target pixels of a current frame to an exposure end time point of a first row of target pixels of a next frame; and
the event pixel readout circuit is further configured to: resynchronize a first event frame in the frame period with the hard synchronization signal corresponding to the exposure end time point of the first row of target pixels, and embed the additional timestamp corresponding to the exposure end time point of the first row of target pixels into a timestamp of the first event frame in the frame period.

30. The hybrid image sensor according to claim 27 or 29, wherein if at least two frames of second image data exist in one frame period, the frame readout controller is specifically configured to: for each frame of second image data, output one frame synchronization signal at an exposure start time point and an exposure end time point, or output one frame synchronization signal at an exposure end time point of a first row of target pixels.

31. The hybrid image sensor according to any one of claims 23 to 30, wherein the hybrid image sensor is specifically configured to: receive a control signal from a master chip, and parse the control signal to obtain a first readout parameter and a second readout parameter; based on the first readout parameter, control the target pixel readout circuit to perform the exposure operation and the readout operation to obtain the second image data, and control the frame readout controller to output the frame synchronization signal; and based on the second readout parameter, control the event pixel readout circuit to perform a readout operation to obtain the event data and the additional timestamp, wherein
the first readout parameter comprises an exposure manner and an exposure time period, and the second readout parameter comprises an event readout manner.

32. The hybrid image sensor according to claim 23, wherein an exposure manner of the target pixel array is rolling shutter exposure, and a readout manner of the event pixel array is synchronous readout; and the hybrid image sensor is further configured to:
receive a switching control signal from a master chip, wherein the switching control signal is a signal generated after the master chip detects a switching operation, the switching operation indicates to switch from a video mode to a photo mode, and the switching control signal comprises a sensor setting parameter in the photo mode;
parse the switching control signal to obtain the sensor setting parameter in the photo mode; and
control, based on the sensor setting parameter, the frame readout controller to: output one frame synchronization signal at an exposure start time point of a first row of target pixels of each frame of second image data, and output one frame synchronization signal at an exposure end time point of a last row of target pixels, so as to control the timestamping circuit to: print, in response to the hard synchronization signal, one additional timestamp at the exposure start time point of the first row of target pixels, print one additional timestamp at the exposure end time point of the last row of target pixels, and embed the additional timestamp into a next event frame.

33. The hybrid image sensor according to claim 32, wherein the switching control signal is delivered within an exposure time period of an n^{th} frame of second image data, and takes effect within an exposure time period of an (n+2)^{th} frame of second image data.

34. An image processing method, applied to an electronic device, wherein the electronic device comprises a first camera and a second camera, the second camera comprises a hybrid image sensor, and the hybrid image sensor comprises a target pixel part and an event pixel part; and
the method comprises:
obtaining first image data output by the first camera;
obtaining second image data output by the second camera through the target pixel part and event data output by the second camera through the event pixel part;
performing registration on the first image data and the second image data to obtain a registration matrix; and
performing registration on the first image data and the event data based on the registration matrix, to obtain registered first image data and registered event data.

35. The method according to claim 34, wherein the first camera is a front-facing primary camera of the electronic device, and the second camera is a front-facing secondary primary camera of the electronic device; or
the first camera is a rear-facing primary camera of the electronic device, and the second camera is a rear-facing secondary primary camera, a wide-angle camera, or a long-focus camera of the electronic device.

36. The method according to claim 35, wherein the first camera is the rear-facing primary camera, and the second camera is the wide-angle camera; and
if the electronic device works in a primary focal length, the performing registration on the first image data and the second image data to obtain a registration matrix, and the performing registration on the first image data and the event data based on the registration matrix, to obtain registered first image data and registered event data comprise:
performing field of view-based cropping on the second image data based on a field of view of the first image data, to obtain cropped second image data;
processing the event data by using a preset wide-angle image processing algorithm, to obtain first processed event data;
performing field of view-based cropping on the first processed event data based on the field of view of the first image data, to obtain cropped event data;
performing binocular registration on the cropped second image data and the first image data, to obtain the registration matrix; and
performing registration on the cropped event data and the first image data based on the registration matrix, to obtain the registered first image data and the registered event data.

37. The method according to claim 35, wherein the first camera is the front-facing primary camera, and the second camera is the front-facing secondary primary camera; and
if the electronic device works in a wide-angle focal length, the performing registration on the first image data and the second image data to obtain a registration matrix, and the performing registration on the first image data and the event data based on the registration matrix, to obtain registered first image data and registered event data comprise:
performing wide-angle distortion correction on the first image data, to obtain processed first image data;
performing wide-angle distortion correction on the second image data, to obtain processed second image data;
processing the event data by using a preset wide-angle image processing algorithm, to obtain third processed event data;
performing binocular registration on the processed second image data and the processed first image data, to obtain the registration matrix; and
performing registration on the third processed event data and the processed first image data based on the registration matrix, to obtain the registered first image data and the registered event data.

38. The method according to claim 34, wherein the method further comprises:
displaying a first stylized video or a first stylized picture based on the registered first image data and the registered event data.

39. An electronic device, comprising a memory, a processor, and a computer program that is stored in the memory and that can be run on the processor, wherein when executing the computer program, the processor implements the method according to any one of claims 34 to 38.

40. A computer-readable storage medium, wherein the computer-readable storage medium stores a computer program, and when the computer program is executed by a processor, the method according to any one of claims 34 to 38 is implemented.
